(19) Europäisches Patentamt
European Patent Office
Office européen des brevets

(11) **EP 1 881 422 A1**

(12) **EUROPEAN PATENT APPLICATION**
published in accordance with Art. 153(4) EPC

(43) Date of publication:
**23.01.2008 Bulletin 2008/04**

(51) Int Cl.:
***G06F 17/30*** *(2006.01)*

(21) Application number: **06732158.8**

(22) Date of filing: **20.04.2006**

(86) International application number:
**PCT/JP2006/308350**

(87) International publication number:
**WO 2006/112507 (26.10.2006 Gazette 2006/43)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **20.04.2005 JP 2005122421**

(71) Applicant: **Intellectual Property Bank Corp.**
**Tokyo 105-0001 (JP)**

(72) Inventors:
• **MASUYAMA, Hiroaki**
**Toyonaka-shi Osaka 560-0054 (JP)**
• **SATO, Haru-tada**
**Intellectual Property Bank Corp**
**Tokyo 105-0001 (JP)**
• **ITO, Taichi**
**Intellectual Property Bank Corp.**
**Tokyo 105-0001 (JP)**

(74) Representative: **Style, Kelda Camilla Karen**
**Page White & Farrer**
**Bedford House**
**John Street**
**London, WC1N 2BF (GB)**

(54) **DEVICE FOR EXTRACTING INDEX WORK IN DOCUMENT TO BE EXAMINED AND DOCUMENT FEATURE ANALYZER**

(57)    A device comprises first frequency calculating means (142) for calculating a function value IDF(P) of the frequency of an index word in a document (d) to be examined in a group of documents (P) to be compared, second frequency calculating means (171) for calculating a function value IDF(S) of the frequency of the index word in a group of similar documents (S) similar to the document (d), coordinate transforming means (181) for transforming the position of each index word by conformal mapping on a coordinate system where the calculated function value IDF (P) goes on a first axis of the coordinate system and the calculated function value IDF (S) goes on a second axis, and output means (4) for outputting the index words and their positioning data according to the transformed coordinate data of the index words. With this, the character of the document is accurately expressed, or the tendency of the whole of the documents group to be examined can be analyzed. Consequently, the index word can be so output as to be grasped at a glance while holding the point-to-point relationships.

FIG. 2

EP 1 881 422 A1

Printed by Jouve, 75001 PARIS (FR)

**Description**

TECHNICAL FIELD

The present invention relates to the extraction of index terms in a document-to-be-surveyed, and in particular to an automatic extraction device, extraction program and extraction method of the index terms, which enable to properly analyze the character of the document-to-be-surveyed or the positioning of the document-to-be-surveyed in a document group.

Further, the present invention also relates to a document characteristic analysis device, and in particular to a document characteristic analysis device, analysis program and analysis method which enable to analyze the general positioning of a document-to-be-surveyed included in a document-group-to-be-surveyed with respect to other document group and the character of the overall document-group-to-be-surveyed.

BACKGROUND ART

The amount of technical documents such as patent documents and other documents is steadily increasing year after year. In recent years, ever since document data has been distributed electronically, a system for automatically retrieving documents similar to the document to be surveyed among the vast amounts of documents has been put into practical application. For example, Japanese Patent Laid-Open Publication H11-73415 "Device and Method for Retrieving Similar Document" (Patent Document 1) compares the index terms contained in the document to be surveyed with the index terms contained in the other documents, calculates the similarity based on the type and number of appearances of the similar index terms, and outputs documents in order from those having the highest similarity.

Nevertheless, by simply having similar documents retrieved, it is not possible to know the character of the document to be surveyed or its positioning in the documents. In order to know the character of the document to be surveyed or its positioning in the documents, it is necessary to read the retrieved similar documents and then evaluate the document-to-be-surveyed in light of the read similar documents.

Meanwhile, as a method to automatically extract the document characteristic itself, for instance, there is Japanese Patent Laid-Open Publication No. H11-345239 "Method and Device for Extracting Document Information and Storage Medium Stored with Document Information Extraction Program" (Patent Document 2). In this publication, an "object document set" is extracted by retrieval from a "standard document set", and characteristic information of each "individual document" composing this "object document set" is extracted.

Specifically, the "overall characteristic of the object document set" which characterizes the "object document set" against the "standard document set" is calculated, and the "individual document characteristic" which characterizes each "individual document" in the "object document set" against other individual documents is calculated. The characteristic information of each "individual document" is output based on such "overall characteristic of the object document set" and "individual document characteristic". This technology is advantageous in that it makes it easy for a user to find useful information and sort it out from vast amounts of information.

[Patent Document 1] Japanese Patent Laid-Open Publication H11-73415 "Device and Method for Retrieving Similar Document"

[Patent Document 2] Japanese Patent Laid-Open Publication No. H11-345239 "Method and Device for Extracting Document Information, and Storage Medium Stored with Document Information Extraction Program"

DISCLOSURE OF THE INVENTION

Nevertheless, with the technology described in Japanese Patent Laid-Open Publication No. H11-345239 (Patent Document 2), information that characterizes the "object document set" and information that characterizes each "individual document" are output by calculating the product of the "overall characteristic of the object document set" and the "individual document characteristic". Therefore, with the technology described in this publication, characteristic information is merely captured in one dimensional quantity, and it is not possible to analyze the character of the document-to-be-surveyed multilaterally.

(I) Thus, the applicant proposed in International Patent Application No. PCT/JP2004/015082, which was unpublished as of the priority date of this application,

an index term extraction device, comprising:

input means for inputting a document-to-be-surveyed, documents-to-be-compared that are compared with said document-to-be-surveyed, and similar documents that are similar to said document-to-be-surveyed;

index term extraction means for extracting index terms from said document-to-be-surveyed;

first appearance frequency calculation means for calculating a function value of an appearance frequency of each of said extracted index terms in said documents-to-be-compared;

second appearance frequency calculation means for calculating a function value of an appearance frequency of each of said extracted index terms in said similar documents; and

output means for outputting a first group of index terms with low frequency in both the documents-to-be-compared and the similar-documents, a second group of index terms with higher frequency in the documents-to-be-compared than the index terms in the first group, and a third group of index terms with higher frequency in the similar documents than the index terms in the first group, based on the calculation result generated with each calculation means.

According to this, it is possible to multilaterally analyze the character of the document-to-be-surveyed.

The applicant further proposed that, in the above-noted index term extraction device, output means arranges and outputs each index term by taking the function value of the appearance frequency in said documents-to-be-compared as a first axis of a coordinate system and taking the function value of the appearance frequency in said similar documents as a second axis of said coordinate system.

According to this, positioning of each index term can be visually comprehended from the position of the index terms arranged on the coordinate system.

The applicant further proposed that, in the above-noted index term extraction device,

each of said similar documents is included in said documents-to-be-compared,

said output means arranges and outputs each index term by further transforming the function value of the appearance frequency in said documents-to-be-compared and taking the same as a first axis of a coordinate system and taking the function value of the appearance frequency in said similar documents as a second axis of said coordinate system, and said transformation is conducted such that a boundary line of an existable area of said index terms on said coordinate system, based on said similar documents being a subset of said documents-to-be-compared, approaches vertical to said first axis.

According to this, since the existable area when disposing the respective index terms on the coordinates will approach a rectangular shape, it is even easier to visually comprehend in which area each index term is located.

However, if function values of appearance frequencies in the documents-to-be-surveyed are simply transformed, the coordinate placement prior to transformation is lost. In particular, transformation does not preserve positional (local) relationships between index terms in a prescribed region, so that there is a concern that grasping the relation between index terms in the prescribed region may be difficult.

(II) On the other hand, the applicant proposed in the above-mentioned International Patent Application No. PCT/JP2004/015082,

a document characteristic analysis device, comprising:

input means for inputting a document-group-to-be-surveyed including a plurality of documents-to-be-surveyed, documents-to-be-compared to be compared with each document-to-be-surveyed, and related documents having a common attribute with said document-group-to-be-surveyed;

index term extraction means for extracting index terms in each document-to-be-surveyed;

third appearance frequency calculation means for calculating a function value of an appearance frequency of each of said extracted index terms in said documents-to-be-compared;

fourth appearance frequency calculation means for calculating a function value of an appearance frequency of each of said extracted index terms in said related documents;

central point calculation means for calculating a central point in each document-to-be-surveyed based on the combination of the calculated function value of the appearance frequency in said documents-to-be-compared and the calculated function value of the appearance frequency in said related documents, regarding each index term; and

output means for outputting data of said central point in each document-to-be-surveyed.

According to this, it is possible to know the general positioning of each document-to-be-surveyed included in a document-group-to-be-surveyed against the documents-to-be-compared and the related documents. For example, it is possible to know whether the document-to-be-surveyed has general contents, original contents or specialized contents compared with the documents-to-be-compared and the related documents. Further, for instance, it is possible to detect a document having general contents, original contents or specialized contents from the document-group-to-be-surveyed.

Moreover, it is also possible to evaluate the trend of the overall document-group-to-be-surveyed. For instance, it is possible to make an evaluation such as a document group with many documents having general contents, a document group with many documents having original contents, or a document group with many documents having specialized contents.

However, because center points are calculated for each of the documents to be surveyed, data tends to be smoothed, and differences between documents to be surveyed are not easily identified. Therefore, it may not be easy to know at a glance the positioning of each document to be surveyed and overall tendencies of the document group to be surveyed.

Thus, a first object of the present invention is to provide an index term extraction device capable of properly comprehending the character of a document-to-be-surveyed, especially comprehending relationship between the index terms.

Further, a second object of the present invention is to provide a document characteristic analysis device enabling the analysis of the general positioning of a document-to-be-surveyed included in a document-group-to-be-surveyed, and the trend of the overall document-group-to-be-surveyed, especially enabling output which is easy to understand, while maintaining point-to-point relationships.

(1) In order to achieve the first object described above, the index term extraction device of the present invention includes: input means for inputting a document-to-be-surveyed, documents-to-be-compared that are compared with the document-to be surveyed, and similar documents that are similar to the document-to-be-surveyed; index term extraction means for extracting index terms from the document-to-be-surveyed; first appearance frequency calculation means for calculating a function value of an appearance frequency of each of the extracted index terms in the documents-to-be-compared; second appearance frequency calculation means for calculating a function value of an appearance frequency of each of the extracted index terms in the similar documents; coordinate transformation means for transforming the position of each index term on a coordinate system taking the calculated function value of the appearance frequency in the documents-to-be-compared as a first axis of the coordinate system and taking the calculated function value of the appearance frequency in the similar documents as a second axis of the coordinate system by using a conformal mapping; and output means for outputting each index term and positioning data thereof based on coordinate data regarding each index term after the transformation by the coordinate transformation means.

According to the present invention, it is possible to adequately grasp the character of the document-to-be-surveyed, especially by performing the transformation using the conformal mapping it is possible to adequately grasp the relationship between the index terms.

Although the documents-to-be-compared need to be electronically retrievable data, there is no other limitation on the contents thereof and, for instance, they may be all the documents extracted under certain conditions or those extracted randomly from a certain document group. In a typical example, all patent documents (unexamined patent publications and so on) in a certain country during a certain period will be the documents-to-be-compared.

Also the similar documents need to be electronically retrievable data. The similar documents to be input may be selected from a document group such as the documents-to-be-compared based on data of the document-to-be-surveyed. The similar documents to be input may also be selected not based on the document-to-be-surveyed. For example, it is possible to select a document-to-be-surveyed from similar documents selected with a publicly known method and then input them, which results in that said similar documents become the similar documents that are similar to the document-to-be-surveyed.

In the present invention, a single document or a plurality of documents may be surveyed. When a plurality of documents are subject to be surveyed in a bundle, the character of the document group as a whole will be represented rather than the character of the individual documents-to-be-surveyed. Further, a document-to-be-surveyed may or may not be included in the documents-to-be-compared or the similar documents.

Extraction of the index terms by the index term extraction means is conducted by clipping words from the whole or a part of the document. There is no other limitation on the method of clipping the words, and, for instance, a method of extracting significant words excluding particles and conjunctions via conventional methods or with commercially available morphological analysis software, or a method of retaining an index term dictionary (thesaurus) database in advance and using index terms that can be obtained from such database may be adopted.

As the appearance frequency of an index term in a document group, for instance, the number of document hits (document frequency; DF) when retrieving a certain index term among the document group may be used, but this is not limited thereto, and, for example, the total number of hits of the index term may also be used.

The output means may output all index terms extracted by the index term extraction means, or only a portion of the index terms that strongly show the character of the document.

(2) In the foregoing index term extraction device, it is desirable that the input means calculates, with respect to the document-to-be-surveyed and each document of the source-documents-for-selection from which the similar documents are selected, a vector having as its component a function value of an appearance frequency in each document of each index term contained in each document, or a function value of an appearance frequency in the source-documents-for-selection of each index term contained in each document; and selects from the source-documents-for-selection documents having a vector of a high degree of similarity to the vector calculated with respect to the document-to-be-surveyed, and makes the selected documents similar documents.

Since the selection of similar documents is conducted based on the data of the document-to-be-surveyed, it is possible to properly comprehend the character of the document-to-be-surveyed when it is provided.

Determination on the degree of similarity between the vectors may employ the function of the product between vector components such as cosine or Tanimoto correlation (similarity) between the vectors, or the function of the difference between vector components such as distance (non-similarity) between the vectors.

In the foregoing index term extraction device, it is desirable to use the documents-to-be-compared as the source-documents-for-selection.

(3) In each of the foregoing index term extraction devices, it is desirable that the function value of the appearance frequency in the documents-to-be-compared or the similar documents is a logarithm of a value obtained by multiplying the total number of documents of the documents-to-be-compared or the similar documents to the reciprocal of the appearance frequency.

(4) (5) The present invention is also an extraction method including the same steps as those executed by the respective devices described above, as well as an extraction program capable of causing a computer to perform the same processing steps as those executed by the respective devices described above. This program may be recorded in a recording medium such as a FD, CDROM or DVD, or be transmitted and received via network.

(6) In order to achieve the second object described above, the document characteristic analysis device of the present invention includes: input means for inputting a document-group-to-be-surveyed including a plurality of documents-to-be-surveyed, documents-to-be-compared to be compared with each document-to-be-surveyed, and related documents having a common attribute with the document-group-to-be-surveyed; index term extraction means for extracting index terms in each document-to-be-surveyed; third appearance frequency calculation means for calculating a function value of an appearance frequency of each of the extracted index terms in the documents-to-be-compared; fourth appearance frequency calculation means for calculating a function value of an appearance frequency of each of the extracted index terms in the related documents; central point calculation means for calculating a position of a central point of the index terms in each document-to-be-surveyed on a coordinate system taking the calculated function value of the appearance frequency in the documents-to-be-compared as a first axis of the coordinate system and taking the calculated function value of the appearance frequency in the related documents as a second axis of the coordinate system; coordinate transformation means for transforming the position of the central point in each document-to-be-surveyed on the coordinate system by using a conformal mapping; and output means for outputting data of the central point in each document-to-be-surveyed after the transformation by the coordinate transformation means.

Thereby, the general positioning of each document-to-be-surveyed included in the document-group-to-be-surveyed can be known in relation to other document groups and the trend of the overall document-group-to-be-surveyed can be analyzed. Especially the transformation using the conformal mapping enables output which is easy to understand, while maintaining point-to-point relationships.

As the foregoing document-group-to-be-surveyed, for example, a document group of companies to be surveyed, or a document group of technical fields to be surveyed may be considered. In the former case, for instance, all documents in which the company to be surveyed is the applicant can be retrieved from all patent documents, or further narrowed based on IPC or the like and made to be the document-group-to-be-surveyed. In the latter case, for instance, all documents given a specific IPC can be retrieved from all patent documents, or further narrowed based on the filing period or the like and made to be the document-group-to-be-surveyed. It is desirable that the foregoing document-group-to-be-surveyed are included in the documents-to-be-compared and in the related documents, but such inclusion is not essential. Although the documents-to-be-compared need to be electronically retrievable data, there is no particular limitation on the contents thereof and, for instance, the-documents-to-be-compared may be all the documents extracted under certain conditions or those extracted randomly from a certain document group. In a typical example, all patent documents (unexamined patent publications and so on) in a certain country during a certain period will be the documents-to-be-compared.

Although the foregoing related documents also need to be electronically retrievable data, there is no particular limitation on the selection method thereof. For example, when the document-group-to-be-surveyed are to be a document group of a company to be surveyed, the related documents may be a document group retrieved based on the names of a plurality of companies designated by a user in the same industry as those of the company to be surveyed. The related documents may also be a document group of companies in the same industry retrieved based on the company name and the industrial classification of the company to be surveyed. Moreover, documents belonging to the same technical field as those of a company to be surveyed may also be retrieved based on IPC (International Patent Classification) or the like. In addition, the document group may be even further narrowed under certain conditions from such document group of the same industry or the document group of the same field.

Further, for instance, when adopting a document group in a technical field to be surveyed as the document-group-to-be-surveyed, a document group in a broader technical field of a scope (that was designated and retrieved up to an IPC main group, for instance) than the document-group-to-be-surveyed belonging to a specific technical field (that was designated and retrieved up to an IPC subgroup, for instance) can be made to the related documents. Further, for example, when the document-group-to-be-surveyed are retrieved based on IPC and narrowed with a specific filing period, the related documents can be retrieved with a longer filing period.

It is desirable that the related documents are selected from the documents-to-be-compared, but this is not essential.

When a document group in which documents of the company to be surveyed have been narrowed based on IPC is to be made the document-group-to-be-surveyed, it is preferable to use the related documents which were also retrieved or narrowed based on the same IPC.

Extraction of the index terms by the index term extraction means is conducted by clipping words from the whole or a part of the document. There is no other limitation on the method of clipping the words, and, for instance, a method of extracting significant words excluding particles and conjunctions via conventional methods or with commercially available morphological analysis software, or a method of retaining an index term dictionary (thesaurus) database in advance and using index terms that can be obtained from such database may be adopted.

As the appearance frequency of an index term in a document group, for instance, the number of document hits (document frequency; DF) when retrieving a certain index term among the document group is used, but this is not limited thereto, and, for example, the total number of hits of the index term may also be used.

Further, it is desirable that the function value of the appearance frequency is a logarithm (IDF) of a value obtained by multiplying the total number of documents of the documents-to-be-compared or the related documents to the reciprocal of the appearance frequency.

The central point in each of the foregoing documents-to-be-surveyed, for instance, will be a point (provided "$< >_w$" is the average value in each document) given in the coordinates ($<IDF (P) >_w$, $<IDF(S)>_w$), but it is not limited thereto.

(7) In the foregoing document characteristic analysis device, it is desirable that the calculation of the central point in each document-to-be-surveyed is conducted by calculating the weighted average of the index term coordinates, which is an average value obtained by performing weighting to the coordinate value of each index term based on the function value of the appearance frequency in the documents-to-be-compared and the function value of the appearance frequency in the related documents regarding each index term with the ratio of term frequency value of each index term in relation to term frequency value total in the documents.

In the foregoing document characteristic analysis device, it is desirable that data of the central point is output by extracting documents each having high similarity with the document-group-to-be-surveyed and documents each having low similarity with the document-group-to-be-surveyed, among the document-group-to-be-surveyed.

Even when there are vast amounts of documents in the document-group-to-be-surveyed, the trend of the document-group-to-be-surveyed can be more easily comprehended by narrowing and outputting representative documents.

Determination of similarity of each document in relation to the document-group-to-be-surveyed is made, for instance, by calculating for each document d,

$$(1/d_N)\{DF(w_1,\ E0)\ +\ DF(w_2,\ E0)\ +\ \cdots\ +\ DF(w_{dN},\ E0)\}$$

representing an average value of the number of hit documents DF ($w_i$, E0) upon searching the document-group-to-be-surveyed (E0) with index terms $w_i$ of each document d ($d_N$ represents the number of index terms in the document d). A document with a high average value is determined to be "similar", and a document with a low average value is determined to be "non-similar". As the extraction method, for instance, a method of extracting a fixed number in the ascending order and descending order of the average value may be considered. Also as the extraction method, for example, a method of calculating Z through dividing the average value by the number of documents-to-be-surveyed and extracting documents that has Z greater than "average value of every Z + standard deviation of every Z" and extracting documents that has Z less than "average number of every Z - standard deviation of every Z" may be considered.

(8) (9) The present invention is also an analysis method including the same steps as those executed by the respective devices described above, as well as an analysis program capable of causing a computer to perform the same processing steps as those executed by the respective devices described above. This program may be recorded in a recording medium such as an FD, CDROM or DVD, or be transmitted and received via network.

[Effect of the Invention]

Foremost, according to the present invention, it is possible to provide an index term extraction device capable of properly representing the character of a document-to-be-surveyed, especially by performing the transformation using the conformal mapping it is possible to adequately grasp the relationship between the index terms.

Secondly, it is possible to provide a document characteristic analysis device enabling the analysis of the general positioning of a document-to-be-surveyed included in a document-group-to-be-surveyed in relation to other document groups, and the trend of the overall document-group-to-be-surveyed. Especially the transformation using the conformal mapping enables output which is easy to understand, while maintaining point-to-point relationships.

## BRIEF DESCRIPTION OF THE DRAWINGS

FIG. 1 is a diagram showing a hardware configuration of an index term extraction device according to an embodiment of the present invention;

FIG. 2 is a diagram for explaining the details of the configuration and function of the index term extraction device;

FIG. 3 is a flowchart showing the operation of condition setting in the input device 2;

FIG. 4 is a flowchart showing the operation of the processing device 1;

FIG. 5 is a flowchart showing the output operation of the map in the output device 4;

FIG. 6 is a conceptual diagram for explaining the nature of an original micro map;

FIG. 7 is a diagram showing a specific example of the original micro map;

FIG. 8 is a diagram showing a hardware configuration of a document characteristic analysis device of the present invention;

FIG. 9 is a flowchart showing the operation of the processing device 1 of the document characteristic analysis device of the present invention;

Fig. 10 shows a specific example of an original macro map;

Fig. 11 explains logarithmic transformation;

Fig. 12 explains exponential transformation;

Fig. 13 explains SC transformation;

Fig. 14 explains hyperbolic coordinate transformation;

Fig. 15 shows an example of the w plane obtained in transformation example 1 (logarithmic transformation 1) of an original macro map;

Fig. 16 shows an example of the w plane obtained in a reference example of transformation example 1 of an original macro map;

Fig. 17 shows an example of the w plane obtained in transformation example 2 (logarithmic transformation 2) of an original macro map;

Fig. 18 shows an example of the w plane obtained in transformation example 3 (power transformation) of an original macro map;

Fig. 19 explains transformation from the z plane to the ζ plane in transformation example 4 (SC transformation) of an original macro map;

Fig. 20 shows a first example of the z plane in transformation example 4 (SC transformation) of an original macro map;

Fig. 21 shows a first example of the ζ plane in transformation example 4 (SC transformation) of an original macro map;

Fig. 22 shows a first example of the p(ζ) plane in transformation example 4 (SC transformation) of an original macro map;

Fig. 23 shows a first example of the w plane obtained in transformation example 4 (SC transformation) of an original macro map;

Fig. 24 shows a second example of the z plane in transformation example 4 (SC transformation) of an original macro map;

Fig. 25 shows a second example of the ζ plane in transformation example 4 (SC transformation) of an original macro map;

Fig. 26 shows a second example of the p(ζ) plane in transformation example 4 (SC transformation) of an original macro map;

Fig. 27 shows a second example of the w plane obtained in transformation example 4 (SC transformation) of an original macro map;

Fig. 28 shows an example of the ζ plane in reference example A1;

Fig. 29 shows an example of the w plane obtained in reference example A1;

Fig. 30 shows an example of the ζ plane in reference example A2;

Fig. 31 shows an example of the w plane obtained in reference example A2;

Fig. 32 shows an example of the ζ plane in reference example A3;

Fig. 33 shows an example of the w plane obtained in reference example A3;

Fig. 34 shows an example of the ζ plane in reference example A4;

Fig. 35 shows an example of the w plane obtained in reference example A4;

Fig. 36 shows a first example of the w plane obtained in transformation example 5 (hyperbolic coordinate transformation) of an original macro map;

Fig. 37 shows a second example of the w plane obtained in transformation example 5 (hyperbolic coordinate transformation) of an original macro map;

Fig. 38 shows an example of the w plane obtained in reference example B;

Fig. 39 shows an example of the w plane and w' plane obtained in transformation example 6 (Joukowski transformation) of an original macro map;

Fig. 40 explains determination of the scale factor $\tau$ in transformation example 6 (Joukowski transformation) of an original macro map;

Fig. 41 shows an example of a solid representation in transformation example 6 (Joukowski transformation) of an original macro map;

Fig. 42 shows an example of the w plane obtained in transformation example 7 (exponential transformation) of an original macro map;

Fig. 43 shows an example of the w plane obtained in transformation example 8 (hyperbolic moment transformation) of an original macro map;

Fig. 44 shows an example of the w plane and w' plane obtained in transformation example 1 (Joukowski transformation) of an original micro map;

Fig. 45 shows an example of the w plane obtained in transformation example 2 (hyperbolic coordinate transformation) of an original micro map;

Fig. 46 shows an example of the w plane obtained in transformation example 3 (SC transformation) of an original micro map;

Fig. 47 shows an example of the w plane obtained in transformation example 4 (exponential transformation) of an original micro map;

DESCRIPTION OF REFERENCE MARKS

| | |
|---|---|
| 1 | processing device |
| 2 | input device |
| 3 | recording device |
| 4 | output device |
| 120 | index term (d) extraction unit |
| 121 | TF(d) calculation unit (term frequency calculation means) |
| 142 | IDF(P) calculation unit (first/third appearance frequency calculation means) |
| 150 | similarity calculation unit |
| 160 | similar documents S selection unit |
| 171 | IDF(S) calculation unit (second/fourth appearance frequency calculation means) |
| 173 | central point calculation unit |
| 180 | characteristic index term extraction unit |
| 181 | coordinate transformation unit |
| a | original concept term area |
| b | specialty term area |
| c | similar documents prescribed term area |
| d | general term area |

BEST MODE FOR CARRYING OUT THE INVENTION

Embodiments of the invention are now explained in detail with reference to the drawings.

<1. Explanation of Vocabulary>

The vocabulary used in explaining processing performed before conformal mapping transformation is now defined or explained.

Document-to-be-surveyed d: A document or documents that is subject to the survey. For example, this would be a document or a document set of patent publications.

Documents-to-be-compared P: A document set to be compared with the document-to-be-surveyed d. For instance, all patent documents (such as unexamined patent publications) of a certain country during a certain period, or a document set randomly extracted therefrom. Although these are included in the document-to-be-surveyed d in the case explained below, they do not have to be included therein.

Similar documents S: A document set that is similar to the document-to-be-surveyed d. Although these include d in the case explained below, d does not have to be included therein. Further, although a case is explained where these are selected from the documents-to-be-compared P, they may be selected from a separate source-documents-for-selection.

The symbols d or (d), P or (P) and S or (S) attached to the constituent elements in the diagrams represent the document-to-be-surveyed, the documents-to-be-compared and the similar documents, respectively. These symbols are hereinafter also attached to the operation or the constituent elements for ease of differentiation. For example, "index term (d)" refers to an index term of the document-to-be-surveyed d.

"TF calculation" refers to the calculation of the term frequency, and is the calculation of the appearance frequency (term frequency) in a certain document of an index term included in such document.

"DF calculation" refers to the calculation of the document frequency, and is the calculation of the number of hit documents (document frequency) when searching a document group with an index term.

"IDF calculation" is the calculation of a reciprocal of a DF calculation result, or a logarithm of a value obtained by multiplying the number of documents of a search target document group P or S to the reciprocal.

Abbreviations are determined in order to simplify the following explanation.

d: Document-to-be-surveyed

p: Each Document belong to the documents-to-be-compared P

N: Total number of documents of the documents-to-be-compared P

N': Number of documents in the similar documents S

TF(d): Term frequency in d of an index term in d

TF(P): Term frequency in p of an index term in p

DF(P): Document frequency in P of an index term in d or p

DF(S): Document frequency in S of an index term in d

IDF(P): Logarithm of [reciprocal of DF(P) × number of documents]: $\ln[N/DF(P)]$

IDF(S): Logarithm of [reciprocal of DF(S) × number of documents]: $\ln[N'/DF(S)]$

TFIDF: Product of TF and IDF which is calculated for each index term of document

Similarity (similarity ratio): Degree of similarity between the document-to-be-surveyed d and document p belonging to the documents-to-be-compared P

Here, an index term is a word that is clipped from the whole or a part of the document. A method of extracting a significant word excluding particles and conjunctions via conventional methods or with commercially available morphological analysis software, or a method of retaining an index term dictionary (thesaurus) database in advance and using index terms that can be obtained from such database may be adopted.

Further, although a natural logarithm is used here as the logarithm, a common logarithm or the like may also be used.

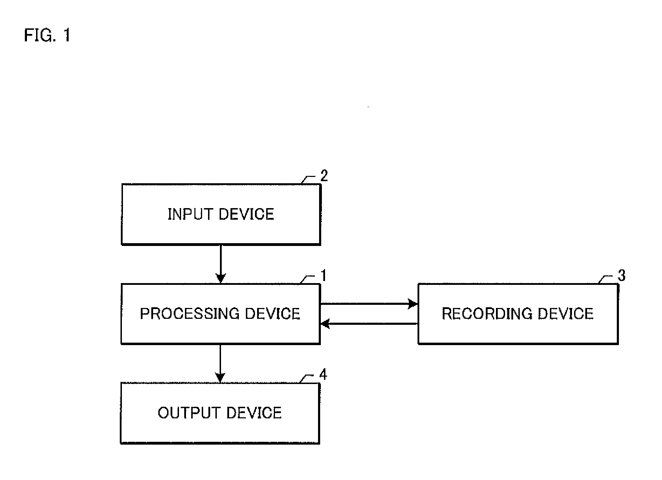

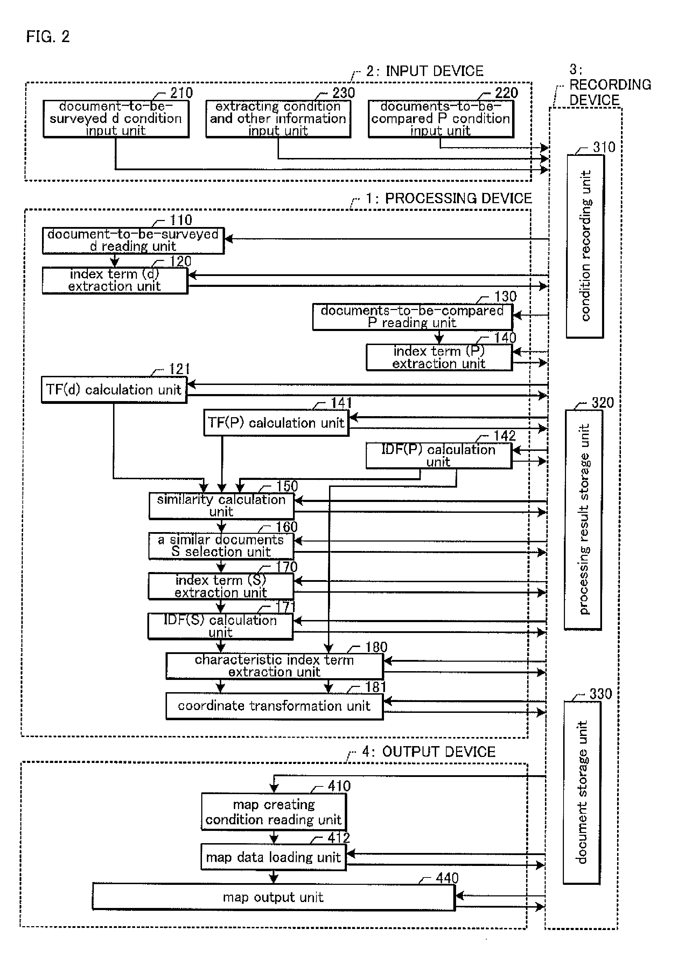

<2. Configuration of Index Term Extraction Device: FIG. 1, FIG. 2>

FIG. 1 is a diagram showing a hardware configuration of a index term extraction device according to an embodiment of the present invention.

As shown in FIG. 1, the index term extraction device of this embodiment is configured from a processing device 1 having a CPU (Central Processing Unit) and memory (recording device), an input device 2 which is an input means such as a keyboard (manual input unit), a recording device 3 which is a recording means for storing the conditions or the document data or the processing results of the processing device 1, and an output device 4 which is an output means for displaying the extraction results of the characteristic index terms as a map.

FIG. 2 is a diagram for explaining the details of the configuration and function of the index term extraction device.

The processing device 1 is configured from a document-to-be-surveyed d reading unit 110, an index term (d) extraction unit 120, a TF(d) calculation unit 121, a documents-to-be-compared P reading unit 130, an index term (P) extraction unit 140, a TF(P) calculation unit 141, an IDF(P) calculation unit 142, a similarity calculation unit 150, a similar documents S selection unit 160, an index term (S) extraction unit 170, an IDF(S) calculation unit 171, a characteristic index term extraction unit 180, a coordinate transformation unit 180, and so on.

The input device 2 is configured from a document-to-be-surveyed d condition input unit 210, a documents-to-be-compared P condition input unit 220, an extracting condition and other information input unit 230, and so on.

The recording device 3 is configured from a condition recording unit 310, a processing result storage unit 320, a document storage unit 330, and so on. The document storage unit 330 includes an external database and an internal database. An external database, for instance, refers to a document database such as IPDL (Industrial Property Digital Library) provided by the Japanese Patent Office, and PATOLIS provided by PATOLIS Corporation. An internal database refers to a database personally storing commercially available data such as a patent JP-ROM, a device for reading documents stored in a medium such as an FD (Flexible Disk), CDROM (Compact Disk), MO (Optical-magnetic Disk), and DVD (Digital Video Disk), an OCR (Optical Character Reader) device for reading documents output on paper or handwritten documents, and a device for converting the read data into electronic data such as text.

The output device 4 is configured from a map creating condition reading unit 410, a map data loading unit 412, a map output unit 440, and so on.

In FIG. 1 and FIG. 2, the communication means for exchanging signals and data among the processing device 1, input device 2, recording device 3 and output device 4 may be realized through directly connecting via a USB (Universal Serial Bus) cable or the like, performing the transmission and reception via network such as a LAN (Local Area Network), or communicating via a medium storing documents such as an FD, CDROM, MO or DVD. A combination of a part or several of these may also be adopted.

Next, the function in the index term extraction device of an embodiment pertaining to the present invention is explained in detail with reference to FIG. 2.

<2-1. Details of Input Device 2>

With the input device 2 of FIG. 2, the document-to-be-surveyed d condition input unit 210 sets the conditions for reading the document-to-be-surveyed d based on an input screen or the like. The documents-to-be-compared P condition input unit 220 sets the conditions for reading the documents-to-be-compared P based on an input screen or the like. The extracting condition and other information input unit 230 sets the index term extracting condition of the document-to-be-surveyed d and the documents-to-be-compared P, TF calculation condition, IDF calculation condition, similarity calculation condition, similar documents selecting condition, map creating condition and so on based on an input screen or the like. These input conditions are sent to and stored in the condition recording unit 310 of the recording device 3.

<2-2. Details of Processing Device 1>

With the processing device 1 of FIG. 2, the document-to-be-surveyed d reading unit 110 reads the document to be surveyed from the document storage unit 330 based on the conditions of the condition recording unit 310. The read document-to-be-surveyed d is sent to the index term (d) extraction unit 120. The index term (d) extraction unit 120 extracts the index terms from the documents obtained with the document-to-be-surveyed d reading unit 110 based on the conditions of the condition recording unit 310, and stores this in the processing result storage unit 320.

The documents-to-be-compared P reading unit 130 reads the plurality of documents to be compared from the document storage unit 330 based on the conditions of the condition recording unit 310. The read documents-to-be-compared P is sent to the index term (P) extraction unit 140. The index term (P) extraction unit 140 extracts the index terms from the documents obtained with the documents-to-be-compared P reading unit 130 based on the conditions of the condition recording unit 310, and stores this in the processing result storage unit 320.

The TF(d) calculation unit 121 performs TF calculation to the processing result of the index term (d) extraction unit 120 regarding the document-to-be-surveyed d stored in the processing result storage unit 320 based on the conditions of the condition recording unit 310. The obtained TF(d) data is stored in the processing result storage unit 320 or sent directly to the similarity calculation unit 150.

The TF(P) calculation unit 141 performs TF calculation to the processing result of the index term (P) extraction unit 140 regarding the documents-to-be-compared P stored in the processing result storage unit 320 based on the conditions of the condition recording unit 310. The obtained TF(P) data is stored in the processing result storage unit 320 or sent directly to the similarity calculation unit 150.

The IDF(P) calculation unit 142 performs IDF calculation to the processing result of the index term (P) extraction unit 140 regarding the documents-to-be-compared P stored in the processing result storage unit 320 based on the conditions of the condition recording unit 310. The obtained IDF(P) data is stored in the processing result storage unit 320, sent directly to the similarity calculation unit 150 or sent directly to the characteristic index term extraction unit 180.

The similarity calculation unit 150 obtains, based on the conditions of the condition recording unit 310, the results of the TF(d) calculation unit 121, TF(P) calculation unit 141 and TDF (P) calculation unit 142 directly therefrom or from the processing result storage unit 320, and calculates the similarity of each document of the documents-to-be-compared P in relation to the document-to-be-surveyed d. The obtained similarity is added as similarity data to each document of the documents-to-be-compared P, and sent to the processing result storage unit 320 or sent directly to the similar documents S selection unit 160.

The similarity calculation by the similarity calculation unit 150 is performed through calculation via TFIDF calculation or the like for each index term of each document, and the similarity of each document of the documents-to-be-compared P in relation to the document-to-be-surveyed d is thereby calculated. TFIDF calculation is the product of the TF calculation result and the IDF calculation result. The calculation method of similarity will be described later in detail.

The similar documents S selection unit 160 obtains the similarity calculation result of the documents-to-be-compared P from the processing result storage unit 320 or directly from the similarity calculation unit 150, and selects the similar documents S based on the conditions of the condition recording unit 310. The selection of the similar documents S, for instance, is conducted by sorting the documents in order from the highest similarity, and selecting a required number indicated in the conditions. The selected similar documents S is output to the processing result storage unit 320 or output directly to the index term (S) extraction unit 170.

The index term (S) extraction unit 170 obtains the data input of the similar documents S from the processing result storage unit 320 or directly from the similar documents S selection unit 160, and extracts the index terms (S) from the similar documents S based on the conditions of the condition recording unit 310. The extracted index terms (S) are sent to the processing result storage unit 320 or sent directly to the IDF(S) calculation unit 171.

The IDF(S) calculation unit 171 obtains the index terms (S) from the processing result storage unit 320 or directly from the index term (S) extraction unit 170, and performs IDF calculation to the index terms (S) based on the conditions of the condition recording unit 310. The obtained IDF(S) is stored in the processing result storage unit 320 or sent directly to the characteristic index term extraction unit 180.

The characteristic index term extraction unit 180 extracts the index terms (d), based on the conditions of the condition recording unit 310, from the processing result storage unit 320 or directly from the results of the IDF(S) calculation unit 171 and the results of the IDF(P) calculation unit 142, in a required number as indicated in the conditions, or in a number selected from the calculation result based on the conditions. The index term/terms extracted here is/are referred to as the "characteristic index term/terms". The extracted characteristic index terms (d) are stored in the processing result storage unit 320 or sent directly to the coordinate transformation unit 181.

The coordinate transformation unit 181 obtains characteristic index terms and the IDF (P) and IDF (S) thereof from the processing result storage unit 320, or directly from the characteristic index term extraction unit 180, and performs coordinate transformation using a conformal mapping based on conditions of the condition recording unit 310. The coordinates of each index term after the coordinate transformation are sent to the processing result storage unit 320.

<2-3. Details of Recording Device 3>

In the recording device 3 of FIG. 2, the condition recording unit 310 records information such as the conditions obtained from the input device 2, and sends data to the processing device 1 or the output device 4, respectively, based on their requests. The processing result storage unit 320 stores the processing results of the respective constituent elements in the processing device 1, and sends necessary data based on the request from the processing device 1.

The document storage unit 330 stores and provides the necessary document data obtained from the external database or internal database based on the request from the input device 2 or processing device 1.

<2-4. Details of Output Device 4>

In the output device 4 of FIG. 2, the map creating condition reading unit 410, based on the conditions of the condition recording unit 310, reads the map creating condition and sends this to the map data loading unit 412.

The map data loading unit 412, according to the conditions of the map creating condition reading unit 410, loads the processing result of the coordinate transformation unit 181 from the processing result storage unit 320. The loaded coordinate data of the characteristic index terms is sent to the processing result storage unit 320 or sent directly to the map output unit 440.

The map output unit 440 obtains the conditions and data output from the map data loading unit 412 directly therefrom or from the processing result storage unit 320, and creates a field for output the map. Simultaneously, it also outputs the processing result of the coordinate transformation unit 181 so that the result can be displayed or printed on the map or stored as data.

<3. Operation of Index Term Extraction Device>

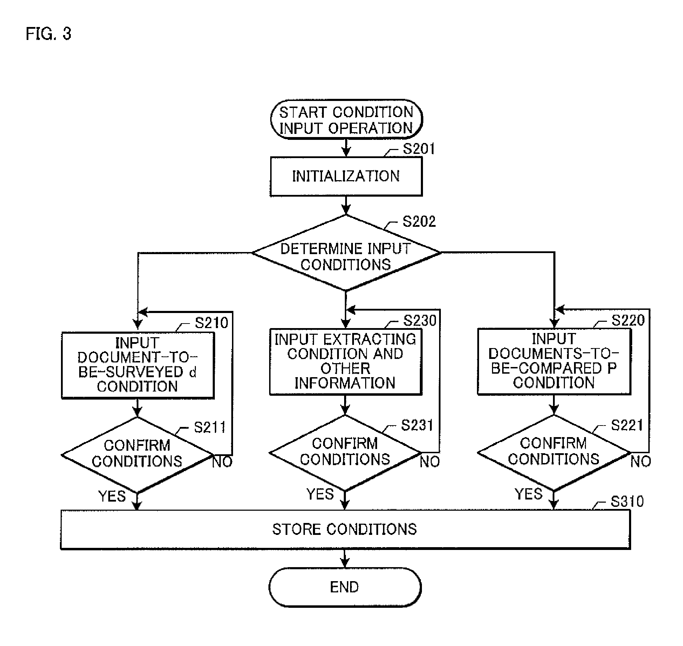

FIG. 3, FIG. 4 and FIG. 5 are diagrams for explaining the operation of the index term extraction device.

<3-1. Input Operation: FIG. 3>

FIG. 3 is a flowchart showing the operation of condition setting in the input device 2. Foremost after initialization (step S201), the input conditions are determined (step S202). When the operator selects to input the conditions of the document-to-be-surveyed d, input of conditions of the document-to-be-surveyed d is accepted at the document-to-be-surveyed d condition input unit 210 (step S210). Next, the input conditions are confirmed by the operator with a display screen (not shown), and "Set" is selected on the screen if the input conditions are correct. Thus, the input conditions are stored in the condition recording unit 310 (step S310). Since "Back" will be selected if the input conditions are incorrect, the routine returns to step S210 (step S211).

Meanwhile, when the operator selects to input the conditions of the documents-to-be-compared P at step S202, input of conditions of the documents-to-be-compared P is accepted by the documents-to-be-compared P condition input unit 220 (step S220). Next, the input conditions are confirmed by the operator with a display screen (not shown), and "Set" is selected on the screen if the input conditions are correct. Thus, the input conditions are stored in the condition recording unit 310 (step S310). Since "Back" will be selected if the input conditions are incorrect, the routine returns to step S220 (step S221).

Further, when the operator selects to input extracting conditions or other conditions at step S202, input of extracting conditions and other conditions is accepted by the extracting condition and other information input unit 230 (step S230). Next, the input conditions are confirmed by the operator with a display screen (not shown), and "Set" is selected on the screen if the input conditions are correct. Thus, the input conditions are stored in the condition recording unit 310 (step S310). Since "Back" will be selected if the input conditions are incorrect, the routine returns to step S230 (step S231). At step S230, the extracting condition of the index terms (d) and the selecting condition of the similar documents S, and the output condition of the characteristic index terms and the like are set.

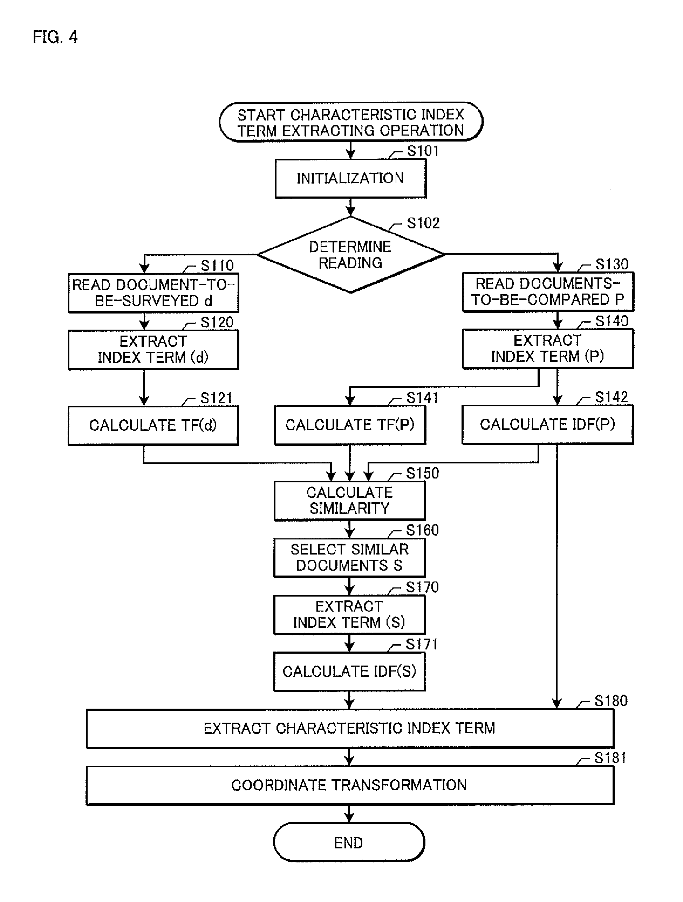

<3-2. Operation of Characteristic Index Term Extraction and Coordinate Transformation: FIG. 4>

FIG. 4 is a flowchart showing the operation of the processing device 1. Foremost after initialization (step S101), based on the conditions of the condition recording unit 310, it is determined whether the document(s) to be read from the document storage unit 330 is/are a document-to-be-surveyed d or documents-to-be-compared P (step S102). When the document to be read is a document-to-be-surveyed d, the document-to-be-surveyed d reading unit 110 reads the document-to-be-surveyed from the document storage unit 330 (step S110). Next, the index term (d) extraction unit 120 extracts the index terms of the document-to-be-surveyed d (step S120). Subsequently, the TF(d) calculation unit 121 performs TF calculation to each of the extracted index terms (step S121).

Meanwhile, when the documents to be read are documents-to-be-compared P at step S102, the documents-to-be-compared P reading unit 130 reads the documents-to-be-compared P (step S130). Next, the index term (P) extraction unit 140 extracts the index terms of the documents-to-be-compared P (step S140). Subsequently, the TF(P) calculation unit 141 performs TF calculation to each of the extracted index terms (step S141), and the IDF(P) calculation unit 142 performs IDF calculation thereto (step S142).

Next, the similarity calculation unit 150 performs similarity calculation based on the TF(d) calculation result output from the TF(d) calculation unit 121, the TF(P) calculation result output from the TF(P) calculation unit 141, and the IDF(P) calculation result output from the IDF(P) calculation unit 142 (step S150). This similarity calculation is executed by calling a similarity calculation module for calculating the similarity from the external recording unit 310 based on the conditions input from the input device 2.

A specific example of similarity calculation is as explained below. Here, assume that d is the document-to-be-surveyed, and p is a document in the documents-to-be-compared P. As a result of processing on these documents d and p, assume that the index terms clipped from document d are "red", "blue" and "yellow". Further, assume that the index terms clipped from document p will be "red" and "white". In this case, the term frequency of the index term in document d will be TF(d), the term frequency of the index term in document p will be TF(P), the document frequency of the index term obtained from the documents-to-be-compared P will be DF(P). Also assume that the total number of documents is 50. Here, for example, assume the following conditions:

[Table 1]

| Index term and TF(d) | red(1), blue(2), yellow(4) |
|---|---|
| Index term and TF(P) | red(2), white(1) |
| Index term and DF(P) | red (30), blue(20), yellow(45), white(13) |

The TFIDF(P) is calculated for each index term of each document in order to calculate the vector representation. The result, with respect to document vectors d and p, will be as follows:

[Table 2]

| | red | blue | yellow | White |
|---|---|---|---|---|
| d | $1 \times \ln(50/30)$ | $2 \times \ln(50/20)$ | $4 \times \ln(50/45)$ | 0 |
| p | $2 \times \ln(50/30)$ | 0 | 0 | $1 \times \ln(50/13)$ |

If the function of the cosine (or distance) between these vectors d and p can be acquired, the similarity (or non-similarity) between the document vectors d and p can be obtained. Incidentally, greater the value of the cosine (similarity) between the vectors means that the degree of similarity is high, and lower the value of the distance (non-similarity) between vectors means that the degree of similarity is high. The obtained similarity is stored in the processing result storage unit 320 and also sent to the similar documents S selection unit 160.

Next, the similar documents S selection unit 160 rearranges the documents subject to the similarity calculation at step S150 in order of the similarity, and selects the specified number of similar documents S according to the conditions that have been set in the extracting condition and other information input unit 230 (step S160).

Next, at step S170, the index term (S) extraction unit 170 of the similar documents S extracts the index terms (S) of the similar documents S selected at step S160.

Next, the IDF (S) calculation unit 171 performs IDF calculation to the similar documents S with respect to each index term (d) (step S171).

Next, at step S180, the characteristic index terms are extracted based on the result of the IDF(S) calculation at step S171 and the result of the IDF(P) calculation at step S142.

Next, at step S181, coordinate transformation of the two-dimensional coordinate system taking IDF(P) of the characteristic index term extracted at step S180 as the horizontal axis and taking IDF(S) as the vertical axis is performed using a conformal mapping. The coordinate transformation using the conformal mapping is described later.

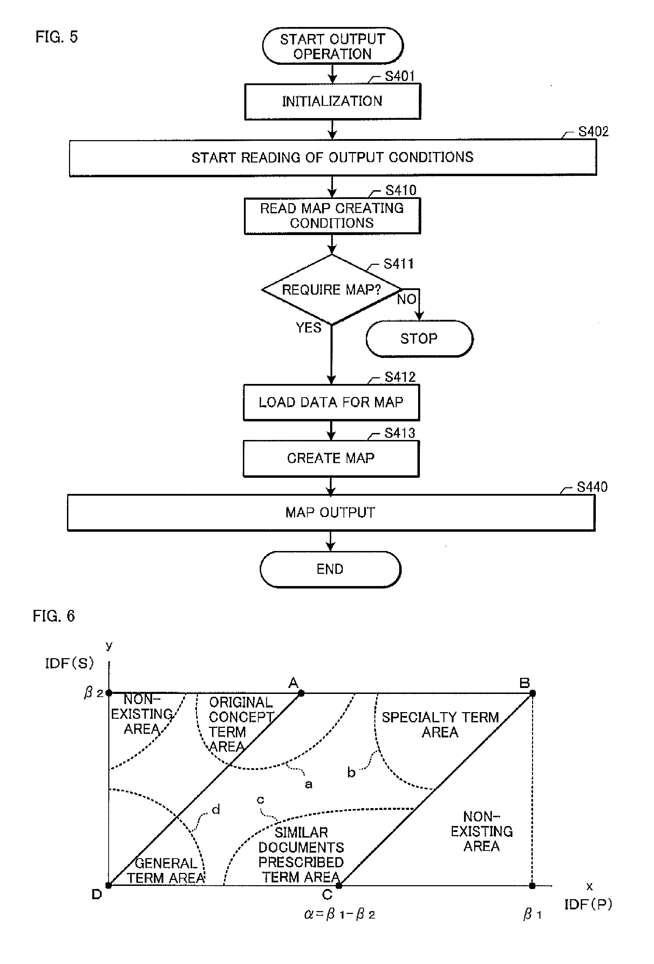

<3-3. Output Operation: FIG. 5>

FIG. 5 is a flowchart showing the output operation of the map in the output device 4. Foremost after initialization (step S401), the reading of conditions from the condition recording unit 310 is commenced for the map creating condition (step S402).

When the map creating condition reading unit 410 of the output device reads the map creating condition from the condition recording unit 310 (step S410), if it is a condition requiring a map (step S411), map data is loaded from the processing result storage unit 320 to the map data loading unit 412 (step S412). Next, a map is created along the map creating condition of the map creating condition reading unit 410 (step S413), and this is sent to the map output unit 440.

If the condition does not require displaying a map at step S411, the routine ends at such time, and data is not sent to the map combined output unit 440.

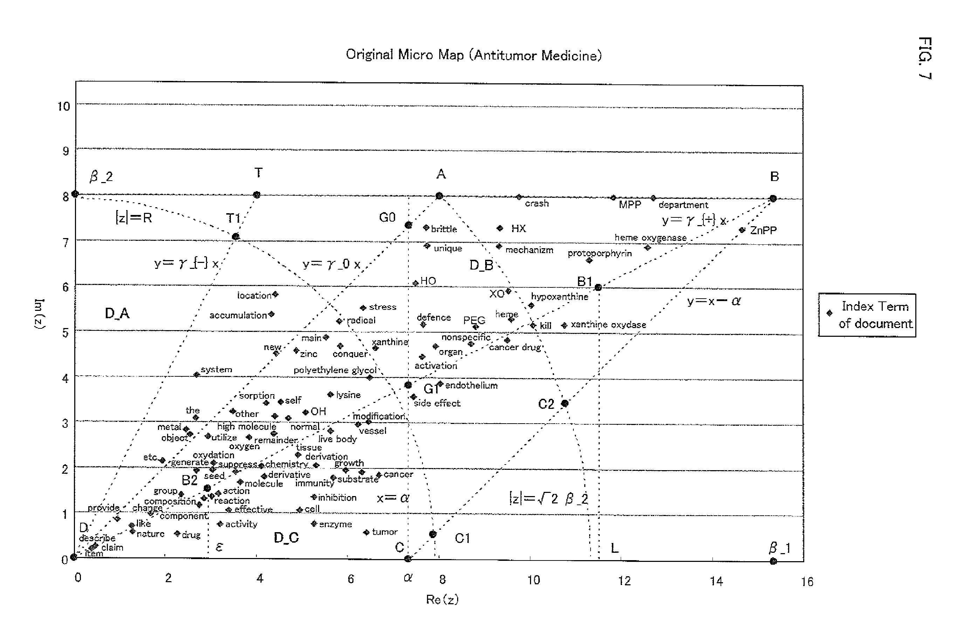

<4. Nature of Original Micro Map: FIG. 6 and FIG. 7>

FIG. 6 is a conceptual diagram for explaining the nature of a map (hereafter called an "original micro map") output for index terms extracted with the index term extraction device of the present invention based on the coordinate before performing transformation in the coordinate transformation unit 181. FIG. 7 is a specific example of the original micro map in which two unexamined patent publications relating to "antitumor medicine" were selected as documents to be surveyed d. This original micro map, with respect to each of the characteristic index terms, takes the calculation result of the IDF(P) calculation unit 142 based on the documents-to-be-compared P as the horizontal axis value, and takes the calculation result of the IDF(S) calculation unit 171 based on the similar documents S as the vertical axis value, and arranges these without further modification on the plane.

In FIG. 6, the x-y plane is a plane created by plotting a value of IDF(P) on the x axis and a value of IDF(S) on the y axis. If the number of documents of the documents-to-be-compared P is N, and the number of documents of the similar documents S is N', maximum value $\beta_1$ of IDF(P) = ln N, and maximum value $\beta_2$ of IDF(S) = ln N'.

Assume that the origin of the coordinate system is D. Also assume that the intersecting point of a straight line where y = x and a line where y = $\beta_2$ is A. Also assume that the intersecting point of a line where y = $\beta_2$ and a line where x = $\beta_1$ is B. Also assume that the point in which a straight line where y-$\beta_2$ = x-$\beta_1$ cuts across the x axis is C. Therefore, the quadrilateral ABCD is a parallelogram. When $\alpha = \beta_1$-$\beta_2$ = ln(N/N'), coordinate values of the respective apexes of the quadrilateral ABCD will be D = (0, 0), B = ($\beta_1$, $\beta_2$), A = ($\beta_2$, $\beta_2$), C = ($\alpha$, 0), respectively.

Line segment AB is a straight line where y = $\beta_2$, and line segment AD is a straight line where y = x. Line segment BC is a straight line where y-$\beta_2$ = x-$\beta_1$. Line segment DC is a straight line where y = 0.

In FIG. 6, since the x coordinate is a value of IDF(P), the area where the x value is near 0 (near D) is an area where the index terms existing in nearly all of the documents-to-be-compared P are arranged. The area where the x coordinate value is near $\beta_1$ = ln N is an area of index terms that hardly exist in the documents-to-be-compared P. The area where the x coordinate value is near $\alpha$ = ln(N/N') (near C) is an area of index terms that exist in documents, the number of which is corresponding to the number of documents N' of the similar documents S, in the documents-to-be-compared P. Meanwhile, since the y coordinate is a value of IDF(S), the area where the y value is near 0 (near D) is an area of the index terms existing in almost all of similar documents S. The area near the line segment AB where the y coordinate is $\beta_2$ = ln N' is an area of index terms that hardly exists in the similar documents S, and that exist almost only in the document-to-be-surveyed d.

In FIG. 6, an index term having a small document frequency DF(P) in the documents-to-be-compared P, namely a rare index term, has a large IDF(P). Therefore, such index term appears at the right side in FIG. 6. An index term having a large DF(P), namely a frequently used index term, has a small IDF(P). Therefore, such index term appears near the y axis in FIG. 6. Accordingly, rarer the index term in the documents-to-be-compared P, the more rightward it appears, and the more frequently an index term is used in the documents-to-be-compared P, the more leftward it appears. On a two-dimensional plane, since there is a restriction based on the fact that the similar documents S is a subset of the documents-to-be-compared P, points of index terms only exist inside the area cut off with line segment BC on the right side of FIG. 6.

Similarly, an index term having a document frequency DF(S) value of only one (1) in the similar documents S, namely an index term only included in the document-to-be-surveyed d, has a large IDF(S). Therefore, such index term appears on the BA line in FIG. 6. When DF(S) is greater than 1, the index term will be positioned below the BA line. Contrarily, an index term existing in all documents of the similar documents S will be IDF(S) = 0. Therefore, such index term will appear on the DC line, namely on a line where y = 0 in FIG. 6. Accordingly, rarer the index term in S, the more upward it appears, and the more frequently an index term is used in S, the more downward it appears.

Here, line segment BC is derived from the following. Since the similar documents S is a subset of the documents-to-be-compared P,

$$DF(P) \geq DF(S).$$

Further, based on the definition of IDF above,

$$DF(P) = N \exp[-IDF(P)],$$

$$DF(S) = N' \exp[-IDF(S)].$$

Based on these relational expressions, y = x-$\alpha$; that is, y-$\beta_2$ = x-$\beta_1$ is obtained as the boundary line formula.

In the case of an index term included uniformly, not depending on the number of documents of the similar documents S, such index term will appear on the line segment DA (straight line y = x) in FIG. 6. Here, the meaning of "uniformly" is as follows: When changing the number of documents $N_Q$ of the document group Q to be measured, Q realizing $DF(Q) = N_Q/k$ (where k is a constant greater than 1), is a document group having spatial uniformity, and an index term having this property is referred to as an index term having spatial uniformity. When uniformity is hypothesized in relation to Q = P, S, a straight line where y = x is obtained from

$$\ln k = \ln[N/DF(P)] = \ln[N'/DF(S)].$$

In practice, since many index terms will also frequently appear in the documents-to-be-compared P, which is a document group that is more enormous than the similar documents S, it is normal for the index terms to appear in the lower area of line segment DA. Only exceptional index terms will appear on the upper side of this line segment. Particularly among this, index terms that are not rare in the documents-to-be-compared P but which are rare in the similar documents S will appear in an area that is higher than roughly half the height of the line segment BA in FIG. 6. Based on this tendency, the area near A can be referred to as an original concept term area.

In FIG. 6, index terms could exist in an area fairly outside the left side of line segment AD. However, when giving consideration to the following points, analysis of the nature of the document-to-be-surveyed d will not be hindered even if such area is treated as a non-existing area of index terms: Since this area is an area that is distant from the original concept term area A, even if an index term does appear, it will be an extremely exceptional index term. Also, there is an existence limit line near the Y axis to be derived from the limitation of DF(S) $\geq$ DF(P) - N + N' where:

$$y = -\ln\{(N/N')\exp(-x) - N/N' + 1\},$$

it will be near this line. Still also, as an objective fact, when the similarity of the similar documents S is sufficiently high, an index term was not observed in this area. When combining these facts, this area will substantially be a non-existing area as a consequence of the above.

As described above, in FIG. 6, if a characteristic index term extracted from the document-to-be-surveyed d is positioned at the farther right, it has a lower document frequency in the documents-to-be-compared P and if it is positioned at the higher on the original micro map, it has a lower document frequency in the similar documents S. Thus, since index terms having the following properties are arranged in each area shown in FIG. 6, it is possible to perceive the positioning and character of the document-to-be-surveyed d in the documents-to-be-compared P from the distribution status of points on the original micro map.

Specialty term area b: Area where index terms having a low usage frequency in both the documents-to-be-compared P and similar documents S appear. In other words, this is an area where index terms describing highly specialized matters included in the document-to-be-surveyed d or concepts directly linked thereto appear.

Original concept term area a: Area where index terms having a relatively high appearance frequency in the documents-to-be-compared P but show concepts that were not noted in similar fields appear.

Similar documents prescribed term area c: Area where index terms existing in nearly all documents of the similar documents S and accordingly also existing in the documents-to-be-compared P, the number of which is corresponding to the number in the similar documents S, appear. These index terms are therefore extremely natural for representing the nature of the similar documents S. For example, in the case where technical documents are to be surveyed, when viewing the similar documents prescribed terms, it will be possible to know the technical field of the similar documents S and document-to-be-surveyed d.

General term area d: Area where index terms that are frequently shown in both the documents-to-be-compared P and similar documents S appear. Usually, these terms are not very important when analyzing the character of the document-to-be-surveyed d in the comparison with the documents-to-be-compared P.

Thus, a user who will evaluate the document-to-be-surveyed will be able to perceive the character as the general trend of the document by observing the original micro map without having to read the contents of the document. Nevertheless, when the observer is inexperienced, since the boundary line BC or the like is inclined against the vertical axis as shown in the original micro map, there are cases where it may be difficult to specify the area. Thus, in order to draw a map that can be observed more properly even when viewed by an inexperienced observer, transformation using a conformal mapping is performed as described later.

Incidentally, in the making of the foregoing original micro map, although a case of selecting the similar documents S from the documents-to-be-compared P was explained as the most preferable case, the source-documents-for-selection to become the selection source of the similar documents S may be a document group other than the documents-to-be-compared P. Here, the similar documents S will no longer be a subset of the documents-to-be-compared P.

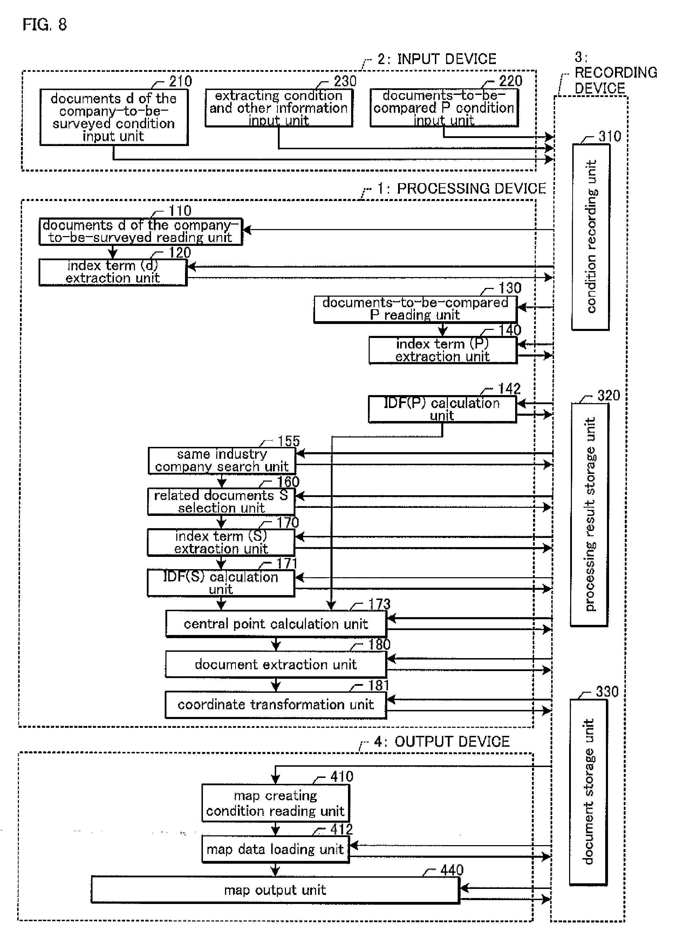

<5. Configuration and Operation of Document Characteristic Analysis Device: FIG. 8 to FIG. 10>

<5-1. Outline of Document Characteristic Analysis Device>

Next, analysis of the document characteristic and characterization of the document group based on the document distribution are explained. The index term extraction device characterizes the document d based on index term distribution, whereas the document characteristic analysis device consolidates index term information (micro information) in the document information (macro information), and expands the survey target to a document group consisting of a plurality of documents. According to the document characteristic analysis device, it is possible to analyze the general positioning of a document-to-be-surveyed included in a document-group-to-be-surveyed in relation to other document groups, or tendency of the overall document-group-to-be-surveyed from the perspective of specialty or originality. The document characteristic analysis device is configured the same as the above-mentioned index term extraction device other than as described below. Differences with the index term extraction device are now mainly explained.

Instead of analyzing the character of the document-to-be-surveyed based on the distribution of characteristic index terms on the map, the document characteristic analysis device introduces a greater observation scale, and the analysis of a document-group-to-be-surveyed based on distribution of documents can be performed by conducting the following replacements:

Index term → Each document of document-group-to-be-surveyed ; (IDF(P), IDF(S)) vector of index terms → Average of (IDF(P), IDF(S)) vector of index terms in each document of document-group-to-be-surveyed;

Document-to-be-surveyed d → Document-group-to-be-surveyed; Similar documents S → Related documents S which is a group document having a common attribute with the document-group-to-be-surveyed.

In this example, an explanation is provided where the document-group-to-be-surveyed are made to be a document group of a single company-to-be-surveyed, and the related documents S are made to be a document group of a company group belonging to the same industry as those of the company-to-be-surveyed.

When taking patent documents as an example, for instance, the documents-to-be-compared P are made to be a document group of all patents and the related documents S are made to be a patent document group of the company group belonging to the same industry as those of the company-to-be-surveyed. And, regarding the documents d of the company-to-be-surveyed, IDF calculation is performed in P and S for each index term, the central point based on the average value thereof in each document d is calculated, and this value is made to be the (x, y) coordinate of each document d. When the coordinates of documents d of the relevant company is mapped on an x-y plane, the document distribution of this company can be obtained.

<5-2. Detailed Configuration and Operation of Document Characteristic Analysis Device>

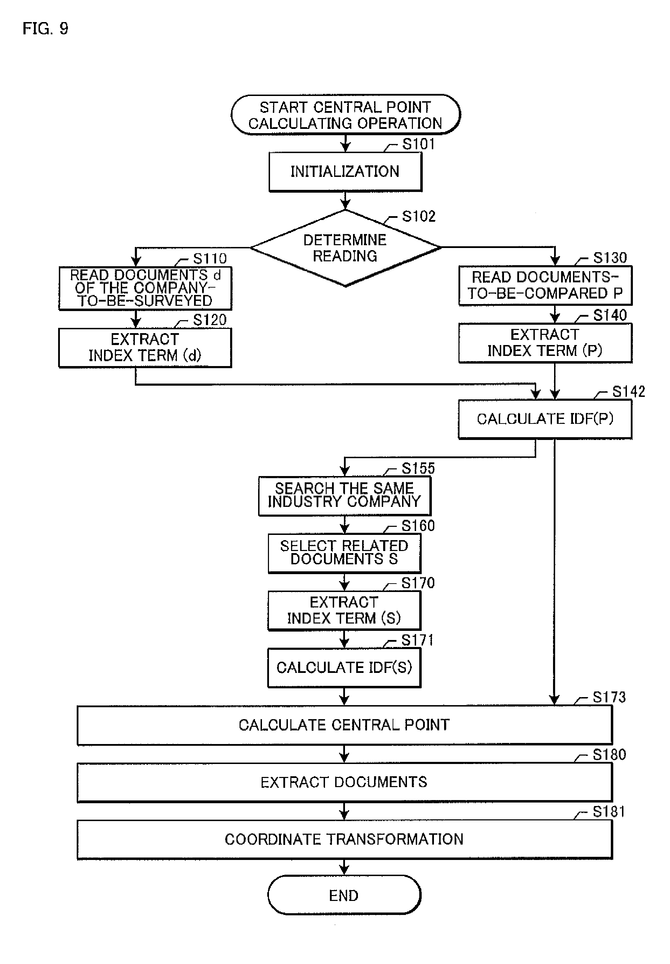

FIG. 8 is a diagram showing a hardware configuration of a document characteristic analysis device of the present invention. FIG. 9 is a flowchart showing the operation of the processing device 1 of the document characteristic analysis device.

Unlike the similar documents S for the index term extraction device, the related documents S for the document characteristic analysis device are not selected based on similarity. Thus, as shown in FIG. 8, the similarity calculation unit 150 illustrated in FIG. 2 is no longer necessary, and, therefore, the TF(d) calculation unit 121 or the TF(P) calculation unit 141 of FIG. 2 is also not required. Similarly, as shown in FIG. 9, the similarity calculation step S150 in FIG. 4 is no longer required, and, therefore, the TF(d) calculation step S121 or the TF(P) calculation step S141 in FIG. 4 is also not required.

Selection of the related documents S may be conducted, for instance, according to the conditions input with the extracting condition and other information input unit 230 of the input device 2. In other words, when searching for a company in the same industry as those of the company-to-be-surveyed based on the industry classification, foremost, the names of major corporations and their "standard industry classification" or other industry classifications are stored in the condition recording unit 310. Then, a same industry company search unit 155 searches for the name of the company belonging to the same industry as those of the company-to-be-surveyed. By using the searched company name as the key, the related documents S selection unit 160 searches the bibliographic data of the documents-to-be-compared P, to select the related documents S.

Incidentally, the related documents S selection unit 160 may further narrow down the related documents S under certain conditions from the document group of the same industry.

The related documents S selection unit 160 outputs the related documents S selected as described above to the index term (S) extraction unit 170 or the like. Upon receiving the input of the related documents S, the index term (S) extraction unit 170 extracts index terms (S), and sends them to the IDF(S) calculation unit 171 or the like. Based on the results of the IDF(P) calculation unit 142 and the IDF(S) calculation unit 171, the central point calculation unit 173 calculates the central point.

It is desirable that the coordinate value of the central point in the respective documents of the company-to-be-surveyed is an average value obtained by weighting the TF weight:

$$\rho(w_i) = TF(w_i; d) / \Sigma TF(w_i; d)$$

to the coordinate value of each index term $w_i$. However, it is not limited thereto, and a plain average value may also be used.

When there are enormous amounts of documents of the company-to-be-surveyed, it is preferable to narrow down the documents to representative documents and outputting these on the map so that it will be easier to comprehend the tendency as the document group of the company-to-be-surveyed. Thus, among the document-group-to-be-surveyed, documents having high similarity against the document-group-to-be-surveyed and documents having low similarity against the document-group-to-be-surveyed may be extracted by the document extraction unit 180.

When the similarity of each document in relation to the document-group-to-be-surveyed is determined, for instance, for each document d, those with a high average value $(1/d_N)\{DF(w_1, E0) + DF(w_2, E0) + \cdots + DF(w_{dN}, E0)\}$ of the number of hit documents DF $(w_i, E0)$ upon searching the document-group-to-be-surveyed with each index term $w_i$ are determined to be "similar", and those with a low average value are determined to be "non-similar" ($d_N$ represents the number of index terms in the document d). The extraction method may be, for instance, a method of extracting a fixed number in the ascending order and descending order of the average value, or, for example, a method that defines Z as a number obtained through dividing the said average value by the number of documents of the document-group-to-be-surveyed and then extracts documents that have Z greater than "average value of every Z + standard deviation of every Z" and documents that have Z less than "average number of every Z - standard deviation of every Z".

The narrowing to representative documents based on the determination of similarity described above can be used for narrowing the document-group-to-be-surveyed, as well as for narrowing upon selecting the related documents S. In other words, for each document of the document group of the same industry, the average value of the number of documents hits when searching the document group of the same industry regarding each index term, and documents are narrowed to documents having a high average value (similar) and documents having a low average value (non-similar) for selecting the related documents S. Incidentally, the narrowing to be performed upon selecting the related documents S may be based on the determination of similarity as described above, or by randomly extracting documents from a document group of the same industry, or based on IPC.

<5-3. Nature of Original Macro Map>

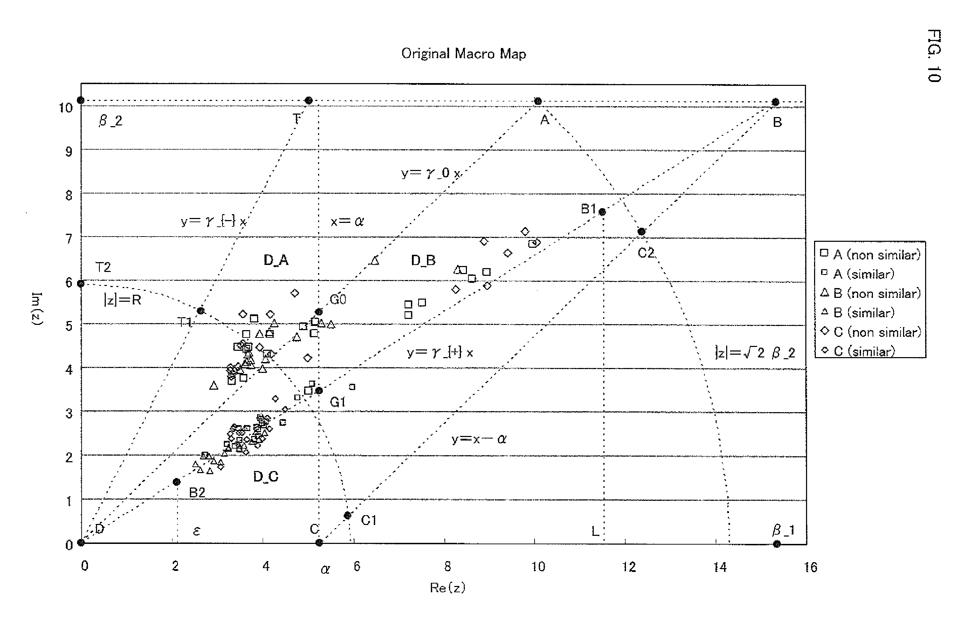

FIG. 10 is a diagram showing a specific example of a map before transformation (hereafter called an "original macro map") in which the central value of each document of the document-group-to-be-surveyed calculated by the document characteristic analysis device is output based on the value before performing transformation in the coordinate transformation unit 181. In FIG. 10, documents of three companies in the same industry were selected as the document-group-to-be-surveyed and the document characteristic of each company was represented. A plain average value was used as the central value of each document.

In this original macro map, coordinates of nearly all documents are distributed in an area above the straight line where $y = (\beta_2/\beta_1)x$ ($\beta_1$ is the maximum value ln N of the x coordinate based on the N number of documents of the documents-to-be-compared P, and $\beta_2$ is the maximum value ln N' of the y coordinate based on the N' number of documents of the related documents S). Among the above, documents with numerous original concept terms appear in the area that is more upper left than $y = x$ (this area is hereby defined as original concept area $D_A$), documents with numerous specialty terms appear in the area that is right of $x = \beta_1 - \beta_2$ (this area is hereby defined as specialty area $D_B$), and standard documents appear in the middle area (this area is hereby defined as standard area $D_C$). Thus, by knowing which area has many documents distributed, the tendencies of corporate documents can be comprehended.

The reason why it is possible to consider that documents with numerous original concept terms appear in the area that is more upper left than $y = x$ (original concept area $D_A$) is now explained. The change in the DF value upon adding vast amounts of documents to the related documents S can be classified into three categories; namely, those in which the increase in the DF value is equivalent to the increase in the number of documents, those in which the DF value hardly changes, and those in which the DF value increases drastically. The IDF change in each of the foregoing cases will be, no change, increase and decrease, respectively. Therefore, the index term distribution on the original micro map upon adding vast amounts of documents to the related documents S tends to migrate toward the direction of a straight line where $y = x$. Here, since the average of each document is taken, the tendency of approaching the straight line where $y = x$ is more evident. This tendency suggests that documents with numerous original concept terms will appear in the area above $y = x$.

Further, the reason why it is possible to consider that documents with numerous specialty terms appear in the area that is right of $x = \beta_1 - \beta_2$ (specialty area $D_B$) is now explained. When the average of the index term coordinates of the similar documents prescribed term area c and the index term coordinates belonging to the general term area d is calculated, it is considered that the x coordinate value of terminal point C ($\beta_1 - \beta_2$, 0) of the similar documents prescribed term area c will roughly be the maximum value. Therefore, standard documents will not appear in the area on the right of $x = \beta_1 - \beta_2$, and so documents in this area can be regarded as having numerous specialty terms.

As described above, the remaining area where $y \leq x$ and $x \leq \beta_1 - \beta_2$ (standard area $D_C$) becomes the standard document area.

Further, the reason why the coordinates of most documents are distributed in the area above the straight line where $y = (\beta_2/\beta_1)x$ is explained. Since the coordinate of the central value of each document takes on an average value of the index term, it is possible to hypothecate uniformity (DF(P) = N/k, DF(S) = N'/k, k≥1). From this hypothecation of uniformity and definition of planar coordinates (x, y) = ($<IDF(P)>_w$, $<IDF(S)>_w$), $y = (\beta_2/\beta_1)x + (\alpha/\beta_1)\ln k$ is derived. Thereby, $y \geq (\beta_2/\beta_1)x$ is realized in k that satisfied k≥1.

According to the tendencies described above, it will be possible to use the document characteristic analysis device of the present invention to analyze the general positioning and tendencies of the documents-to-be-surveyed without a person reading the contents of the document-group-to-be-surveyed or related documents. In other words, among the corporate document group as the document-group-to-be-surveyed, it will be possible to know whether a specific document is a standard document in the industry, whether it is a document having a specialized character, or whether it is a document having an original character. Further, among the corporate document group as the document-group-to-be-surveyed, it will be possible to detect the standard document, detect a document having a specialized character, or detect a document having an original character. Further, the tendencies of the overall document-group-to-be-surveyed can be evaluated, such as a document group with many standard documents, a document group with many documents having originality, or a document group with many documents having specialty.

According to FIG. 10, documents of Company A and Company C tend to be documents with numerous specialty terms, and documents of Company B tend to be documents with numerous original concept terms. However, since the differences between documents to be surveyed are small and points are concentrated in a narrow range, it may be difficult for inexperienced observers to read the tendencies of the document-group-to-be-surveyed. Hence transformation using a conformal mapping, described below, is performed.

<5-4. Modified Example 1 of Document Characteristic Analysis Device (Selection of Related Documents)>

In the foregoing example, although a case was explained where a document group of a company belonging to the same industry as those of the company-to-be-surveyed or a further narrowed document group was used as the related documents S, the related documents S are not limited to the above. For instance, a document group belonging to the same technical field as those of the document group of the company-to-be-surveyed may be retrieved with IPC and be used as the related documents S.

In the case of retrieving a document group belonging to the same field based on IPC, in the processing device 1 shown in FIG. 8, an IPC extraction unit (not shown) is provided, and this IPC extraction unit is used to extract IPC from the bibliographic data of all patent documents of the company-to-be-surveyed. When several IPCs are extracted, only a prescribed number of upper-ranked IPCs in the number of corresponding documents are extracted. And, with the extracted IPC as the key, the related documents S selection unit 160 searches the bibliographic data of the documents-to-be-compared P, and the related documents S are selected thereby. This selecting condition, for example, is input with the extracting condition and other information input unit 230 of the input device 2.

As a result of using such selected related documents S, it will be possible to analyze the positioning and tendencies in the documents in the same technical field as those of the documents of the company-to-be-surveyed.

<5-5. Modified Example 2 of Document Characteristic Analysis Device (Acquisition Method 1 of Document-Group-to-be-Surveyed) >

In the foregoing example, although a case was explained where a document group of the company-to-be-surveyed was used as the document-group-to-be-surveyed, the document-group-to-be-surveyed are not limited to the above. For instance, a document group belonging to the same technical field among an unspecified patent document groups may be retrieved with IPC or the like and be used as the document-group-to-be-surveyed.

For instance, considered is a case of analyzing a document group filed in 2000 and given a certain IPC as the document-group-to-be-surveyed. As the related documents S, for example, a document group filed between 1980 and 1999 and given the same IPC as the foregoing IPC is selected. The document-group-to-be-surveyed are analyzed with the other conditions being the same.

As a result of the above, it is possible to evaluate whether the filing trend in 2000 in the technical field given such IPC shifted toward an original direction, whether it shifted toward a specialized direction, or whether it remained within a scope that can be considered standard in comparison to the applications of the past 20 years. Further, among the applications filed in 2000 in the technical field given such IPC, it is possible to evaluate whether a specific application is of an original nature, whether it is of a specialized nature, or whether it remained within a scope that can be considered standard in comparison to the applications of the past 20 years. Moreover, among the applications filed in 2000 in the technical field given such IPC, it is possible to detect an application having an original nature, an application having a specialized nature or an application that remained within a scope that can be considered standard in comparison to the applications of the past 20 years.

Further, the analysis of applications filed in 2000 in the technical field given such IPC can also be compared with the analysis used in other document-group-to-be-surveyed.

For example, the filing period of the document-group-to-be-surveyed and the related documents S are set to be 2000 and between 1980 and 1999, respectively, as with the foregoing case in order to perform another analysis on a separate IPC. As a result of comparing different IPCs, it will be possible to see in which field the shift in technology is fast, the technology has matured, and so on.

Further, for instance, a document group filed in 2001 and given a certain IPC is used as the document-group-to-be-surveyed, and a document group filed between 1981 and 2000 and given the same IPC as the foregoing IPC is used as the related documents S in order to perform the analysis. This analysis is compared with the analysis in the case of targeting the year 2000 as the subject of survey. Thereby, the filing trend in 2000 and the filing trend in 2001 in the same technical field can be compared.

<5-6. Modified Example 3 of Document Characteristic Analysis Device (Acquisition Method 2 of Document-Group-to-be-Surveyed)>

Further, for example, considered is a case of analyzing a document group given a certain IPC (e.g., designated up to a subgroup such as A61K6/05) as the document-group-to-be-surveyed. A document group given an IPC (e.g., designated up to a main group such as A61K6/) corresponding to the upper hierarchy of such IPC is selected as the related documents S. The document-group-to-be-surveyed are analyzed with the other conditions being the same.

Thereby, it will be possible to evaluate whether a specific document among the document-group-to-be-surveyed is a document having a unique nature (many original concept terms, many specialty terms, etc.) or whether it is a document that remains within a scope that can be considered standard in relation to the document group of the upper hierarchy of IPC. Further, it will also be possible to detect a document having a unique nature (many original concept terms, many specialty terms, etc.) or a document that remains within a scope that can be considered standard in relation to the document group of the upper hierarchy of IPC among the document-group-to-be-surveyed.

<5-7. Modified Example 4 of Document Characteristic Analysis Device (Acquisition Method 3 of Document-Group-to-be-Surveyed)>

Further, for example, a group of documents highly similar to a certain document d may be extracted by means of similarity computation as explained in 3-2 above, and used as the group of documents to be surveyed. By this means, positioning of a certain document d in an arbitrary similar document group S can be evaluated through comparison with a group of documents which are highly similar to the document in question d (the group of documents to be surveyed). In this case, a document group including documents having intermediate similarity to a certain document d may be extracted by means of similarity computations as explained in 3-2 above, and this may be used as the similar document group S. By this means, tendencies of the group of documents which are highly similar (the document-group-to-be-surveyed) and their positioning in the group of documents with intermediate similarity (the similar document group S) can be analyzed.

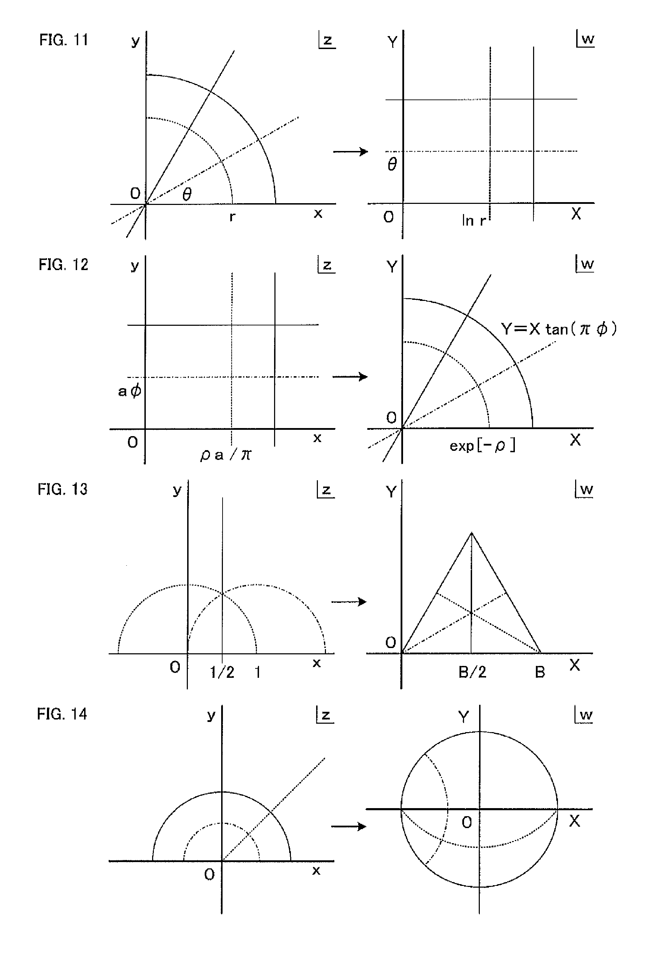

<6. General Explanation of Conformal Mapping: Fig. 11 through Fig. 14>

Below, the original micro maps and original macro maps explained above are further explained with reference to the specific method of transformation by the coordinate transformation unit 181. First conformal mapping is explained.

When a mapping is given as a function of complex variables for a coordinate transformation of two real numbers $(x, y) \rightarrow (X, Y)$

$$z \rightarrow w = f(z, z^*), \text{ (where } z = x+iy, z^* = x-iy, w = X+iY)$$

in the defined domain of the function f, functions which satisfy the Cauchy-Riemann differential rule $\partial f/\partial z^* = 0$ are called regular functions, and can be represented by $w = f(z)$ (and therefore there may not always exist an $f(z)$ for a coordinate transformation of two real numbers).

Among regular functions, those functions in particular which are univalent (functions which have different mapping values for different values of z), and which can be expressed locally as the ratio of regular functions, are called conformal mappings $F(z)$.

This conformal mapping is equivalent to a fixed nonzero value for the ratio of line segment lengths (mapping/preimage) along a curve ($|df/dz|$ = fixed value $\neq 0$), and is equivalent to two curves, intersecting at the same point and having tangents, also having tangents in the mapping and making the same angle.

By means of such conformal mapping, similarity of infinitesimal triangular forms is preserved, and so an orthogonal curvilinear coordinate system is transformed into an orthogonal curvilinear coordinate system.

<6-1. Linear transformations and mirror images>

A conformal mapping which is a linear transformation is given by the following.

$$z \rightarrow w = F(z) = c_0 z + c_1$$

In this linear transformation (if using the representation $c_0 = |c_0|Exp[i\theta_c])< c_0$ provides a $|c_0|$-fold magnification and rotational movement through $\theta_c$ about the origin, and $c_1$ provides parallel translation.

Below, it is assumed that $z = rExp[i\theta]$.

Moreover, the mirror image is also a conformal mapping, and for example is given by:

$z \to z^*$ for a mirror image about the real axis,

$z \to -z^*$ for a mirror image about the imaginary axis, and

$z \to 1/z^*$ for a mirror image about the unit circle $|z| = 1$.

<6-2. Logarithmic transformations>

A conformal mapping which is a logarithmic transformation is given as follows.

$$z \to w = F(z) = \ln(z) = \ln|z| + iArg\ z$$

Here Arg z is the argument Arctan(y/x) of $z = x+iy$.

As shown in Fig. 11, this logarithmic transformation maps the z plane to the rectangular region $0 < Im(w) < 2\pi$. For example, mappings such as the following result:

circle centered at the origin with radius $r = \sqrt{(x^2+y^2)} \to$ vertical line $Re(w) = X = \ln r$ parallel to $Re(w) = 0$; and, straight line passing through origin with argument $\theta = Arctan(y/x) \to$ horizontal line $Im(w) = Y = \theta$ parallel to $Im(w) = 0$.

<6-3. Exponential transformation>

A conformal mapping which is an exponential transformation is given as follows.

$$z \to w = F(z) = Exp[-\pi z^*/a], \ (where\ Re\ z > 0,\ 0 < Im\ z < a)$$

As shown in Fig. 12, this exponential transformation maps a rectangular region of width a to the interior of a semicircle of radius 1 ($Im(w) > 0$). For example, mappings such as the following result:

horizontal line $Im(z) = ia\phi$ (where $0 < \phi < 1$) $\to w = Exp[i\pi\phi]$ (the straight line $Y = Xtan(\pi\phi)$ with slope $tan(\pi\phi)$); and, vertical line $Re(z) = \rho a/\pi$ (where $0 < \rho$) $\to |w| = Exp[-\rho]$ (a circle of radius $e^{-\rho}$).

<6-4. Power transformation>

A conformal mapping which is a power transformation is given as follows.

$$z \to w = F(z) = (az)^\nu$$

If the result of $\nu$ equal divisions of the z plane into fan-shaped regions with infinite radius $\infty$ and center angle $2\pi/\nu$ is regarded as $l/\nu$ of the z plane, then this is a multivalued function which maps $1/\nu$ of the z plane onto one w plane. For example, when $\nu = 2$, then half of the z plane is mapped onto the entire w plane. And, if $a = Exp[-i\phi]$, then this is a compound transformation with the above linear transformation, so that there is a further right-rotation through angle $\phi$ about the origin.

<6-5. Schwarz-Christoffel transformation>

A conformal mapping which is a Schwarz-Christoffel transformation (hereafter "SC transformation") transforms an arbitrary circle interior or half-plane into an n-tagonal interior. If the interior angles of the n-tagon are $\alpha_j\pi$ (where $j = 1, 2, ..., n$), and the preimage of each vertex is $z_j$, then the SC transformation is as follows.

$$z \rightarrow w = F(z) = c_1 \int^z \Pi_{1 \leq j \leq n}(t-z_j)^{\alpha j - 1} dt + c_2$$

(Here, when $z_n = \infty$, products are taken up to n-1. Also, $c_1$ and $c_2$ are arbitrary constants which give the rotation in the w plane and parallel movement respectively.)

For example, if $c_1 = 1$ and $c_2 = 0$, in order to transform a circle interior containing three points on the z real axis $(0, 1, \infty)$ (that is, an upper half-plane) into a regular triangle shape, the following is used:

$$F(z) = 3z^{1/3} \ F21(1/3, \ 2/3; \ 4/3; \ z)$$

$$= B(1/3, \ 1/3; \ z)$$

(Here F21 is a Gauss hypergeometric function. B(p, q; z) is an incomplete beta function, equal to $\int_0^z t^{p-1}(1-t)^{q-1} dt$.)

As shown in Fig. 13, by means of this SC transformation, the upper half of the z plane is mapped to the interior of a regular triangle on the w plane, with vertices at the three points

$$F(0) = 0$$

$$F(1) = B(1/3, \ 1/3; \ 1)$$

$$F(\infty) = F(1) * Exp(i\pi/3)$$

and the length of one edge of which is F(1). Among incomplete beta functions B(p, q; z), those for which z = 1 are called beta functions.

By this means, the following mapping is performed:

$$|z| = 1 \rightarrow Y = -(X - B(1/3, \ 1/3))/\sqrt{3}$$

$$|z-1| = 1 \rightarrow Y = X/\sqrt{3}$$

$$0 < Re(z) < 1 \rightarrow Y = 0$$

where 0 < X < B(1/3, 1/3)

$$1 < Re(z) \rightarrow Y = -(\sqrt{3}) * (X - B(1/3, \ 1/3))$$

where B(1/3, 1/3)/2 < X < B(1/3, 1/3)

$$\mathrm{Re}(z)<0 \;\rightarrow\; Y \;=\; (\sqrt{3})*X$$

where $0 < X < B(1/3, 1/3)/2$

$$\mathrm{Re}(z)=1/2 \;\rightarrow\; X \;=\; B(1/3, 1/3)/2$$

<6-6. Hyperbolic coordinate transformation>

A conformal mapping which is a hyperbolic coordinate transformation is given as follows.

$$z \;\rightarrow\; w \;=\; F(z) \;=\; (z-z_0)/(z-z_0^{*}), \;\; (\text{where Im } z_0>0)$$

As shown in Fig. 14, this hyperbolic coordinate transformation maps the region of the upper half of the z plane Im z > 0 to the interior of a circle of radius 1 in the w plane, |w|<1. For example, if $z_0$ = ia, then mapping is performed as follows:

Argument $\theta$ = half-line of Arctan (Y/x) $\rightarrow$ circle with center at (0, tan $\theta$), circle of radius sec $\theta$ (secant)
circle of radius r = $\sqrt{(x^2+y^2)}$ $\rightarrow$ circle with center at $((r^2+a^2)/(r^2-a^2), 0)$, and radius $2ar/|a^2-r^2|$ ; where r = a is the straight line Re(w) = 0.

<6-7. Joukowski transformation (elliptical transformation)>

A conformal mapping which is a Joukowski transformation is given as follows.

$$z \;\rightarrow\; w \;=\; F(z) \;=\; z+a^2/z$$

This Joukowski transformation is a divalent function which maps the exterior of a circle of radius a to the w plane, and which also maps the circle interior to the w plane.

<7. Original Macro Map Transformations>

First, a case is explained in which an original macro map created using the above-described document characteristic analysis device is transformed using a conformal mapping. As stated in 5-3 above, this original macro map can be divided into the following three areas:

Original concept area $D_A$: $(\gamma\text{-}x \geq)$ $y \geq x$, $x \leq \alpha$
Specialty area $D_B$: $\gamma_0 x \geq y \geq \gamma_+ x$, $\alpha < x$
Standard area $D_C$: $\gamma_0 x \geq y \geq \gamma_+ x$, $x \leq \alpha$

Here, unless stated otherwise, the original macro map is selected such that $-\gamma_+ = \beta_2/\beta_1$, $\gamma_0 = 1$, $\gamma\text{-} = 2$; these values of $\gamma_i$ (where i = 0, $\pm$) are left arbitrary when considering modification of boundaries (and also taking into consideration application to micro-planes), and the argument $\theta_i$ = Arctan $\gamma_i$ of the straight line corresponding to each slope $\gamma_i$ is defined. There are also cases in which the line x = $\alpha$ dividing the two areas $D_A$, $D_C$ and the specialty area $D_B$ is a circle of radius R.

<7-1. Definitions of fundamental points in an original macro map>

The following points in an original macro map are defined as fundamental points.
T : Point of intersection of the straight line y = $\gamma$-x and the straight line y = $\beta_2$ ($\beta_2/\gamma$-, $\beta_2$)
A: Point of intersection of the straight line y = $\gamma_0$X and the straight line y = $\beta_2$ ($\beta_2/\gamma_0$, $\beta_2$)
B: Point of intersection of the straight line y = x-$\alpha$ and the straight line y = $\beta_2$ ($\beta_1$, $\beta_2$)
C: x-intercept of the straight line y = x-$\alpha$ ($\alpha$, 0)

D: Origin of the preimage plane (0, 0)

Cl: Points of intersection of the circle with radius R and the straight line $y = x-\alpha$ (R is defined below) ($\{\surd(2R^2-\alpha^2)+\alpha\}/2$, $\{\surd(2R^2-\alpha^2)-\alpha\}/2$)

T1: Points of intersection of the circle with radius R and the straight line $y = \gamma-x$ ($R/\surd(1+\gamma^{-2})$, $\gamma-R/\surd(1+\gamma^{-2})$ )

T2: y-intercept of the circle with radius R (0, R)

G0: Point on the straight line $y = \gamma_0 x$ at the vertical line $x = \alpha$ ($\alpha$, $\alpha\gamma_0$)

G1: Point on the straight line $y = \gamma+x$ at the vertical line $x = \alpha$ ($\alpha$, $\alpha\gamma+$)

B1: Point on the straight line $y = \gamma+x$ at the vertical line $x = L$ (L, $L_{\gamma+}$) (L is explained below)

B2: Point on the straight line $y = \gamma_+ x$ at the vertical line $x = \in$ ($\in$, $\in\gamma_+$) ($\in$ is explained below)

C2: Point of intersection of the circle with radius $(\surd2)\beta_2$ and the straight line $y = x-\alpha$ ($\surd\{(\beta_2)^2- (\alpha/2)^2+\alpha/2$, $\surd\{(\beta_2)^2-(\alpha/2)\}^2-\alpha/2$)

In the above,

$\in$: Threshold value of the standard area $D_C$ (lower limit of |z| or lower limit of Re(z))

R: Radius dividing the standard area $D_C$ and specialty area $D_B$

L: Threshold value of specialty area $D_B$ (upper limit of |z| or upper limit of Re(z))

As specific values, the following or similar are used:

R = $\alpha\surd2$, $(3/2)\alpha$, $\alpha$

$\in$ = $(1/5)\beta_2$, $(2/5)\alpha$, $(\beta_2/\pi)$ ln2 (as the length of an edge of a rectangular region), or $\surd\alpha$, $\surd R$ (as the radius of a fan-shaped region)

L = $\beta_1$, $(4/5)\beta_1$, $(\surd2)\beta_2/\surd\{1+\gamma_+^2\}$, x coordinate of C2

However, values are not confined to these, and there are cases in which values are determined according to the requirements of the transformation (see discussion below).

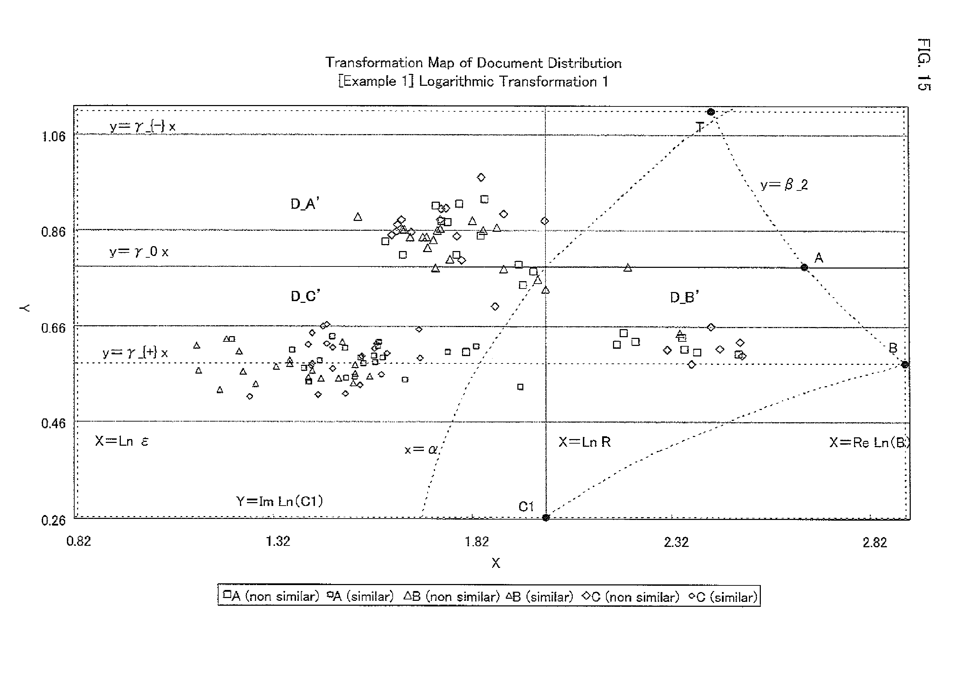

<7-2. Original macro map transformation example 1 (logarithmic transformation 1): Fig. 15>

First an example is explained in which w = F(z) = Ln(z), described above in 6-2, is applied. In this transformation, mapping is performed such that:

straight line $y = mx$ ($m = \gamma \pm, \gamma_0$) $\rightarrow$ horizontal line Y = Arctan m

straight line $y = x-\alpha \rightarrow$ curved line Exp [2X] = $[\alpha/(cosY-sinY)]^2$

vertical line $x = \alpha \rightarrow$ curved line Exp [2X] = $(\alpha/cosY)^2$

horizontal line $y = \beta_2 \rightarrow$ curved line Exp[2X] = $(\beta_2/sinY)^2$

circles |z| = R, |z| = $\in$ $\rightarrow$ vertical lines X = ln R, X = ln $\in$

The original macro map and the boundary lines of the three areas in the mapping for this transformation can be expressed as vertical lines and horizontal lines as follows, utilizing the character of the logarithmic transformation which maps the z plane to a rectangular region.

First, if the region of point distribution in the z plane is the region surrounded by the straight line $y = [\{\surd(2R^2-\alpha^2)-\alpha\}/\{/\surd(2R^2-\alpha^2)+\alpha\}]x$ passing through the origin and C1, the straight line $y = \gamma-x$ passing through the origin and T, the circle $\surd(x^2-y^2) = \surd(\beta_1^2+\beta_2^2)$ centered on the origin and passing through B, and the circle $\surd(x^2+y^2) = \in$ centered on the origin and with radius $\in$, then this region is mapped to a rectangular region on the w plane defined by:

$$\mathrm{Im\ Ln(C1)\ <\ Y\ \leq\ Arctan[\gamma_-]}$$

$$\mathrm{Ln\ \in\ \leq\ X\ \leq\ Re\ Ln(B)\ =\ Ln}\surd(\beta_1{}^2+\beta_2{}^2)$$

If the interior of this rectangular region is divided in four by the straight lines Y = Arctan $[\gamma_0]$ (= $\pi/4$ for $\gamma_0 = 1$) and X = ln R, corresponding to the straight line $y = \gamma_0 x$ and the circle |z|= R in the z plane, then the areas

original concept area $D_A$' : X < Ln R, Y $\geq$ Arctan$[-\gamma_0]$

specialty area $D_B$' : ln R $\leq$ X, Y < Arctan$[\gamma_0]$

standard area $D_C$': X < Ln R, Y < Arctan $[\gamma_0]$

can be obtained.

Fig. 15 shows an example of the w plane obtained in original macro map transformation example 1 (logarithmic transformation 1). In this example, $R = \alpha\sqrt{2}$ and $\in = \sqrt{\alpha}$. Compared with the original macro map, the document distribution is such that the original concept area $D_A'$, specialty area $D_B'$, and standard area $D_C'$ can be clearly discriminated.

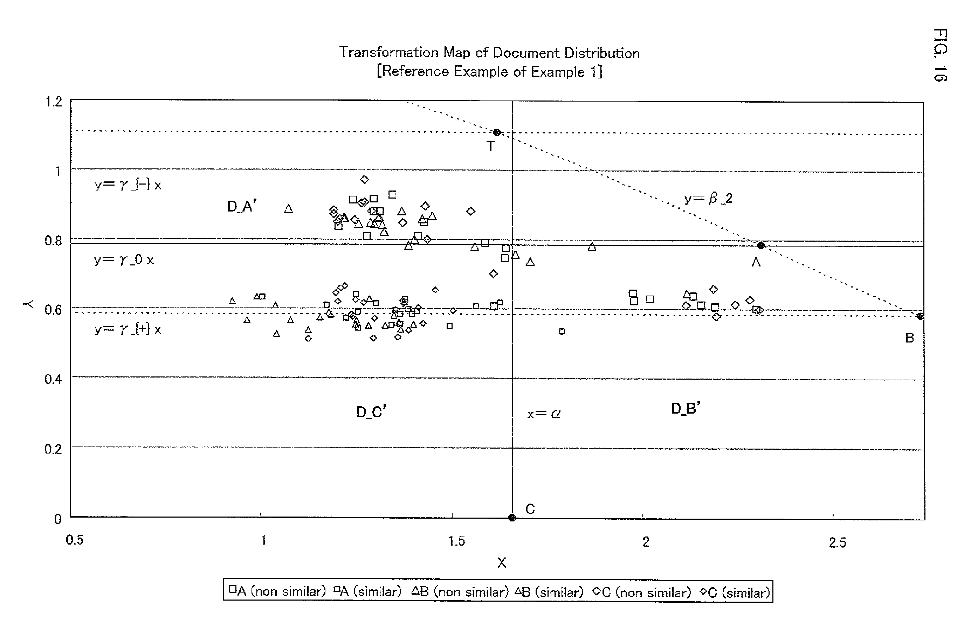

Fig. 16 shows an example of the w plane obtained in a reference example of original macro map transformation example 1. Only the real part image is taken to be $X = \ln x$ (and therefore this is a non-regular transformation; in Fig. 15, the real part image was $X = \ln\sqrt{(x^2+y^2)}$), $\in = (2/5)\alpha$, and the range in the horizontal axis direction of the rectangular region was taken to be $\ln \in \le X \le \ln \beta_1$; otherwise the image is the same as in Fig. 15. In this case, the boundary line between the standard area $D_C'$ and the specialty area $D_B'$ is $X = \ln\alpha$.

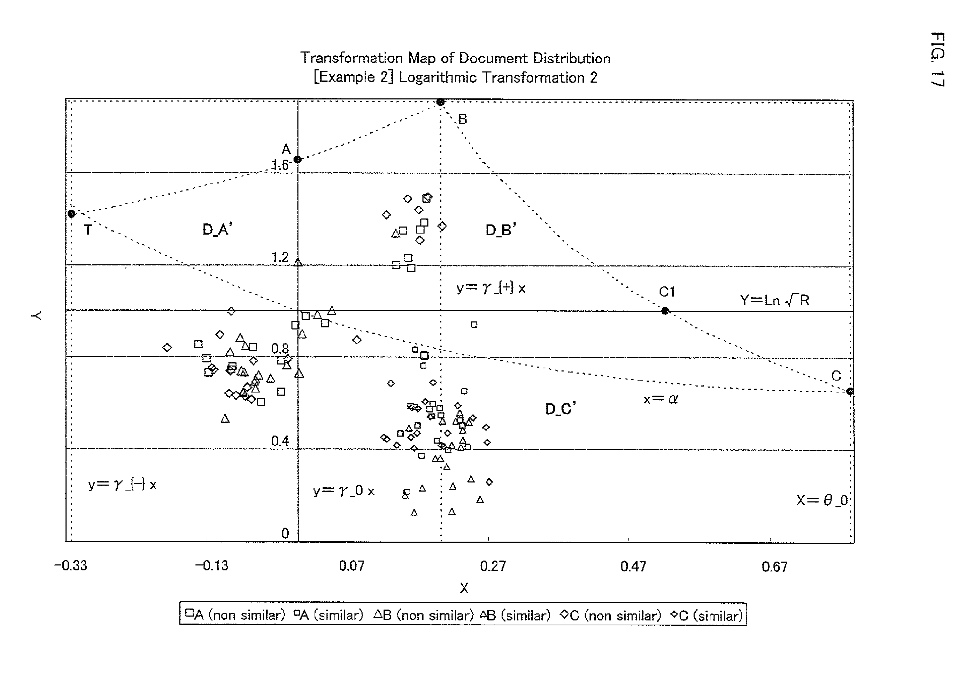

<7-3. Original macro map transformation example 2 (logarithmic transformation 2): Fig. 17>

Next, an example is explained in which

$$w = F(z) = i\, Ln(z/\epsilon) + \theta_0, \text{ where } \theta_0 = Arctan\ \gamma_0$$

is applied. This transformation involves performing the same logarithmic transformation as in 7-2 above, and then rotating by $\pi/2$ about the origin, parallel-translating the origin to $(-\theta_0, Ln \in)$. That is, mapping is performed such that:

straight line $y = mx$ ($m = \gamma_\pm$, $\gamma_0$) → vertical line $X = \theta_0$-Arctan m
straight line $y = x$-$\alpha$ → curved line $Y = (1/2)Ln[(\alpha/\in)^2/\{1\text{-}sin2(\theta_0\text{-}X)\}]$
vertical line $x = \alpha$ → curved line $Y = Ln[(\alpha/\in)/|cos(\theta_0\text{-}X)|]$
horizontal line $y = \beta_2$ → curved line $Y = Ln[(\beta_2/\in)/ |sin (\theta_0\text{-}x)|]$
circles $|z| = R$, $|z| = \in$ → horizontal lines $Y = Ln(R/\in)$, $Y = 0$

The original macro map and the boundary lines of the three areas in the mapping for this transformation can be given as vertical lines and horizontal lines as follows, utilizing the character of a logarithmic transformation to map the z plane to a rectangular region.

First, if the point distribution region in the z plane is the region surrounded by:

horizontal line $y = 0$
straight line $y = \gamma$-x passing through the origin and T
circle $\sqrt{(x^2+y^2)} = \sqrt{(\beta_1^2+\beta_2^2)}$ centered on the origin and passing through B
circle $\sqrt{(x^2+y^2)} = \in$ centered on the origin with radius $\in$ then this region is mapped to a rectangular region in the w plane defined by

$$\theta_0 - Arctan\ \gamma_- < X \le \theta_0$$

$$0 \le Y \le Re\ Ln(B/\epsilon)$$

If the interior of this rectangular region is divided in four by straight lines $X = 0$, $Y = Ln(R/\in)$ corresponding to the straight line $y = \gamma_0 x$ and the circle $|z| = R$ in the z plane, then the following are obtained:

original concept area $D_A^1$: $X < 0$
specialty area $D_B'$ : $0 \le X < \theta_0$, $Y > Ln(R/\in)$
standard area $D_C'$: $0 \le X < \theta_0$, $Y \le Ln(R/\in)$

Fig. 17 shows an example of the w plane obtained by original macro map transformation example 2 (logarithmic transformation 2). In this example, $R = \alpha\sqrt{2}$ and $\in = \sqrt{R}$. Compared with the original macro map, the document distribution is such that the original concept area $D_A'$, specialty area $D_B'$, and standard area $D_C'$ can be clearly discriminated.

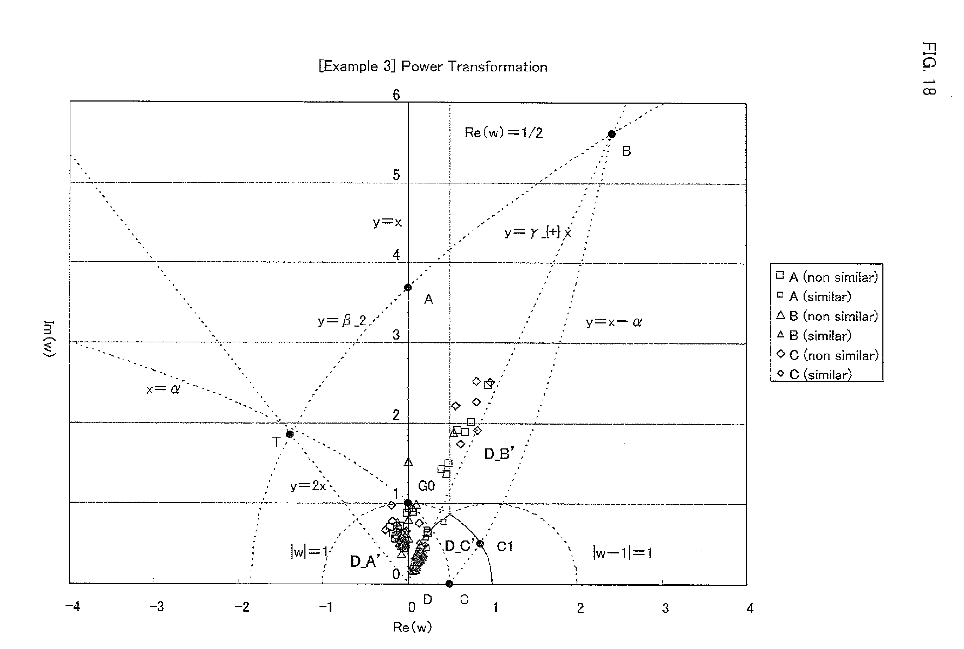

<7-4. Original macro map transformation example 3 (power transformation: Fig. 18>

Next, an example is explained of application of the power transformation

$$w = F(z) = (z/R)^\nu$$

where $\nu = \pi/(2 \text{ Arctan } \gamma_0)$.

When $\gamma_0 = 1$, $\nu = 2$. In this case, mapping is performed such that

straight line $y = mx$ ($m = \gamma_\pm$) $\rightarrow$ straight line $Y = 2mX/(1-m^2)$ straight line $y = x \rightarrow$ vertical line $Re(w) = 0$

straight line $y = x-\alpha \rightarrow$ curved line $Y = [X^2-(\alpha/R)^4]/[2(\alpha/R)^2]$

vertical straight line $x = \alpha \rightarrow$ curved line $Y = (2\alpha/R)\sqrt{(\alpha/R)^2-x}$

horizontal line $y = \beta_2 \rightarrow$ curved line $Y = (2\beta_2/R)\sqrt{(X+(\beta_2/R)^2}$

circle $|z| = R \rightarrow$ circle $|w| = 1$

The boundary lines of the three areas in the w plane in this transformation are given as follows.

First, if the point distribution region in the z plane is $x > 0$, $y > 0$, then this region is mapped to the region $Im(w) > 0$ in the w plane.

If the boundary discriminating the standard area $D_C$ and the specialty area $D_B$ in the z plane is defined by the circle $|z| = R$, then the boundary between the standard area $D_C'$ and the specialty area $D_B'$ in the w plane is the circle $|w| = 1$. Further, if the boundary between the standard area $D_C'$ and the original concept area $D_A'$ in the w plane is the circle $|w-1| = 1$, and the boundary between the original concept area $D_A'$ and the specialty area $D_B'$ is given by the vertical line $Re(w) = 1/2$ passing through the points of intersection of the circles $|w| = 1$ and $|w-1| = 1$, then the following are obtained:

standard area $D_C'$ : inside area surrounded by the circle $|w| = 1$, the circle $|w-1| = 1$, and the straight line $Im(w) = 0$

original concept area $D_A'$: outside the circle $|w-1| = 1$, where $Re(w) \leq 1/2$

specialty area $D_B'$: outside the circle $|w| = 1$, where $Re(w) > 1/2$

Fig. 18 shows an example of the w plane obtained in original macro map transformation example 3 (power transformation). In this example, $\nu = 2$ and $R = \alpha\sqrt{2}$. Compared with the original macro map, a document distribution is obtained such that the original concept area $D_A'$, specialty area $D_B'$, and standard area $D_C'$ can easily be discriminated.

<7-5. Original macro map transformation example 4 (SC transformation)>

In transformation example 4, after performing (linear transformation and) power transformation, SC transformation is applied. In 7-5-1, a method of transformation from a polygonal region is described; after discussing the geometric properties relating to region division in 7-5-2 through 7-5-5, an example of application to an original macro map is presented in 7-5-6.

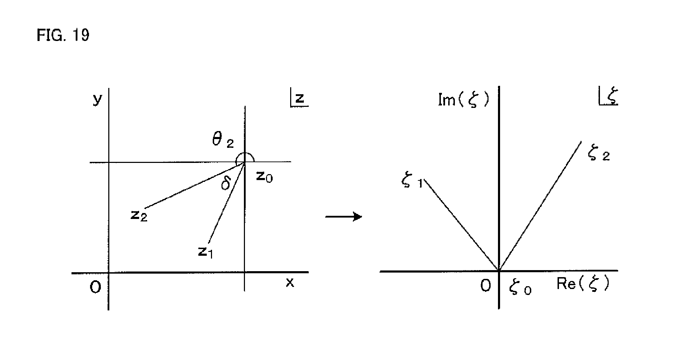

<7-5-1. Method of upper-half-plane construction from polygonal region and SC transformation: Fig. 19>

As shown in Fig. 19, a complex coordinate z is defined by an arbitrary (inhomogeneous) linear transformation (standardization, normalization, and the like are also included therein):

$$(x, y) \rightarrow (x', y') \equiv z$$

When seeing the interior (front) of the region from the vertex $z_0$, let a vertex $z_1$ be positioned on the left side at distance $\lambda_1$ and a vertex $z_2$ be positioned on the right side at distance $\lambda_2$, and let the interior angle made be the three points be $\delta$. That is, supposing that the following relations obtain

$$z_2 - z_0 = \lambda_2 \text{ Exp}[i\theta_2]$$

$$z_1 - z_0 = \lambda_1 \text{ Exp}[i(\theta_2+\delta)]$$

(if the roles of $z_1$ and $z_2$ are to be reversed, a mirror transformation may be performed in advance). Here $\theta_2$ is the

argument of $z_2$.

A regular transformation (power transformation) of this z coordinate is performed:

$$z \rightarrow \zeta : \zeta = [Exp\{-i\phi\}(z-z_0)]^{\nu}$$

Here $\phi$ and $\nu$ are in the ranges

$$(\theta_2+\delta) - \pi/\nu = \phi_{min} \leq \phi \leq \phi_{max} = \theta_2$$

$$0 < \nu \leq \nu_{max} = \pi/\delta$$

At this time, the $\zeta$-plane image $\{\zeta_0, \zeta_2, \zeta_1\}$ of the three points $\{z_0, z_2, z_1\}$ are such that $\zeta_0 = 0$ is clearly satisfied, and the angle $\angle\zeta_1\zeta_0\zeta_2$ looking out from $\zeta_0$ onto the region bounded by $\zeta_1$ and $\zeta_2$ has maximum value $\pi$ when $\nu = \nu_{max} = \pi/\delta$. Here, when $\phi = \phi_{max} = \theta_2$, $\zeta_2 > Re\zeta_2 > 0$ is satisfied, and when $\phi = \phi_{min} = (\theta_2+\delta)-\pi/\nu$, $\zeta_1 = Re\zeta_1 < 0$ is satisfied, so that in both cases $\zeta$ is limited to the upper half-plane.

From the formula for the SC transformation of 6-5, a transformation which maps the interior of the circle passing through these three points $\zeta_i$ to the region of the interior of a regular triangle is:

$$w = c_1 \int^{\zeta}[t(\zeta_2-t)(\zeta_1-t)]^{-2/3} dt + c_2$$

$$= B(1/3, 1/3; p(\zeta))$$

where

$$p(\zeta) = \zeta(1-\xi)/(\zeta_2-\xi\zeta) , \quad \xi = \zeta_2/\zeta_1$$

and the following are selected:

$$c_1 = \zeta_1[\xi(1-\xi)]^{1/3}$$

$$c_2 = 0$$

In the above, a power transformation was used to construct an upper half-plane ($\zeta$ plane); but this can be similarly accomplished using a logarithmic transformation. In general, when an upper half-plane is given, equal division into three regions (a maximum six regions) is possible as follows.

$p(\zeta)$ has the property of scale invariance, $p(c\zeta) = p(\zeta)$, so that in the transformation $z \rightarrow \zeta$, multiplication by a constant c results in the same result in the $p(\zeta)$ plane. In the w plane also, the difference appears only as a constant multiplier $c_1$, and so if the value of $c_1$ is adjusted accordingly, the same result is obtained.

<7-5-2. Division of $\zeta$ plane into regions>

Circles $\Gamma_c$ with radius $R_c$ are considered, centered on four points $\zeta_c$ (c = a, s, t, u) determined by the three points $\zeta_1, \zeta_2, (\zeta_0 = 0)$ in the $\zeta$ plane,

$$\zeta_a = i\eta^*\zeta_1 \; / \; \mathrm{Im}(2\eta)$$

$$\zeta_s = \zeta_1 \; / \; (1-|\eta|^2)$$

$$\zeta_t = \zeta_1 \; (\eta^*-1) \; / \; \mathrm{Re}(2\eta-1)$$

$$\zeta_u = \zeta_1\eta^* \; / \; (1-|\eta-1|^2)$$

(where $\eta = 1 - \zeta_1/\zeta_2$
where $\eta^*$ is the mirror image about the real axis of $\eta$ (from the above general discussion it is clear that $\zeta_2 \neq 0$):

$$\Gamma_a: \; R_a = |\zeta_a|$$

where, when $\mathrm{Im}\,\eta = 0$, straight line $\mathrm{Im}(\zeta\zeta_1{}^*) = 0$

$$\Gamma_s: \; R_s = |\eta||\zeta_s|$$

$$= |\zeta_1||\zeta_2||\zeta_2-\zeta_1| \; / \; ||\zeta_2-\zeta_1|^2-|\zeta_2|^2|$$

where, when $|\eta| = 1$, straight line $2\mathrm{Re}\,(\zeta\zeta_1{}^*) = |\zeta_1|^2$

$$\Gamma_t: \; R_t = [|\zeta_t|^2 + |\zeta_1|^2/ \; \mathrm{Re}(2\eta-1)]^{1/2}$$

where, when $\mathrm{Re}(\eta) = 1/2$, straight line $-2\mathrm{Re}\,[\zeta^*\zeta_1(\eta^*-1)] \; |\zeta_1|^2$

$$\Gamma_u: \; R_u = |\zeta_u|$$

$$= |\zeta_1||\zeta_2||\zeta_2-\zeta_1| \; / \; ||\zeta_2|^2-|\zeta_1|^2|$$

where, when $|\eta-1| = 1$, straight line $\mathrm{Re}(\eta\zeta\zeta_1{}^*) = 0$.

That is, $\Gamma_u$ is a circle passing through point $\zeta_0$, $\Gamma_t$ is a circle passing through point $\zeta_1$, and $\Gamma_s$ is a circle passing through point $\zeta_2$; these intersect the circle $\Gamma_a$ which passes through the three points $\{\zeta_0, \zeta_2, \zeta_1\}$. Moreover, the three circles $\Gamma_s$, $\Gamma_t$, $\Gamma_u$ intersect at a single point, and the angles made by the three tangent vectors $-\tau(\zeta_i)$ and directed toward $\zeta_1$ (i = 0, 1, 2) from this point of intersection are each $2\pi/3$.
Hence these three tangent vectors $-\tau(\zeta_i)$, or the group of curved half-lines in the directions of $+\tau(\zeta i)$, divide the region into three regions, and moreover if three points $\{\zeta_0, \zeta_2, \zeta_1)$ are given such that the circle $\Gamma_a$ surrounds all three points, an appropriate region division is determined. (Classification into a maximum six regions by all of or a portion of the six directions of $\pm\tau(\xi_i)$ is also possible.)

<7-5-3. Region division in the z plane>

Due to the properties of conformal mappings, the preimages in the z plane of the above four circles are a curved line group $\Gamma^0{}_c$ having properties similar to those of $\Gamma_c$, and region division with the same values as in the $\zeta$ plane obtains. That is:

$\Gamma^0{}_u$ is a curve passing through point $z_0$, $\Gamma^0{}_t$ is a curve passing through point $z_1$, and $\Gamma^0{}_s$ is a curve passing through point $z_2$, and the three curves intersect the curve $\Gamma^0{}_a$ which passes through the three points $\{z_0, z_2, z_1\}$. Further, the three curves $\Gamma^0{}_s$, $\Gamma^0{}_t$, $\Gamma^0{}_u$ intersect at one point, and the angles made by the tangent vectors $-\tau(z_i)$ from this point of intersection and directed toward the points $z_i$ (i = 0, 1, 2) are each $2\pi/3$.

These three tangent vectors $-\tau(z_i)$, or the group of half-curved lines in the directions $+\tau(z_i)$, divide the region into three regions ; and if three points $\{z_0, z_2, z_1\}$ are given such that all are enclosed within the curve $\Gamma^0 a$, then an appropriate region division is determined. (Division into a maximum six regions is possible by all or a portion of the six directions $\pm\tau(z_i)$.)

Using the equation for $\Gamma_c$ of $|\zeta-\zeta_c| = R_c^2$, the equation for $\Gamma^0{}_c$ is

$$\left|\, (z-z_0)^{\nu} - (z_c-z_0)^{\nu}\,\right|^2 \;=\; R_c^2$$

Here $z_c = z_0 + \zeta_c^{1/\nu} \mathrm{Exp}[i\theta_2]$ .

<7-5-4. Region division in the $p(\zeta)$ plane>

An image mapped by $p(\zeta) = \zeta(1-\xi) / (\zeta_2-\xi\zeta)$ , $\xi = \zeta_2/\zeta_1$ is as follows.
Image of $\zeta_i = \{\zeta_0, \zeta_2, \zeta_1\}$: $p_i = \{0, 1, \infty\}$
Image $\Gamma'_a$ of $\Gamma_a$: Im p = 0
Image $\Gamma'_s$ of $\Gamma_s$ : $|p| = 1$
Image $\Gamma'_t$ of $\Gamma_t$: Re(p) = 1/2
Image $\Gamma'_u$ of $\Gamma_u$: $|p-1| = 1$
Image of point of intersection of three circles: $(1/2, (\sqrt{3})/2)$
Image of $\tau(\zeta_1)$ : Vector from point of intersection vertically in real axis direction
Image of $\tau(\zeta_2)$ : Tangent vector from point of intersection along circle $|p| = 1$, with circle interior on left side
Image of $\tau(\zeta_0)$: Tangent vector from point of intersection along circle $|p-1|= 1$, with circle interior on right side

Here, similarly to the case of 7-5-3 above, modification of 7-5-2 obtains.
That is, $\Gamma'_u$ is a circle which passes through point p = 0, $\Gamma'_t$ is a circle which passes through point p = $\infty$, and $\Gamma'_s$ is a circle which passes through point p = 1; these circles intersect curve $\Gamma'_a$, which passes through the three points $\{0, 1, \infty\}$ (that is, the real axis Im(p) = 0). Further, the three curves $\Gamma'_s$, $\Gamma'_t$, $\Gamma'_u$ intersect at one point $(1/2, (\sqrt{3})/2)$, and the angles made by the tangent vectors $-\tau(p_i)$ directed from the point of intersection toward the points $p_i$ are each $2\pi/3$.
The three tangent vectors $-\tau(p_i)$, or the half-curved lines in the $+\tau(p_i)$ directions, divide the region into three, and moreover, if the three points $\{z_0, z_2, z_1\}$ are given such that the curve $\Gamma'_a$ encloses all the points (that is, such that they appear in the upper half-plane), then appropriate region division can be determined. (By using all or a portion of the six directions $\pm \tau(p_i)$, division into a maximum six regions is possible.)

As is seen from the above image, in the p plane, in contrast with the cases of the $\zeta$ plane and the z plane, selection of the $\zeta_i$ (and therefore of the $z_i$) does not result in movement or deformation of the boundary curve group $\Gamma'_c$, which is determined completely by the geometric properties of the curves. These properties are inherited by the boundary lines of the regular triangle shape through SC transformation. Hence if appropriate regional division is not performed by $\Gamma'c$ on the p plane, an appropriate regular triangle representation cannot be obtained.

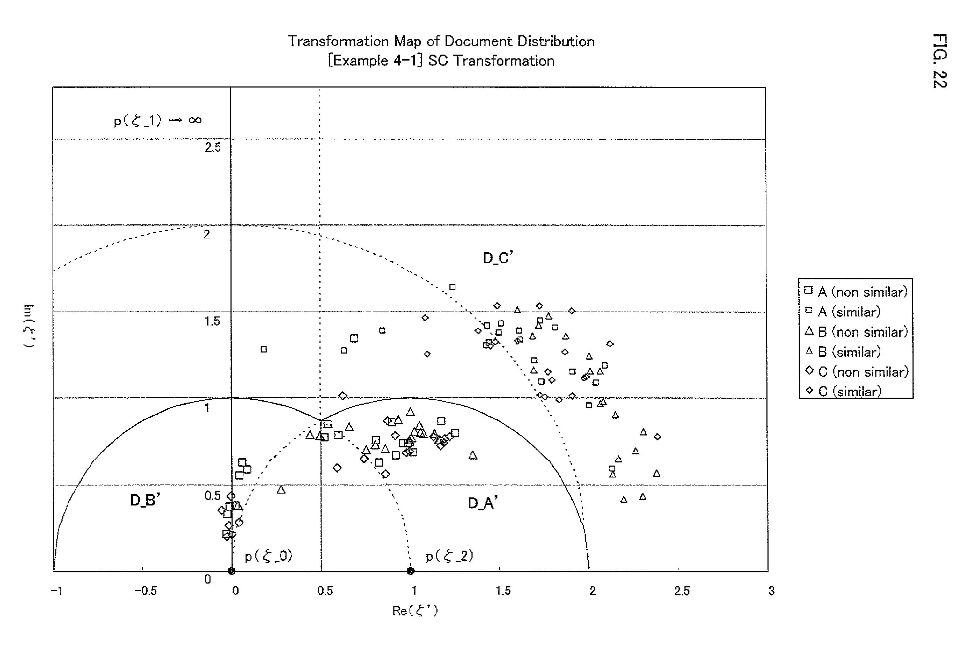

Further, when no points exist in the region enclosed between curves having tangents in the directions $+\tau(p_2)$ and $-\tau(p_1)$ or in the region symmetrical with this (the region enclosed by curves having tangents in the directions $-\tau(p_2)$ and $+\tau(p_1)$), and when moreover almost no points exist in the vicinity of the center of gravity, in place of the above division by the $\Gamma'_c$, the following is also possible (see Fig. 22) :

$z_1$ characteristic region: $|p| > 2$ (exterior of large circle)
$z_2$ characteristic region: $1 \le |p| \le 2$ (annulus region)
$z_0$ characteristic region: $|p| < 1$ (interior of small circle)

<7-5-5. Mapping onto the w plane>

The image resulting from the SC transformation
w = B(1/3, 1/3; p(ζ)) is as follows.
Image of $p_i$ = { 0 , 1 , ∞}:
Three vertices (0, 0), (B (1/3, 1/3), 0), (B(1/3, 1/3)/2, (√3)B(1/3, 1/3)/2) of a regular triangle
Image of $\Gamma''_s$ (circle |p| = 1): Center line Y = - (X-B (1/3, 1/3))/√3
Image of $\Gamma'_u$ (circle |p-1| = 1): Center line Y = X/√3
Image of $\Gamma''_t$ (straight line Re(p) = 1/2) : Center line X = B(1/3, 1/3)/2
Images of the three sections of $\Gamma'_a$, divided by the $p_i$, are as follows.
Image of portion for which 0 < Re(p) < 1: Base edge Y = 0; however, 0 < X < B(1/3, 1/3)
Image of portion for which 1 < Re(p): Right-hand edge Y = - (√3)(X- B(1/3, 1/3)); however, B(1/3, 1/3)/2 < X < B(1/3, 1/3)
Image of portion for which Re(p) < 0: Left-hand edge Y = (√3)X; however, 0 < X < B(1/3, 1/3)/2

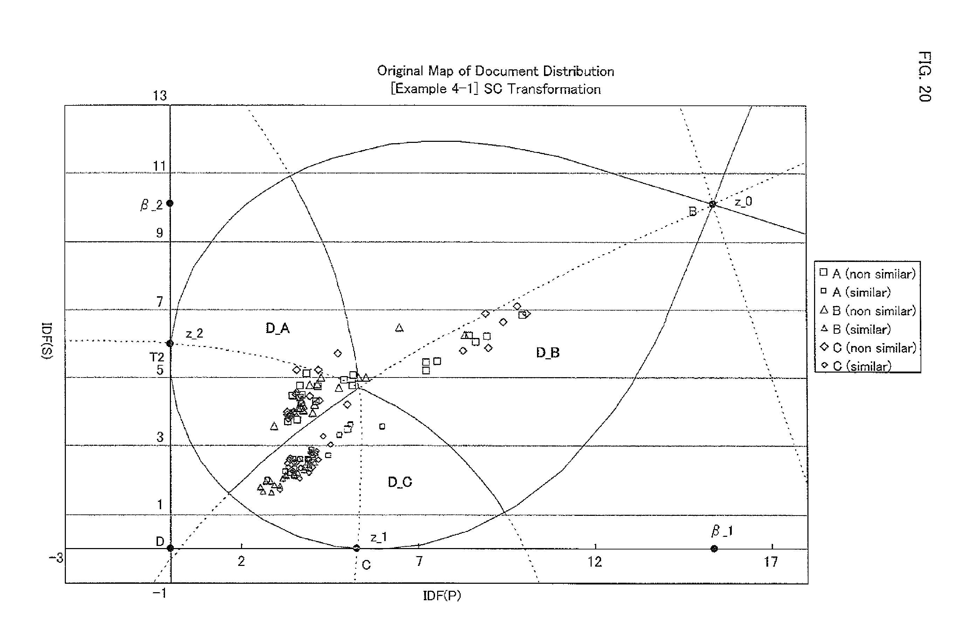

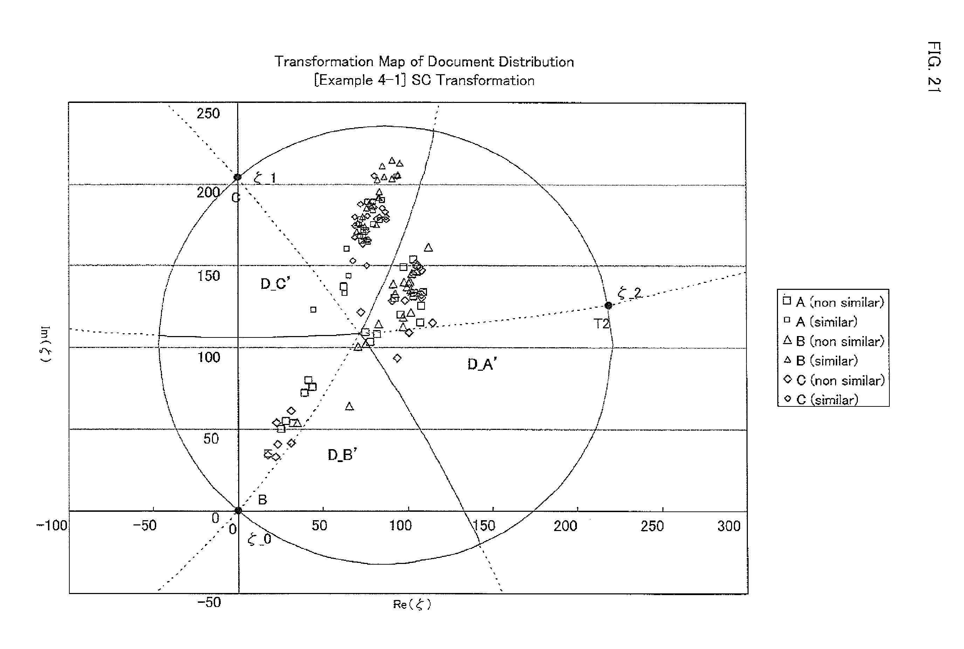

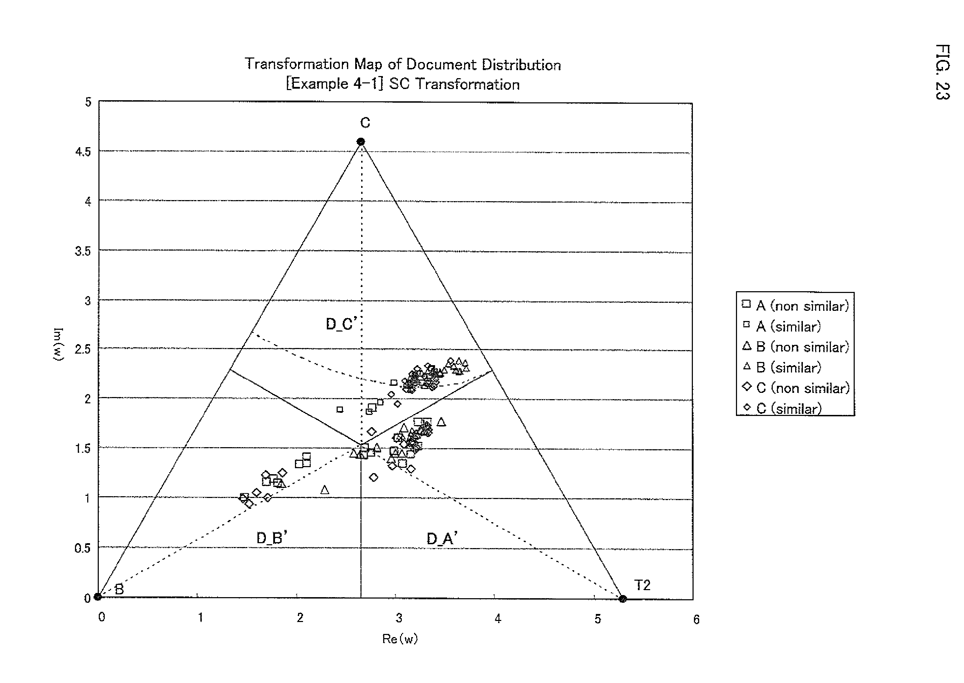

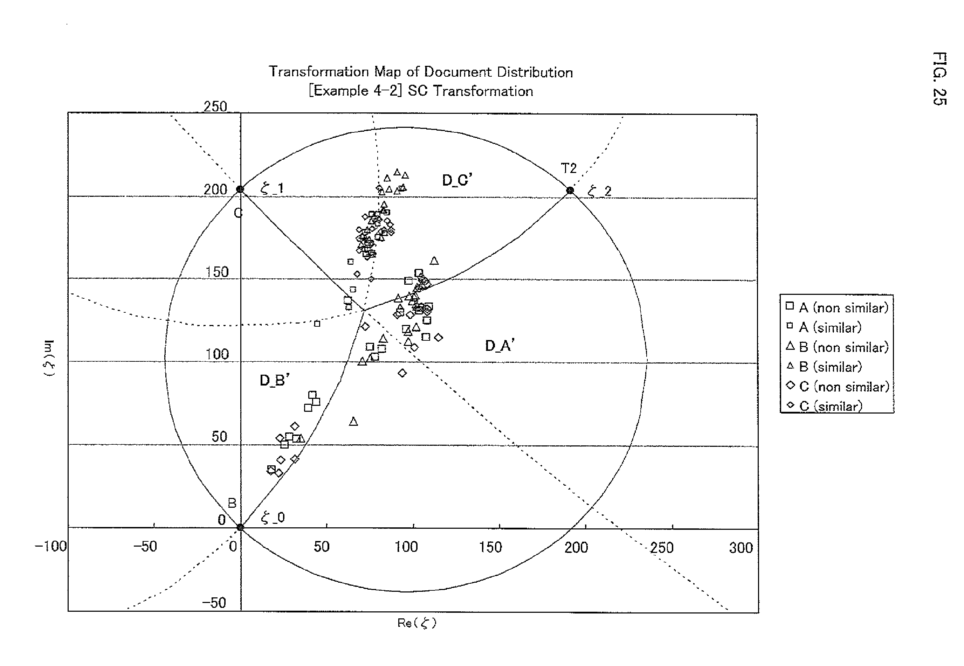

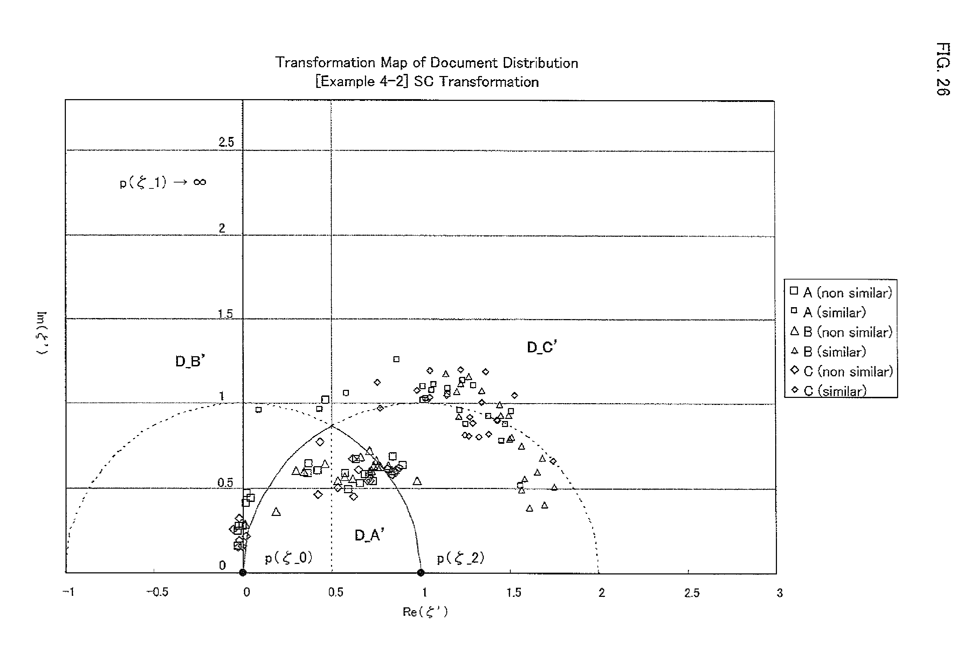

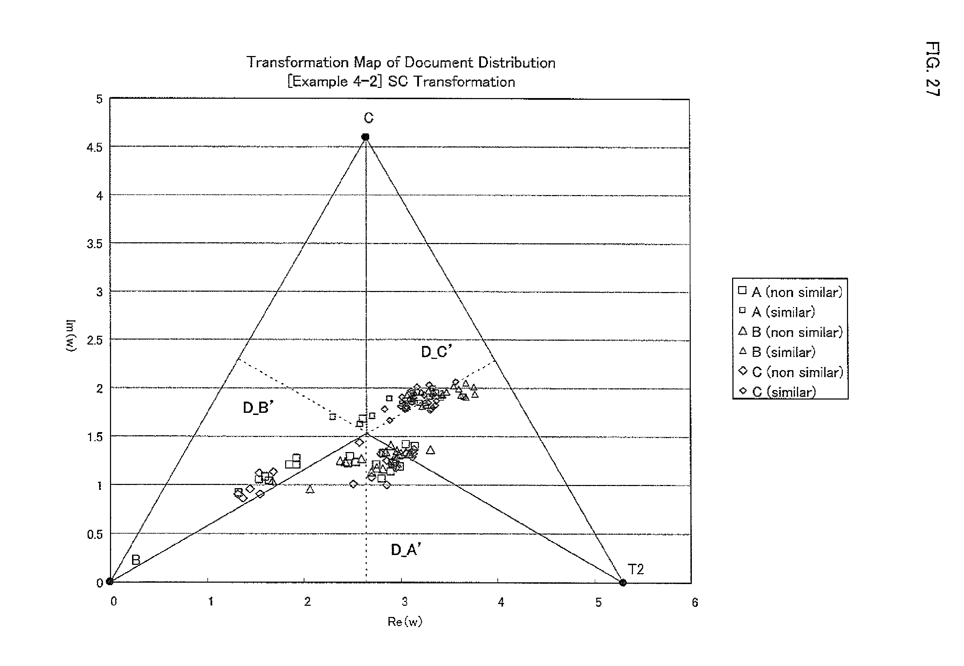

<7-5-6. Example of application to an original macro map: Fig. 20 through Fig. 27>

In application to an original macro map, if $z_1$ = C, $z_0$ = B, $z_2$ = T2 = (0, R) are selected as representative points (characteristic endpoints) of the standard area $D_C$, specialty area $D_B$, and original concept area $D_A$, then the values of ν and $\phi$ can be set such that 0 < ν ≤ 4 and π(5/4-1/ν) ≤ $\phi$ ≤ π (however, δ is the largest value that can be taken by angle $\angle z_1 z_0 z_2$).
For example when $\phi$ = π and ν = 2 are selected and the transformation ζ = (z-B)$^2$ is performed, the following region division diagram is obtained.
If R is given in the range 0 ≤ R ≤ $\beta_2$, when R is smaller than the threshold value R0 (≈α), region division by a curve in the -τ direction is desirable, and if equal to or greater than the threshold value, then division in the + τ direction is desirable.
Fig. 20 through Fig. 23 show a first example in original macro map transformation example 4 (SC transformation); the z plane, ζ plane, p(ζ) plane, and w plane are each shown for R > R0, when region division is performed by curves in the +τ direction. In the z plane, R was set to 0.6$\beta_2$. In the w plane, region division was performed by perpendicular bisectors of the triangle edges intersecting the edges.

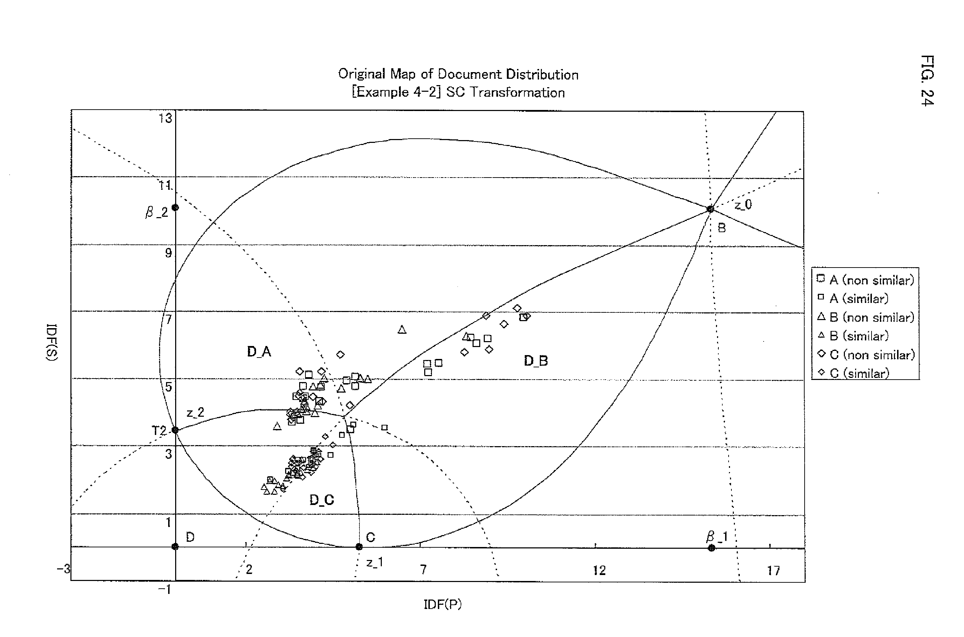

Fig. 24 through Fig. 27 show a second example in original macro map transformation example 4 (SC transformation); here the z plane, ζ plane, p(ζ) plane, and w plane are shown for R < R0, with region division by curves in the -τ direction. In the z plane, R was set to α'$\gamma_+$. In the w plane, region division was performed by perpendicular bisectors on the side of the triangle angles.
In both cases, the document distribution is such that in the w plane the original concept area $D_A$', specialty area $D_B$', and standard area $D_C$' can be clearly discriminated.

<7-6. Reference example A (SC transformation comprising a non-regular transformation)>

In 7-5, a series of conformal transformations were employed in a z → ζ → p(ζ)→ w transformation to a regular triangular region. In this reference example, a new non-regular transformation z → ζ is applied, and from ζ the SC transformation is directly performed (without passing through p(ζ)) to obtain the w plane.
That is, a certain transformation z → ζ is applied such that the three above-described regions of the original macro map can be divided as follows:

Standard area: region enclosed in two circles |ζ| = 1, |ζ-1| = 1, and Im (ζ) = 0
Original concept area: region outside the circle |ζ-1| > 1, and in which Re(ζ) < 1/2 (Im(ζ) > 0)
Specialty area: region outside the circle |ζ| > 1, and in which Re(ζ) ≥ 1/2 (Im (ζ) > 0)

The SC transformation is applied to this ζ to obtain the w plane:

$$w = F(\zeta) = Exp[i2\pi/3]B(1/3, 1/3; \zeta) + B(1/3, 1/3)$$

By means of the above SC transformation ζ→ w = F(ζ), the following mapping is performed:

$$|\zeta| = 1 \rightarrow Re(w) = B(1/3, 1/3)/2$$

$$|\zeta-1| = 1 \rightarrow Y = -(X - B(1/3, 1/3))/\sqrt{3}$$

$$0 < \mathrm{Re}(\zeta) < 1 \rightarrow Y = -(\sqrt{3})(X - B(1/3, 1/3)), \text{ where } B(1/3, 1/3)/2 < X < B(1/3, 1/3)$$

$$1 < \mathrm{Re}(\zeta) \rightarrow Y = (\sqrt{3})X, \text{ where } 0 < X < B(1/3, 1/3)/2$$

$$\mathrm{Re}(\zeta) < 0 \rightarrow \mathrm{Im}(w) = 0, \text{ where } 0 < X < B(1/3, 1/3)$$

$$\mathrm{Re}(\zeta) = 1/2 \rightarrow Y = X/\sqrt{3}$$

$$\text{Center-of-gravity preimage } \zeta = (1/2, (\sqrt{3})/2) \rightarrow W_G = \text{center-}$$

$$\text{of-gravity coordinates of regular triangle}$$

The boundary lines for the three regions in the w plane in this SC transformation $\zeta \rightarrow w = F(\zeta)$ can be given as follows. Standard area: Right-edge region within triangle divided in three by center lines
Original concept area: Base-edge region within triangle divided in three by center lines
Specialty area: Left-edge region within triangle divided in three by center lines
If the boundary lines are held fixed while rotating only the outer triangle through $\pi$ radians, the region is divided into regions from the center of gravity toward the three vertices.

Next, the non-regular transformation ($z \rightarrow \zeta$) portion is explained using an example. In the following example, a radial scale transformation, argument scale transformation, and parallel movement are combined with power transformation and logarithmic transformation, to apply a $z \rightarrow \zeta$ transformation which corrects the image region $D_B$' of the specialty area.

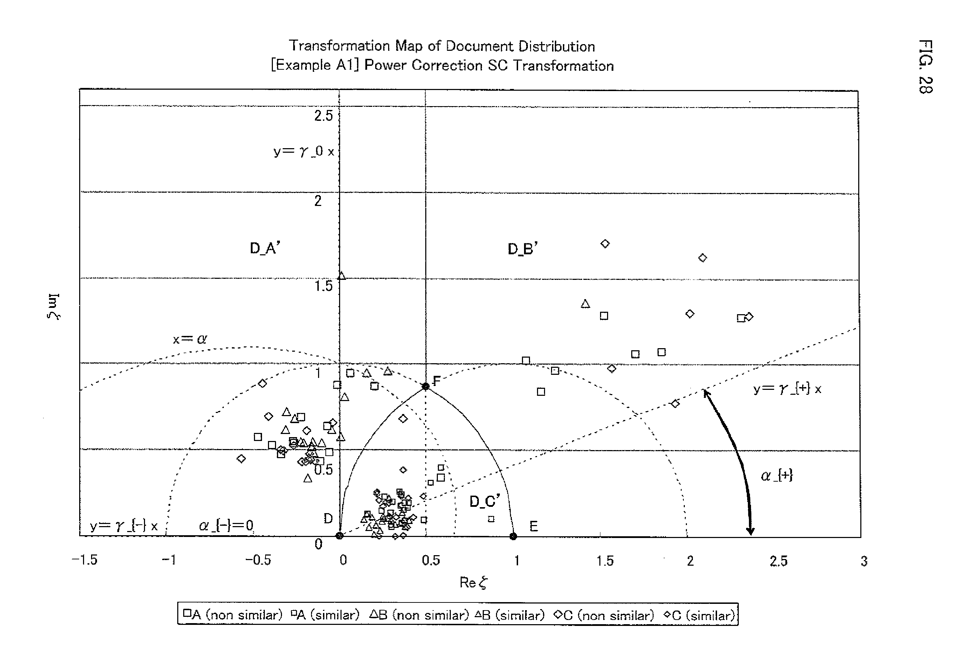

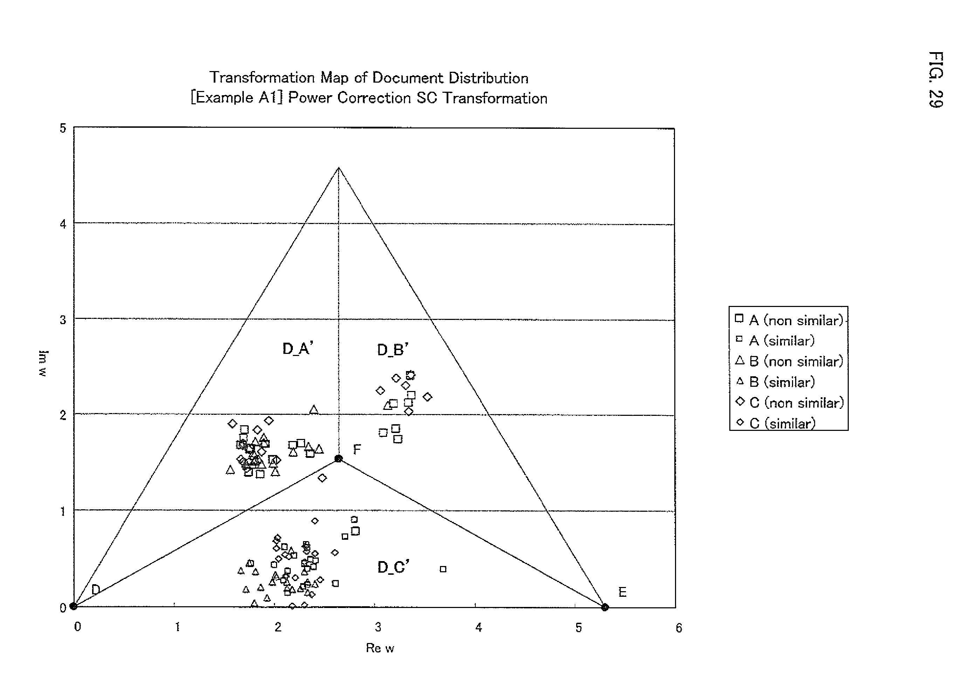

<7-6-1. Reference example A1 (power correction SC transformation): Fig. 28, Fig. 29>

In the power transformation
$(z/R)^v$
where $v = \pi/(2 \text{ Arctan } \gamma_0)$ described in 7-4 above, the angle multiplier (angular velocity) $v$ is corrected from a fixed value to an angle-dependent multiple (angular scale transformation). Specifically, the $(z/R)^v$ image (vertical line $\mathrm{Re}(w) = 0$) of the straight line $y = \gamma_0 x$ (argument $\theta_0$) is held stationary, and an angular scale transformation is performed as follows:
The lower-limit angle of the marginal region $y > \gamma$-$x$ (argument $\theta > \theta$-) of the original concept area $D_A$ is subjected to an angular scale transformation, up to a padding angle $\alpha$-with respect to the negative real axis.
The upper-limit angle of the marginal region $y < \gamma$+$x$ (argument $0 < \theta_+$) of the specialty area $D_B$ and standard area $D_C$ is subjected to an angular scale transformation, up to a padding angle $\alpha_+$ with respect to the positive real axis.
As the padding angle $\alpha_+$, for example $0$, $(2/3)\theta_+$, $\mathrm{Arg}(C1)$, or similar may be used.

That is, the mapping $z = r\mathrm{Exp}[i\theta] \rightarrow \zeta = \rho \mathrm{Exp}[i\theta]$ becomes $\theta \rightarrow \phi = v\theta + (1-\mu)(\pi/2-v\theta)$ (angular scale transformation)

$$r \rightarrow \rho = (r/R)^{\nu}$$

Here the multiplier $\mu = \mu_+ \times \theta(\theta_0 - \theta) + \mu_- \times \theta(\theta - \theta_0) + \delta(\theta - \theta_0)$

$$\mu_\pm = (\pi - 2\alpha_\pm) / |\pi - 2\nu\theta_\pm|$$

$\theta_\pm$ = Arctan $\gamma_\pm$
$\theta_0$ = Arctan $\gamma_0$
$\theta(x)$ = 1 for x >0, 0 for x ≤ 0
$\delta(x)$ = 1 for x >0, 0 for x ≠ 0

Fig. 28 shows an example of the $\zeta$ plane in reference example A1. Here, R = $\alpha\sqrt{2}$, $\nu$ = 2, $\alpha$- = 0, and $\alpha_+$ = (2/3)$\theta_+$. Fig. 29 shows an example of the w plane obtained in reference example A1, as a result of SC transformation of the $\zeta$ plane in Fig. 28. A document distribution is obtained for which the original concept area $D_A$', specialty area $D_B$', and standard area $D_C$' can easily be discriminated.

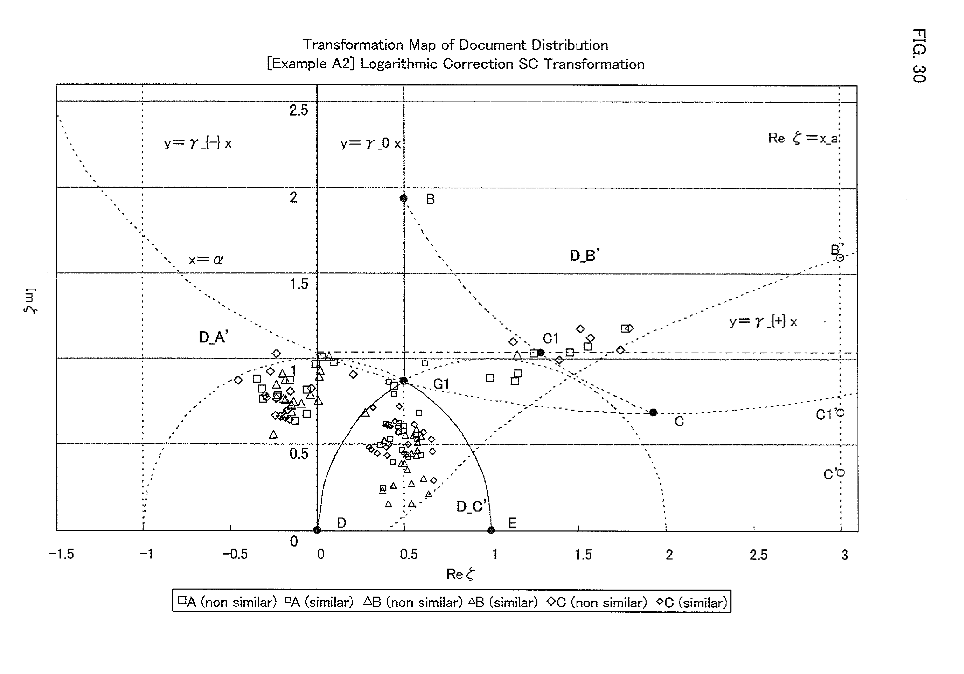

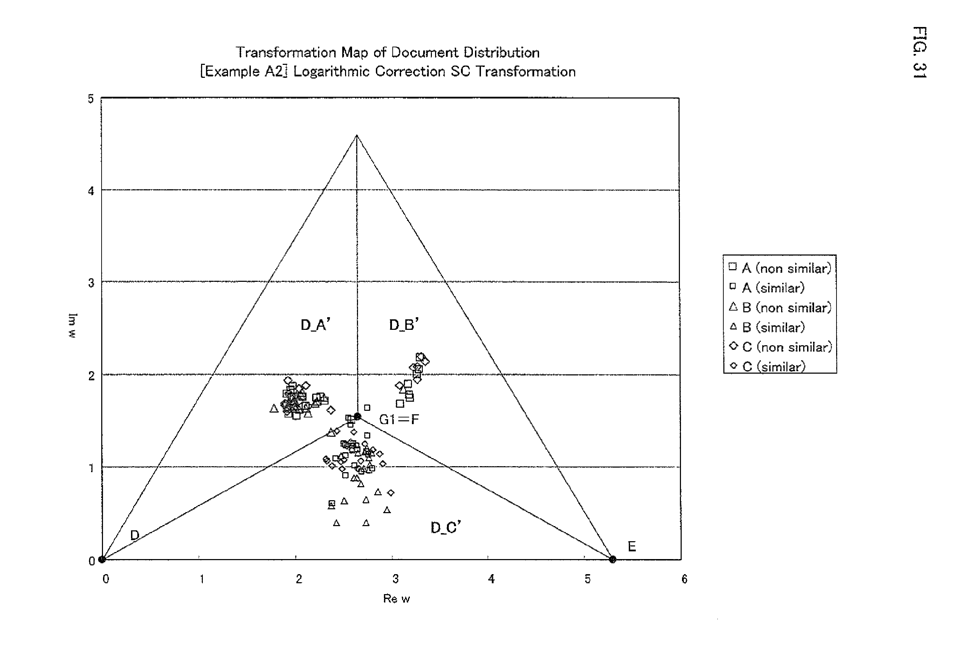

<7-6-2. Reference example A2 (logarithmic correction SC transformation 1): Fig. 30, Fig. 31>

In a compound transformation in which, after performing the logarithmic transformation described in 7-3 above,

$$i \ Ln(z/\epsilon) + \theta_0$$

where $\theta_0$ = Arctan $\gamma_0$ the real axis coordinate is further multiplied by $\phi_0$, when the compound-transformed coordinates are represented by z1(X', Y'), by for example making the following selections:

$$\phi_0 = (1/2)/(\theta_0 - \theta_+)$$

$$\theta_- = 3\theta_0 - 2\theta_+$$

$$\epsilon = \alpha Exp[-(\sqrt{3})/2]/\cos \ \theta_+$$

the compound transformation z → z1 can perform the following mappings:

Straight line y = $\gamma$-x to straight line X'= -1
Straight line y = $\gamma_0$x to straight line X' = 0
Straight line y = $\gamma$+x to straight line X' = 1/2
Image of point G1 ($\alpha$, $\alpha\gamma_0$) to (X', Y') = (1/2, $\sqrt{3}$/2)

Here, a correction transformation z1(X', Y') → $\zeta$(x', y') such that the image region z1($D_B$) of the specialty area $D_B$ is mapped to an appropriate position by the SC transformation is considered. The correction transformation is applied only to z1($D_B$). The reason for applying the correction transformation only to z1($D_B$) is that z1($D_B$) overlaps the region in the vicinity of the vertical line X' = 1/2, and is a short distance from the center-of-gravity preimage G1, and so is close to an ambiguous region.

The correction transformation z1 → $\zeta$ specifically involves, first, parallel movement in the vertical axis direction by $\Delta_1$, as follows.

$$Y' \rightarrow \text{Im}\zeta = Y' - \Delta_1$$

Here the value of the movement length $\Delta_1$ is for example determined as the difference between the Y' coordinate of the point G0 in the z1 plane, $\text{Im}(z1(G0)) = \ln(\alpha/\epsilon \cos\theta_0) = \ln(R/\epsilon)$ (and so $R = \alpha/\cos\theta_0$), and the Y' coordinate of point C, $\text{Im}(z1(C)) = \ln(\alpha/\epsilon)$:

$$\Delta_1 = \text{Im}(z1(G0) - z1(C)) = -\ln \cos\theta_0$$

In the horizontal direction, a scale transformation is performed such that the image curves B', C' of the curves B, C in the z1 plane are transformed to the position of the straight lines x' = $x_a$ (where $x_a$ is a real number greater than 1; preferably $x_a \geq 2$) :

$$X' \rightarrow \text{Re}\zeta = \phi_1 X'$$

Here the multiplier $\phi_1$ is

$$\phi_1 = x_a / \{\theta_0 - (1/2)\text{Arcsin}(1 - (\alpha/r)^2)\}$$

In the compound transformation $z \rightarrow z1$, X' is already scaled by a constant (multiplier $\phi_0$) ; this effect is cancelled out by $\phi_1$.
Through this z1 ($D_B$) correction transformation, the transformation mapping $z = r\text{Exp}[\theta] \rightarrow \zeta = \phi + I \ln\rho$ ultimately obtained for the entire z region is

$$\theta \rightarrow \phi = \{\phi_0 + (\phi_1 - \phi_0)\theta(r-R)\}(\theta_0 - \theta)$$

$$r \rightarrow \ln\rho = \ln(r/\epsilon) - \Delta_1\theta(r-R)$$

Here, $R = \alpha\cos\theta_0$.
Fig. 30 shows an example of the plane in reference example A2. Here

$$\epsilon = \alpha\text{Exp}[-(\sqrt{3})/2]/\cos\theta_+$$

$$\theta_- = (3\pi/4) - 2\theta_+$$

$$\Delta_1 = -\ln \cos\theta_0$$

$$x_a = 3$$

$$\phi_0 = (1/2)/(\theta_0 - \theta_+)$$

Fig. 31 shows an example of the w plane obtained in reference example A2, obtained by SC transformation of the $\zeta$ plane of Fig. 30. A document distribution is obtained for which the original concept area $D_A{}'$, specialty area $D_B{}'$, and standard area $D_C{}'$ can be clearly discriminated.

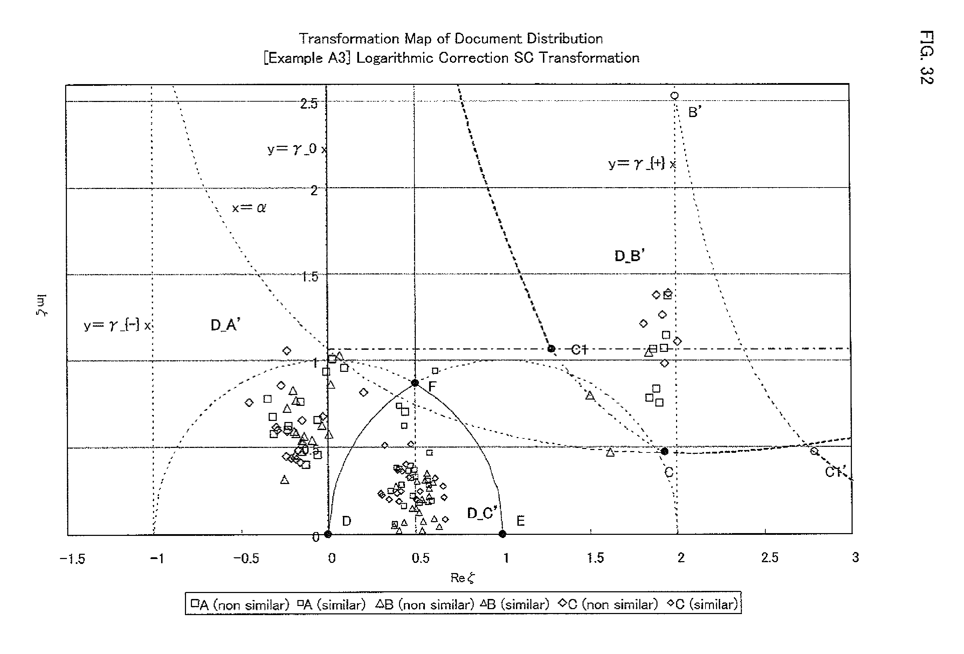

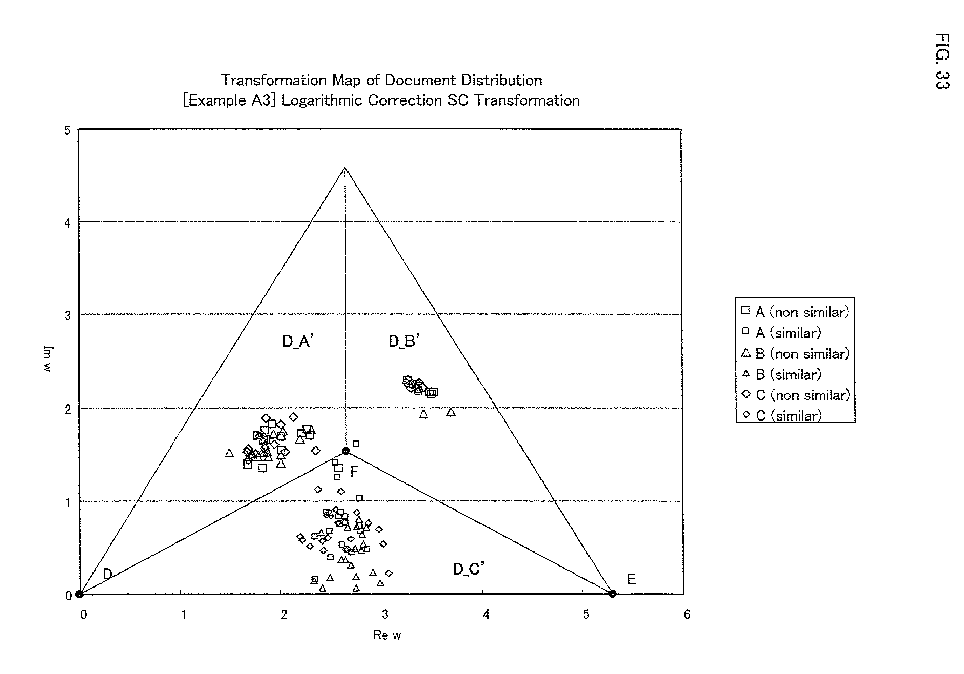

<7-6-3. Reference example A3 (logarithmic correction SC transformation 2): Fig. 32, Fig. 33>

As opposed to reference example A2, in reference example A3 parallel movement (correction) of $D_B{}'$ is performed in advance in the image region $D_B{}'$ of the specialty area $D_B$ for the logarithm transformation i Ln$(z/\in)$ + $\theta_0$ (where $\theta_0$ = Arctan $\gamma_0$) in the above 7-3, and then simultaneous scaling of the entire region is performed.

First, parallel movement of the image region $D_B{}'$ is performed by adding $\Delta_2$ to the real-axis coordinate and $-\Delta_1$ to the imaginary-axis coordinate.

If the coordinates obtained from this parallel movement are z2(X', Y'), then the entire-region correction transformation z2 $\rightarrow$ $\zeta$ is:

$$X' \rightarrow \mathrm{Re}\zeta = \phi_0 X', \quad \forall \phi_0$$

$$Y' \rightarrow \mathrm{Im}\zeta = Y'^2$$

Here the vertical-axis correction differs from reference example A2 in employing a power transformation.

In particular, if $\Delta_2$ is selected such that the image of y = $\gamma_+$x becomes the straight line Re$\zeta$= $x_a$, then

$$\phi_0(\theta_0 - \theta_+ + \Delta_2) = x_a$$

That is,

$$\Delta_2 = x_a/\phi_0 + \theta_+ - \theta_0$$

And, if $\phi_0$ is selected to be (1/2)/($\theta_0$-$\theta_+$), then

$$\Delta_2 = (x_a - 1/2)/\phi_0$$

The mapping to the $\zeta$ plane z = rExp[i$\theta$] $\rightarrow$ $\zeta$ = $\phi$ + i ln$\rho$ becomes

$$\theta \rightarrow \phi = \phi_0(\theta_0 - \theta) + \phi_0 \Delta_2 \theta(r-R)$$

$$r \rightarrow \ln\rho = [\ln(r/\in) - \Delta_1 \theta(r-R)]^2$$

Here R = $\alpha$/cos$\theta_0$.

Fig. 32 shows an example of the $\zeta$ plane in reference example A3. Here,

$$\epsilon = \alpha \text{Exp}[-(\sqrt{3})/2]/\cos\theta_+$$

$$\theta_- = 3\pi/4 - 2\theta_+$$

$$\Delta_1 = -\ln\cos\theta_0$$

$$\Delta_2 = (x_a - 1/2)/\phi_0$$

$$x_a = 2$$

$$\phi_0 = (1/2)/(\theta_0 - \theta_+)$$

Fig. 33 shows an example of the w plane obtained in reference example A3, resulting from SC transformation of the $\zeta$ plane in Fig. 32. A document distribution is obtained for which the original concept area $D_A$', specialty area $D_B$', and standard area $D_C$' can be clearly discriminated.

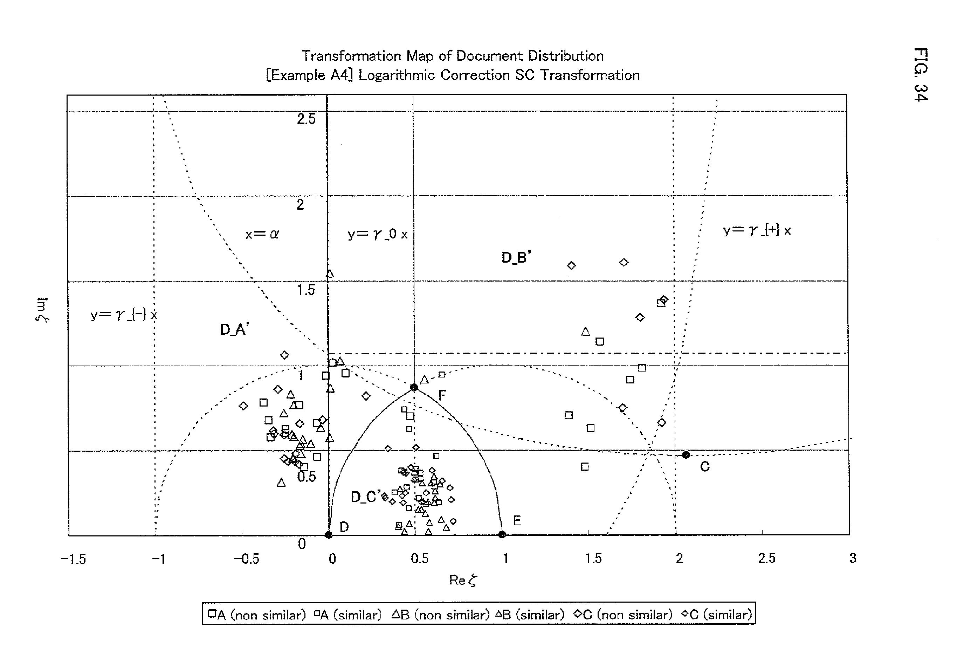

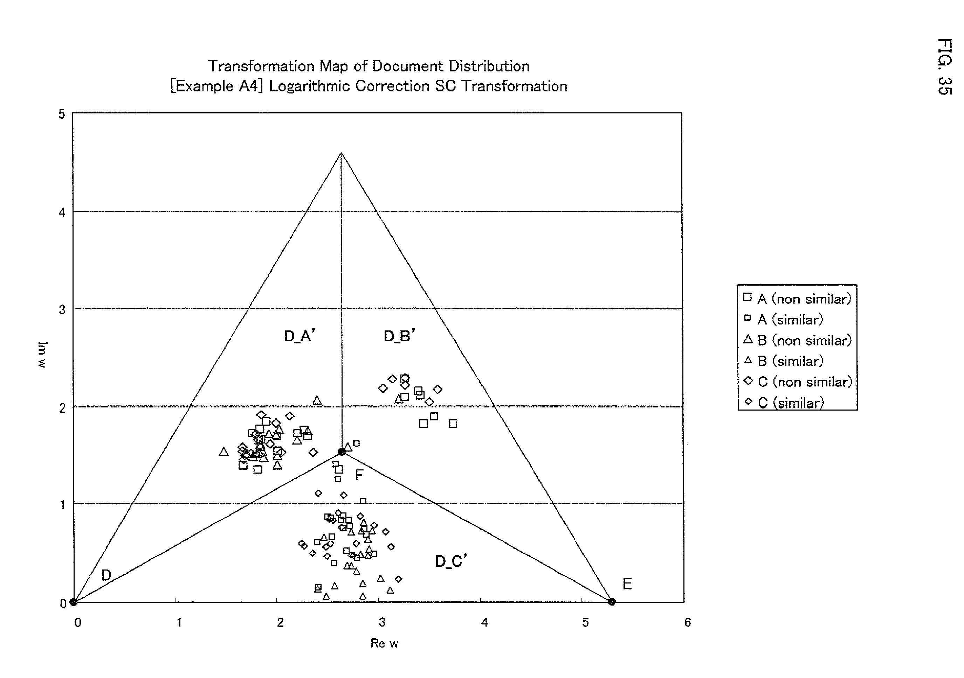

<7-6-4. Reference example A4 (logarithmic correction SC transformation 3): Fig. 34, Fig. 35>

The $\zeta$ plane in reference example A3 when the parallel movement amount of the image region $D_B$' is set equal to $\Delta_1 \equiv \Delta_2 \equiv 0$, that is, the coordinates (called the z3 plane) obtained in the following transformation of the entire region:

$$\theta \rightarrow \phi_0(\theta_0 - \theta), \quad \forall\phi_0$$

$$r \rightarrow [\ln(r/\epsilon)]^2$$

are represented by r'Exp[i$\theta$'].
If an argument scaling transformation is applied to the z3($D_B$) image region of $D_B$ on the z3 plane,

$$\theta' \rightarrow \phi' = \pi/2 - (\pi/2-\alpha_3)(\pi/2-\theta')/(\pi/2-\theta_B)$$

is performed in order that the argument $\theta_B$ of the image z3(B) of point B in the z3 plane matches a padding angle $\alpha_3$ from the positive real axis (where $0 < \alpha_3 < \theta_B$), then the result is

$$R_B(r, \theta) = [\{\phi_0(\theta_0-\theta)\}^2 + \{\ln(r/\epsilon)\}^2]^{1/2}$$

Using

$$\Delta_4 = R_B(r, \theta)\cos\phi' - \phi_0(\theta_0 - \theta)$$

$$\Delta_3 = R_B(r, \theta)\sin\phi' - [\ln(r/\epsilon)]^2$$

the mapping to the $\zeta$ plane $z = r\text{Exp}[i\theta] \rightarrow \zeta = \phi + i\ln\rho$ becomes

$$\theta \rightarrow \phi = \phi_0(\theta_0 - \theta) + \Delta_4\theta(r - R)$$

$$r \rightarrow \ln\rho = [\ln(r/\epsilon)]^2 + \Delta_3\theta(r - R)$$

Fig. 34 shows an example of the $\zeta$ plane in reference example A4. Here,

$$\epsilon = \alpha\text{Exp}[-(\sqrt{3})/2]/\cos\theta_+$$

$$\phi_0 = \alpha/2$$

$$\alpha_3 = 7\pi/24$$

Fig. 35 shows an example of the w plane obtained in reference example A4, resulting from SC transformation of the $\zeta$ plane in Fig. 34. A document distribution is obtained for which the original concept area $D_A'$, specialty area $D_B'$, and standard area $D_C'$ can be clearly discriminated.

<7-7. Original macro map transformation example 5: hyperbolic coordinate transformation>

In transformation example 5, after performing the (linear transformation and) power transformation, a hyperbolic coordinate transformation is applied. In 7-7-1, the method of transformation from a polygonal region and the geometric properties relating to region division are explained; in 7-7-2, an example of application to an original macro map is presented.

<7-7-1. Method of upper half-plane construction from a polygonal region and hyperbolic coordinate transformations

First, the upper half-plane region is constructed.
Similarly to the SC transformation described in 7-5, three vertices $\{z_0, z_1, z_2\}$ are prepared, and the regular transformation (power transformation)

$$z \rightarrow \zeta: \quad \zeta = [\text{Exp}[-i\theta_2](z - z_0)]^{\pi/\delta}$$

is performed (here $\phi$ and $\nu$ have maximum values).
By means of this transformation, the images $\{\zeta_0, \zeta_2, \zeta_1\}$ in the $\zeta$ plane of these three points $\{z_0, z_2, z_1\}$ clearly satisfy $\zeta_0 = 0$, and the angle $< \zeta_1\zeta_0\zeta_2$ looking out from $\zeta_0$ onto the region bounded by $\zeta_1$ and $\zeta_2$ is $\pi$. Hence $\zeta_2 = \text{Re}\zeta_2 > 0$ and $\zeta_1 = \text{Re}\zeta_1 < 0$ are satisfied. That is, the images of the three vertices are aligned on the $\zeta$ real axis, and is limited to the upper half-plane.

If the point at distance h on the bisecting line of the angle $\angle z_1 z_0 z_2$ of the vertical angle $\delta$ in the original macro map is regarded as the data distribution center $H_0$, then if the distribution radius $R = h^{\pi/\delta}$ is defined on the $\zeta$ plane, the image $\zeta_H$ of $H_0$ in the $\zeta$ plane is

$$\zeta_H \; = \; iR \; .$$

A transformation which maps the interior of a semicircle centered on $\zeta_0$ and with radius R to a lower-semicircle region, and the exterior of the semicircle to an upper-semicircle region, is given by the hyperbolic coordinate transformation

$$W \; = \; F(\zeta) \; = \; i(\zeta - iR)/(\zeta + iR)$$

(here the coefficient i applied on the whole portion of right-hand side is a rotation factor, and is fixed such that $w(\zeta_0) = -i$, that is, such that the semicircle with radius R on the $\zeta$ plane is mapped to the horizontal line Im(w) = 0 on the w plane) .

By means of this transformation, the interior of the $\xi$ plane region is mapped to the interior of a circle $|w| < 1$ on the circumference of which reside the images of the three points $\zeta_i$, and the distribution center $\zeta_H$ is mapped to the origin of the w plane, that is, to the center of the circle.

The equal-angle lines in the z plane (lines at fixed angles) and the circumferential line (line at a fixed radius) appear as an orthogonally intersecting circle group on the w plane.

The distribution is within a circle with radius 1 having the three vertices on the circumference, so that the w plane is in the $\zeta$ plane state described for transformation example 4 in 7-5-2. Hence by further performing an SC transformation, transformation into a regular triangular region is possible.

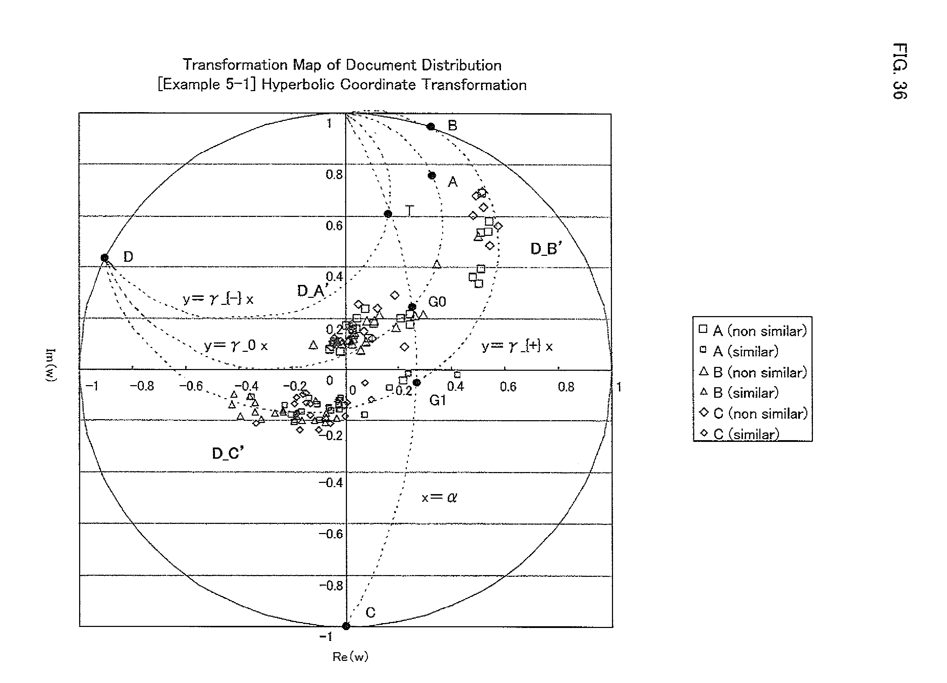

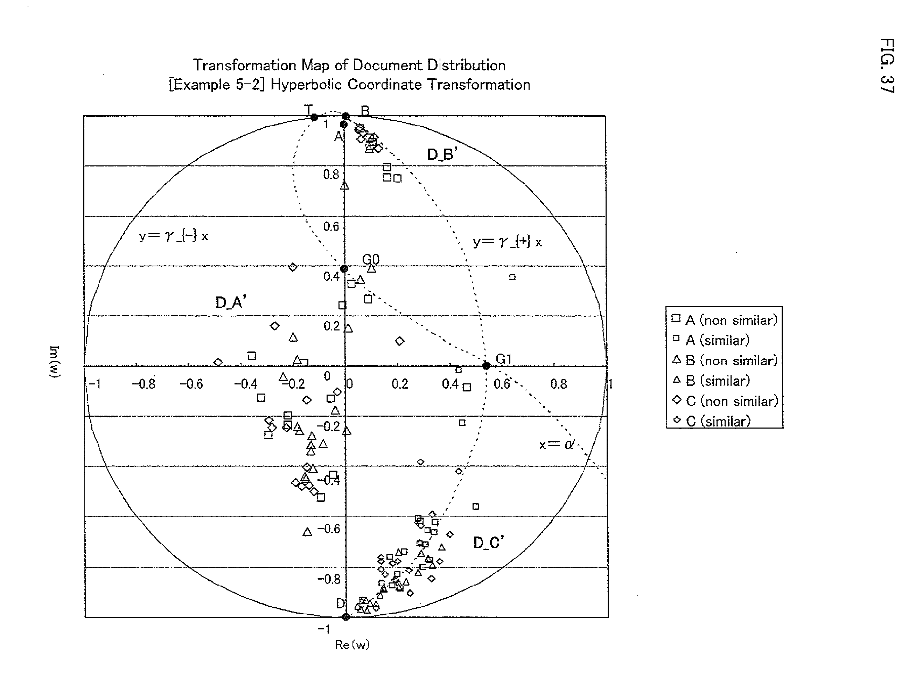

<7-7-2. Example of application to original macro map: Fig. 36, Fig. 37>

Preferably, as the distance h to the distribution center, $h = k\alpha$ may be used, with an appropriate multiplier for $\alpha$. Here, by selecting the value of k, the point positional relation (configuration) of the mapped circle to the horizontal line Im(w) = 0 is determined; at the limit k = 0, the mapped distribution converges on the north pole, and at the limit k = $\infty$, there is convergence at the south pole.

For example, when $z_0 = C$, if k is determined by the distance $\alpha/\sqrt{2}$ from C to $y = \gamma_0 x$ (k = $1/\sqrt{2}$), then the points of the standard area appear in the lower semicircle, the points of the original concept area appear in the center are above these, and the points of the specialty area appear still higher, near the circumference.

Fig. 36 shows a first example of the w plane obtained by original macro map transformation example 5 (hyperbolic coordinate transformation). Here, $\{z_0, z_1, z_2\} = \{C, D, B\}$, and $h = \alpha/\sqrt{2}$.

Fig. 37 shows a second example of the w plane obtained by original macro map transformation example 5 (hyperbolic coordinate transformation). Here, $\{z_0, z_1, z_2\} = \{D, T, R(T; y = \gamma_0 x)\}$, and $h = \alpha$. R (T; y = $\gamma_0 x$) means the mirror image of a point T about the straight line $y = \gamma_0 x$.

In both examples, a document distribution is obtained for which the original concept area $D_A{}^f$, specialty area $D_B{}'$, and standard area $D_C{}'$ can be clearly discriminated.

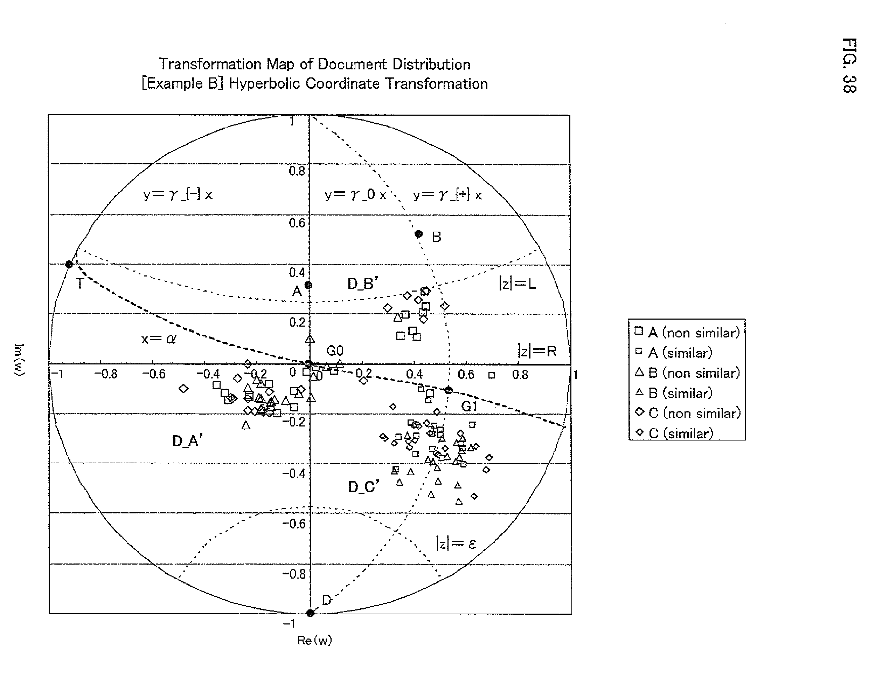

<7-8. Reference example B (hyperbolic coordinate transformation via non-regular transformation): Fig. 38>

The hyperbolic coordinate transformation

$$w \; = \; F(z) \; = \; (z - iR)/(z + iR)$$

maps the original macro map region z to the interior of a unit circle.
In this case, the following mapping is performed:

Straight line $y = mx \rightarrow$ circle $X^2 + (Y-m)^2 = 1 + m^2$ (independent of R)
Horizontal line $y = \beta_2 \rightarrow$ circle $(X - \beta_2/(R+\beta_2))^2 + Y^2 = (R/(R+\beta_2))^2$
Vertical line $x = \alpha \rightarrow$ circle $(X-1)^2 + (Y+R/\alpha)^2 = (R/\alpha)^2$
Straight line $y = x - \alpha \rightarrow$ circle $(X - \alpha/(\alpha-R))^2 + (Y - R/(R-\alpha))^2 = 2R^2/(R-\alpha)$ (where, when R = $\alpha$, the mapping is to the straight line Y = X-1)
Circle |z| = r → circle (X-(r²+R²)/(r²-R²))2+Y² = (2Rr)²/(r²-R²)² (where, when r = R, mapping is to the vertical line X = 0; if r < R mapping is to the region X < 0, and if r > R mapping is to the region 0 < X)

In this transformation, the boundary lines of the three regions in the w plane can be described as follows. First, if the boundary dividing the specialty area $D_B$ and other regions in the z plane is the vertical line x = α, then the boundary in the w plane between the specialty area $D_B$' and other regions is given by the circle $(X-1)^2 + (Y+R/\alpha)^2 = (R/\alpha)^2$. And, if the boundary dividing the original concept area $D_A$ and the standard area $D_C$ in the z plane is the straight line y = mx, then the boundary in the w plane between the original concept area $D_A^1$ and the standard area $D_C^1$ is given by the circle $X^2+(Y-m)^2 = 1+m^2$ . Hence the following can be obtained:

Original concept area $D_A$': Exterior of $D_B$' bounding circle, with $Y > m-\sqrt{(1+m^2-X^2)}$
Specialty area $D_B$': Interior of circle, $(X-1)^2 + (Y+R/\alpha)^2 < (R/\alpha)^2$
Standard area $D_C$': Exterior of $D_B$' bounding circle, with $Y \leq m-\sqrt{(1+m^2-X^2)}$

In this hyperbolic coordinate transformation, the image of y = mx is independent of R, and the image position is determined only by m, so that the interval between the three image curves is narrow. Hence the following correction is performed.
In the original macro map, an angular scaling transformation is performed in which y = $\gamma_+$x is fixed, and the argument is multiplied by a:

$$\theta \rightarrow \theta' = \theta_+ + a(\theta - \theta_+)$$

In addition to this the above hyperbolic coordinate transformation is performed, and if the image plane is rotated counterclockwise through π/2, then the compound transformation z → w can be expressed by

$$w = i(rExp[i\theta'] - iR)/(rExp[i\theta'] + iR)$$

At this time, compared with the uncorrected image, the image of the circle |z|= r only moves (rotates) over itself, and so apparently remains unmoved. In particular, if a is selected such that the image of y = $\gamma_-$x coincides with the unit circle $(\theta_- \rightarrow \theta' = \pi)$, then the following is obtained:

$$a = (\pi - \theta_+)/(\theta_- - \theta_+)$$

Fig. 38 shows an example of the w plane obtained in the transformation example B. Here, R = α√2 and a = (π-$\theta_+$)/($\theta_-$-$\theta_+$). A document distribution is obtained for which the original concept area $D_A$', specialty area $D_B$', and standard area $D_C$' can be clearly discriminated.

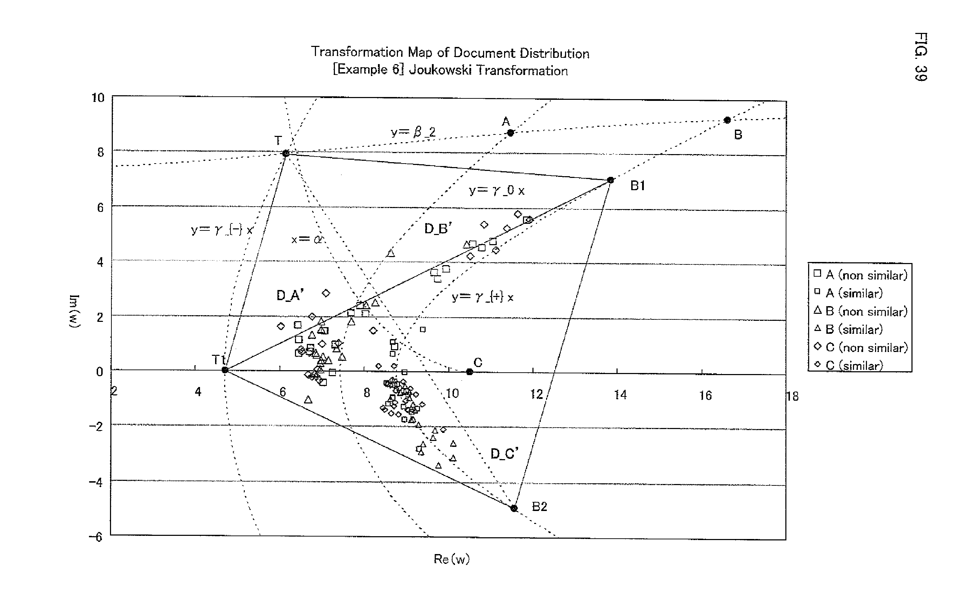

<7-9. Original macro map transformation example 6 (Joukowski transformation): Fig. 39 through Fig. 41>

Next, an example is explained in which the Joukowski transformation,

$$w = F(z) = z+R^2/z$$

is applied. This function is a two-valued function which maps the exterior region of a circle with radius R to the w plane, and maps the interior region to the w' plane. The w' plane and w plane are mapped in superposition. The following mapping results:

$$y = mx \rightarrow X^2 - (Y/m)^2 = (2R)^2/(1+m^2) \quad \text{(hyperbola with foci at } \pm 2R)$$

$$y = \beta_2 \rightarrow X = \pm(2-Y/\beta_2)[\{\beta_2(\beta_2{}^2-R^2)-Y\beta_2{}^2\}/(Y-\beta_2)]^{1/2}$$

$$x = \alpha \rightarrow Y = \pm(2-X/\alpha)[\{\alpha(\alpha^2+R^2)-X\alpha^2\}/(X-\alpha)]^{1/2}$$

$$y = x-\alpha \rightarrow XY/(x(x-\alpha)) = 1-(1/16)\{(X/x)^2-(Y/(x-\alpha))^2\}^2$$

(where x is a solution to the third-order equation $X = x+xR^2/\{x^2+(x-\alpha)^2\}$)

$$|z| = r \rightarrow (X/(r^2+R^2))^2+(Y/(r^2-R^2))^2 = r^{-2} \quad \text{(ellipse with foci at } \pm 2R)$$

A height can be defined, and the points on the w plane and w' plane mapped by the Joukowski transformation can be represented by a solid representation (tetrahedral representation).
First, for the mapping of the four points T, T1, B1, B2 of the original macro map, the line segment T'B2' is regarded as being at height 0 and the line segment T1'B1' as being at height $\Delta$h, and a tetrahedral is considered the four vertices of which are these four mapped points.
For an appropriate $\in$ and L, a mapping of the four points T1, T, B1, B2 is given by

$$T1' \; (2R/\sqrt{(1+\gamma_-{}^2)}, \; 0)$$

$$T' \; (\beta_2/\gamma_- + \gamma_- R^2/[\beta_2(1+\gamma_-{}^2)], \; \beta_2 - (R\gamma_-)^2/[\beta_2(1+\gamma_-{}^2)])$$

$$B1' \; (L + R^2/[L(1+\gamma_+)^2], \; L\gamma_+ - R^2\gamma_+/[L(1+\gamma_+)^2])$$

$$B2' \; (\epsilon + R^2/[\epsilon(1+\gamma_+)^2], \; \epsilon\gamma_+ - R^2\gamma_+/[\epsilon(1+\gamma_+)^2])$$

Next, a similar tetrahedron, having a center of gravity and face directions in common with the tetrahedron the vertices of which are the above four mapped points, is considered. This similar tetrahedron is determined uniquely when a scale factor $\tau$ is given, and so the vertices can be expressed by $V_i(\tau)$ (where i = 1,2,3,4). If i = 1,3 define the tetrahedron lower edge, and i = 2,4 define the tetrahedron upper edge, then the four edges excluding the line segments $V_1(\tau)V_3(\tau)$ and $V_2(\tau)V_4(\tau)$ positioned at the upper and lower edges become, in plane view (ignoring the height), the quadrilateral $V_1(\tau)V_2(\tau)V_3(\tau)V_4(\tau)$.
If the scale factor $\tau$ is varied from 1 to 0, then the quadrilateral $V_1(\tau)V_2(\tau)V_3(\tau)V_4(\tau)$ passes once through all the w coordinates and w' coordinates in the quadrilateral T'T1'B2'B1'. That is, there exists only one value of $\tau$ at which the quadrilateral $V_1(\tau)V_2(\tau)V_3(\tau)V_4(\tau)$ passes through each of the w plane coordinates and w' plane coordinates in the quadrilateral T'T1'B2'B1'. Further, for each of the w coordinates and w' coordinates, there exists only one position s on the quadrilateral $V_1(\tau)V_2(\tau)V_3(\tau)V_4(\tau)$ when the quadrilateral $V_1(\tau)V_2(\tau)V_3(\tau)V_4(\tau)$ passes through the coordinates. Hence

$\tau$ and s can be given as functions of the w coordinates (w' coordinates).

The quadrilateral $V_1(\tau)V_2(\tau)V_3(\tau)V_4(\tau)$ is derived from a plane view of a similar tetrahedron having in common the center of gravity and plane directions with the tetrahedron the vertices of which are four mapped points; hence each position specified as a position s on the quadrilateral $V_1(\tau)V_2(\tau)V_3(\tau)V_4(\tau)$ has a height h. That is, if $\tau$ and s are determined, then the height h is determined. Hence the height coordinate h of a point can be given as a function of the w coordinates (w' coordinates).

In this way, a solid figure is obtained in which points in the standard area $D_C$' exist near the vertex B2', points in the original concept area $D_A$' exist near the vertex T1', and points in the specialty area $D_B$' exist in the vicinity of the vertex B1'.

The tetrahedron the vertices of which are the four mapped points is the same tetrahedron when the scale factor $\tau = 1$; the three-dimensional coordinates of the vertices on the lower edge are $V_i = (w_i, 0)$, and the three-dimensional coordinates of the vertices positioned on the upper edge are $V_i = (w_i, \Delta h)$.

The center of gravity of the four points is $G = (1/4)\Sigma V_i$, and the vertices of the tetrahedron with arbitrary scale factor $\tau$ are given by

$$V_i(\tau) = G + \tau(V_i - G) \qquad\qquad (Eq. 1)$$

Here $G = (w_G, h_G)$ (where $h_G = \Delta h/2$).

The quadrilateral $V_1(\tau)V_2(\tau)V_3(\tau)V_4(\tau)$ with scale factor $\tau$ is given by the line segments $V_i(\tau)V_j(\tau)$, and a point W on a line segment is represented by

$$W = V_i(\tau) + s(V_j(\tau) - V_i(\tau))$$

Substituting equation (1) into the right-hand side of the above equation yields

$$W = V_i(\tau) + \tau s(V_j - V_i)$$

Expressing this in terms of components (with $W = (w, h)$) results in

$$w = w_i(\tau) + s\tau(w_j - w_i)$$

$$h = h_i(\tau) + s\tau(h_j - h_i) \qquad\qquad (Eq. 2)$$

Hence functions of w are determined in the order $\tau$, s, $h_i(\tau)$.

From the condition $Im(s\tau) = 0$ in which the relative position $s\tau = (w-w_i(\tau))/(w_j-w_i)$ is a real number, first $\tau$ is determined as a function of w, and then s is determined as a function of $\tau$ and w. That is,

$$\tau = Q(w; j, i)/Q(w_i; j, i)$$

$$s = Re(w-w_i(\tau))/\{\tau\ Re(w_j-w_i)\}$$

Here

$$Q(w; j, i) = Im[(w_j-w_i)(w-w_G)^*]$$

and $w_i(\tau)$ is given by equation (1).

Finally, equation (2) is used to determine h; $h_i(\tau)$ is obtained from equation (1) to be $h_i(\tau) = h_G + \tau(h_i-h_G)$. The values of hi are determined from the conditions for setting the vertices; in this case,

$$h_i = \Delta h * \{1 + (-1)^i\}/2$$

and so $h_i(\tau)$ is determined as follows.

$$h_i(\tau) = \Delta h(1 + \tau(-1)^i)/2$$

Further, if the starting point of a line segment is denoted by i and the ending point by j (in different planes), then

$$h_j - h_i = \Delta h(-1)^j = -\Delta h(-1)^i$$

Hence, from equation (2),

$$h = (\Delta h/2)[1 + \tau(-1)^i + 2s\tau(-1)^j]$$

$$= (\Delta h/2)[1 + (1-2s)\tau(-1)^i]$$

When the unit lengths of the vertical and horizontal display scales are such that $\Delta_x \neq \Delta_y$, the display lengths (physical lengths) of the logical coordinate values (X, Y) are $L_x = X\Delta_x$, $L_Y = Y\Delta_y$. In order to display the results in square coordinates ($\Delta_x = \Delta_y$), logical values are subjected to a variable transformation of the form $(X, Y) \rightarrow (kX, Y)$ ; $k = \Delta_x/\Delta_y$. By this means, unit distances of display scales in the vertical and horizontal distances can be both made equal to $\Delta y$. In an original macro map for which $\beta_2$ is large, the Y value is large, and so the multiplier $\kappa$ for the Y axis is larger than 1; in an original micro map for which $\beta_2$ is small, the Y value is small, so that $\kappa$ is smaller than 1.

Fig. 39 shows an example of the w plane and w' plane obtained in original macro map transformation example 6 (Joukowski transformation). Here, $R = \alpha$, $\in = (1/5)\beta_2$, and $L = (4/5)\beta_1$ (equivalent to $\kappa = 1.53125$).

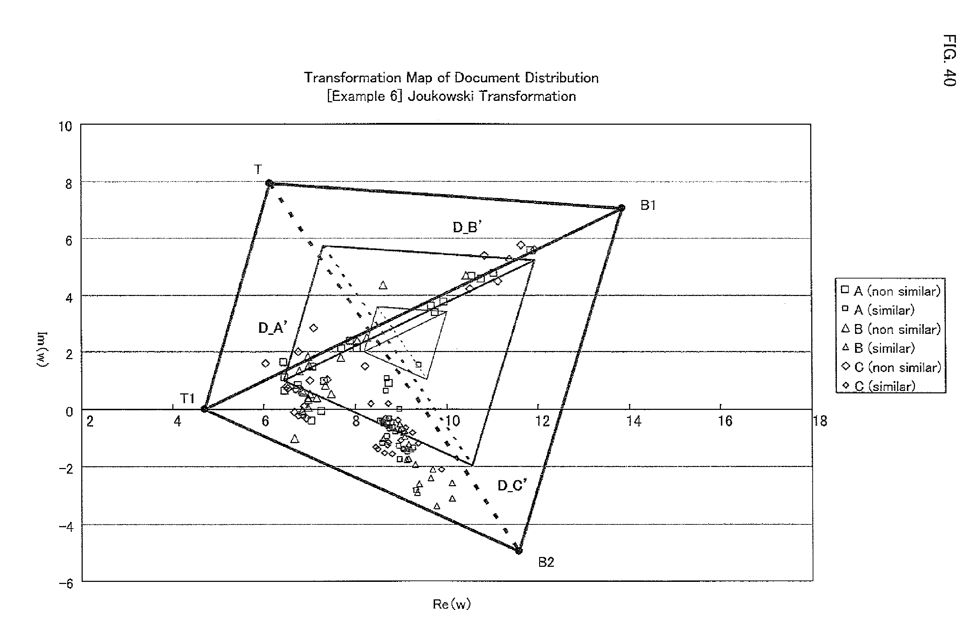

Fig. 40 explains determination of the scale factor $\tau$ in the original macro map transformation example 6 (Joukowski transformation).

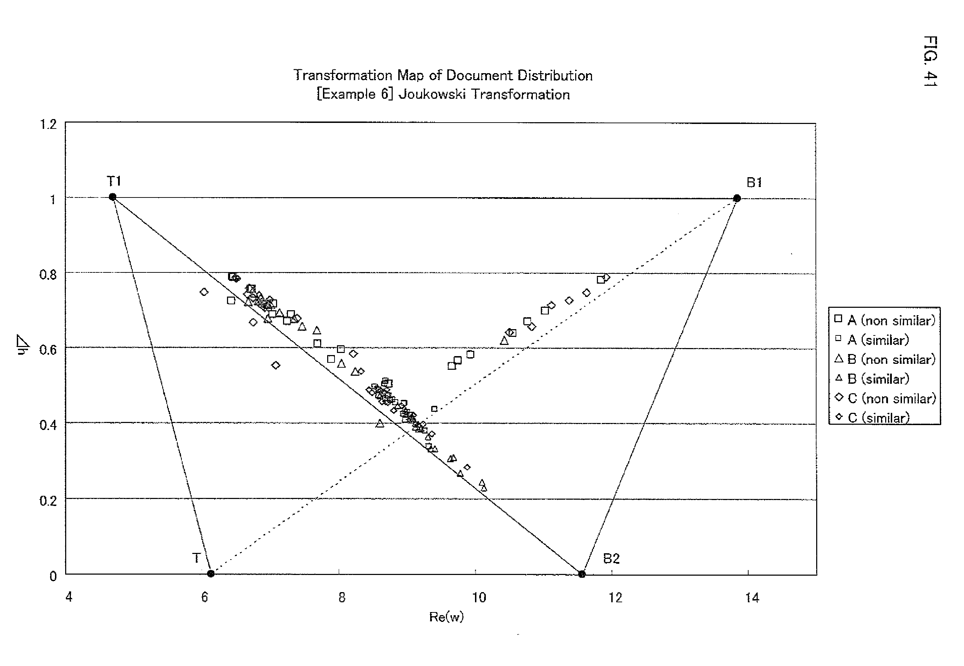

Fig. 41 is a projection onto the X-h plane, as an example of a solid figure representation of the original macro map transformation example 6 (Joukowski transformation).

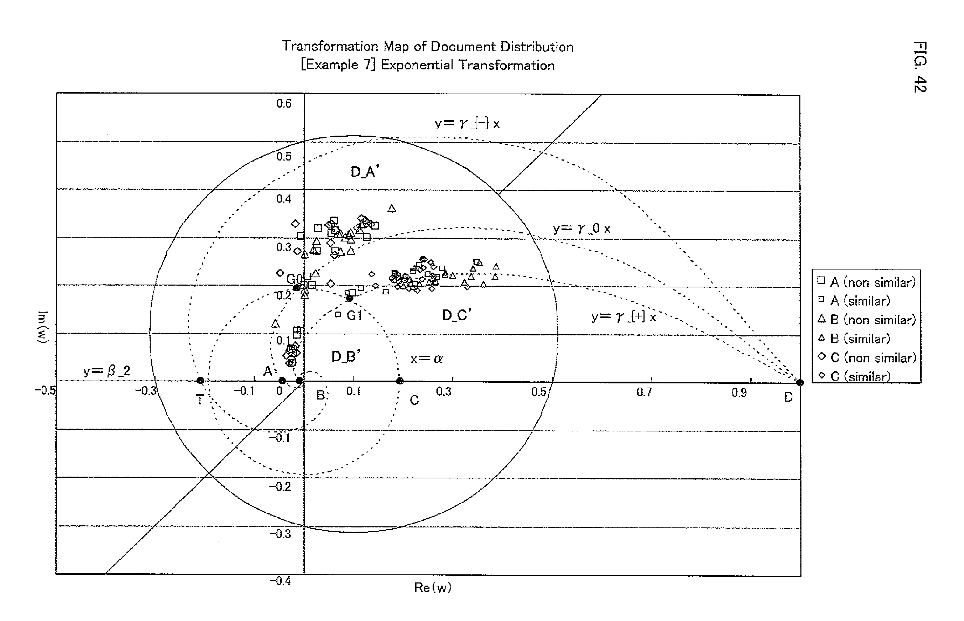

<7-10. Original macro map transformation example 7 (exponential transformation): Fig. 42>

Next, an example is explained of application of the exponential transformation

$$w = F(z) = \text{Exp}[-\pi z*/a]$$

explained in 6-3 above. This exponential transformation maps a rectangular region of width a to the interior of a semicircle of radius 1:

$$y = mx \ (m = 1, 2, \gamma) \rightarrow Y = X \tan[(-m/2)\ln(X^2+Y^2)]$$

This image does not depend on a, and is a spiral passing through point (1, 0) toward (0, 0). Also, the following mapping is performed:

Vertical line x = b (b = $\alpha$, $\in$) $\rightarrow$ circle |w| = Exp[-$\pi$b/a]
Horizontal line y = $\beta_2$ $\rightarrow$ Y = X tan(n$\beta_2$/a) for a $\neq$ 2*$\beta_2$, X = 0 for a = 2*$\beta_2$

The straight line y = mx and vertical line x = b in the original macro map are boundary lines separating the original concept area $D_A$, specialty area $D_B$, and standard area $D_C$ in the original macro map, and so using this mapping, the region divisions in the w plane are as follows:

Original concept area $D_A$' : Circle exterior |w| > Exp[-$\pi\alpha$/a], and moreover Y > X tan[(-1/2)ln(X$^2$+Y$^2$)]
Specialty area $D_B$' : Circle interior |w| $\leq$ Exp[-$\pi\alpha$/a] for Y > 0
Standard area $D_C$' : Circle exterior |w| > Exp[- $\pi\alpha$/a] and moreover Y $\leq$ X tan[(-1/2) ln (X$^2$+Y$^2$)]

Each of the points on the w plane obtained in this way can be represented on a sphere as follows.
If the radius of a circle centered on the origin and covering the three regions on the w plane is $R_0$, then a circle with center at (X, Y) = ($R_0$/5, $R_0$/5) and with radius ($\sqrt{17}$)$R_0$/5, (X-$R_0$/5)$^2$ + (Y-$R_0$/5)$^2$ = (17/25) $R_0^2$ also covers the three regions. A sphere is considered which is generated by rotating this circle about the straight line Y = X; the w coordinates of each point are projected as-is onto the sphere. By this means the height of each point is defined, and a solid-figure representation on the sphere is obtained.
Here, if $R_0$ is set equal to Exp[-$\pi\in$/a], then

$$\epsilon \;=\; -(a/\pi)\ln\,R_0$$

In particular, when a = $\beta_2$, it can be assumed that $R_0$ = 1/2, and so

$$\epsilon \;=\; (\beta_2/\pi)\ln\,2$$

can be selected.
Fig. 42 shows an example of the w plane obtained in original macro map transformation example 7 (exponential transformation). Here, a was set equal to $\beta_2$, and $\in$ was set to ($\beta_2$/$\pi$) ln 2 . It is seen that points are distributed in a spiral shape from the origin.

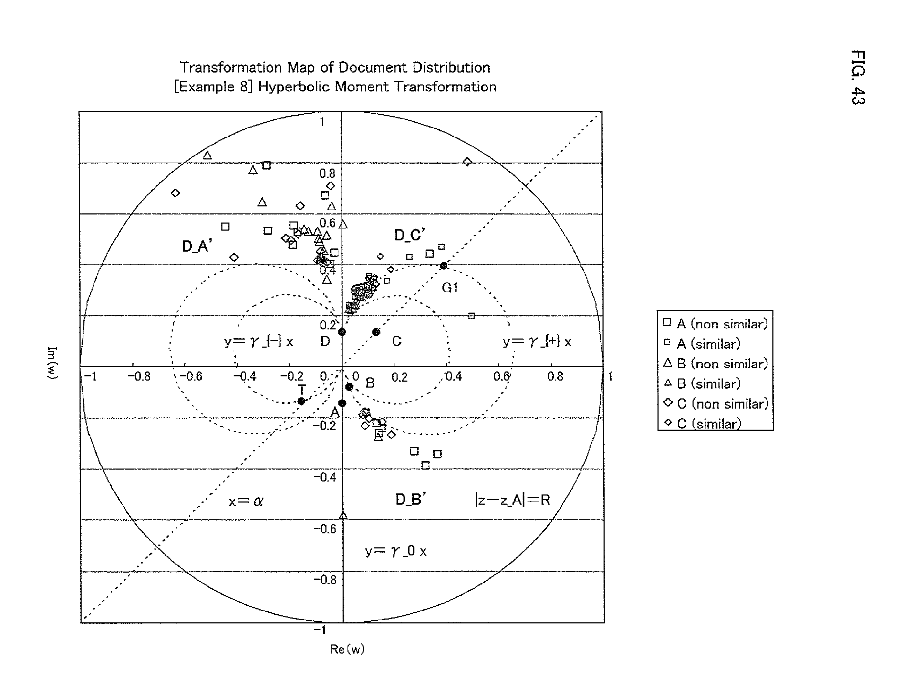

<7-11. Original macro map transformation example 8 (hyperbolic moment transformation): Fig. 43>

In transformation example 8,

$$w \;=\; F(z) \;=\; R\,\mathrm{Exp}[i\phi]/(z-z_A)$$

$$z_A \;=\; (a,\ b)$$

is applied.
By means of this transformation, the following mapping is performed:

$$y = mx \rightarrow \text{Circle with center } (R(m\cos\phi-\sin\phi)/(2(b-ma)),$$

R(msin$\phi$+cos$\phi$)/(2(b-ma) ) ) and with radius [R$\sqrt{(m^2+1)}$]/(2|b-ma|) Here, when b = ma, mapping is performed such that

$$Y \;=\; X(\tan\phi-m)/(1+m\,\tan\phi) \text{ for } m\,\tan\phi \neq -1$$

$$X = 0 \qquad \text{for } m\tan\phi = -1$$

Further,

$$x = \alpha \rightarrow \text{Circle with center } (R\cos\phi/[2(\alpha-a)], \ R\sin\phi/[2(\alpha-a)])$$

$$\text{and radius } R/[2|a-\alpha|]$$

Here, when a = $\alpha$, mapping is performed such that

$$Y = -X/\tan\phi \text{ for } \tan\phi \neq 0$$

$$X = 0 \qquad \text{for } \tan\phi = 0$$

Further,

$$y = \beta_2 \rightarrow \text{Circle with center } (R\sin\phi/[2(\beta_2-b)], \ -R\cos\phi/[2(\beta_2-b)]) \text{ and radius } R/[2|\beta_2-b|]$$

Here, when b = $\beta_2$, mapping is performed such that Y = X tan$\phi$.
Further,

$$y = x-\alpha \rightarrow \text{Circle with center } (R(\cos\phi-\sin\phi)/[2(b-a+\alpha)],$$

$$R(\cos\phi+\sin\phi)/[2(b-a+\alpha)]) \text{ and radius } R/[(\sqrt{2})|b-a+\alpha|]$$

Here, when a-b = $\alpha$, mapping is performed such that

$$Y = X(\tan\phi-1)/(\tan\phi+1) \text{ for } \tan\phi \neq -1$$

$$X = 0 \qquad \text{for } \tan\phi = -1$$

Further, mapping is performed such that

$$\text{circle } |z-z_A| = r \rightarrow \text{circle } X^2 + Y^2 = (R/r)^2$$

The three regions in the mapping are limited to the interior of the circle $X^2 + Y^2 = 1$, which is the image of the circle $|z-z_A| = r$ when $r = R$ (other points are excluded), and can be described as follows.
Original concept area $D_A$' : $-\sqrt{(1-Y^2)} \le X \le 0$ (left plane region within circle)
Specialty area $D_B$': $0 < X \le \sqrt{(1-Y^2)}$ , $Y \le 0$ (lower-right plane region within circle)
Standard area $D_C$': $0 < X \le \sqrt{(1-Y^2)}$, $Y > 0$ (upper-right plane region within circle)

Fig. 43 shows an example of the w plane obtained in original macro map transformation example 8 (hyperbolic moment transformation). Here, $\phi = -\pi/4$ and $a = b = \alpha$ were set. A document distribution is obtained for which the original concept area $D_A$', specialty area $D_B$', and standard area $D_C$' can be clearly discriminated.

<8. Original Micro Map Transformations>

Next, cases are explained in which original micro maps, created by the above-described index term extraction device, are transformed using conformal mappings. The methods described for original macro map transformation can be applied nearly without modification to original micro map transformation, and so redundant explanations are omitted, and only issues related to solid-figure representation are discussed.

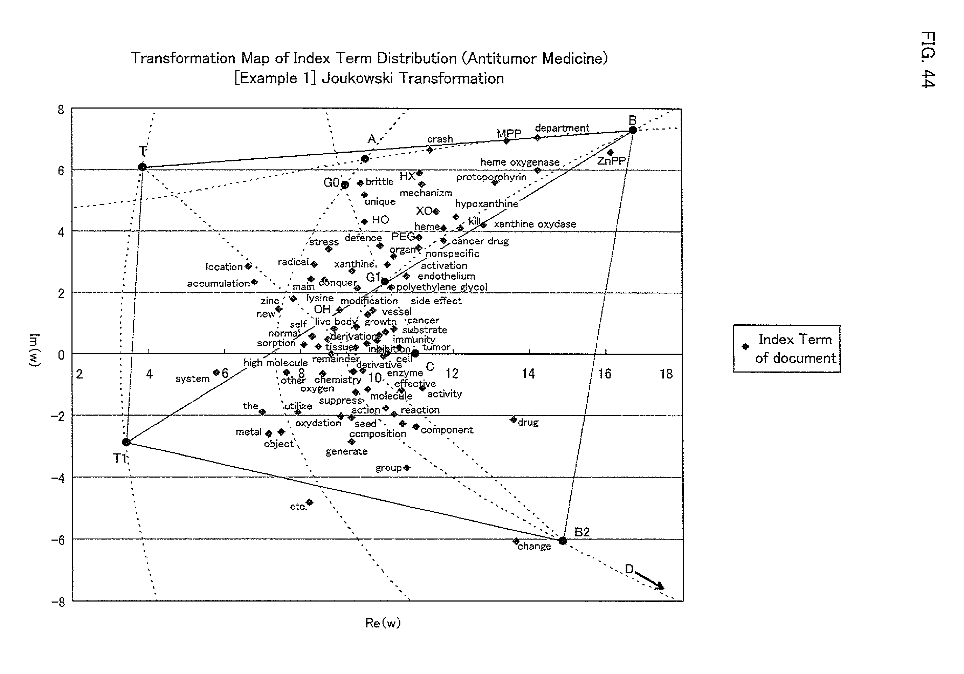

<8-1. Original micro map transformation example 1 (Joukowski transformation): Fig. 44>

Similarly to 7-9 above, the Joukowski transformation

$$w = F(z) = z + R^2/z$$

is applied, and the w' plane and w plane are mapped in superposition.

In the solid-figure representation, images of the four points T, T1, B1, B2 were used in the original macro map transformation; in the original micro map, the range of distribution of points at which index terms are positioned is broader than in the original macro map. Hence the image T' of T and the image T1' of T1 were moved vertically along the hyperbola which is the image of $y = \gamma\text{-}x$ as follows.

T1'': an image where T1' is moved in the negative vertical-axis direction along $y = \gamma\text{-}x$ until a straight line B1'T1' passes through point G1'.
The coordinates (X'', Y'') of T1'' are:

$$X'' = \{ab + [a^2 + 4R^2(1-b^2)/(1+\gamma_-^2)]^{1/2}\}/(1-b^2)$$

$$Y'' = \gamma'(X'' - X_{B1}) + Y_{B1}$$

Here,

$$a = -(\gamma_+/\gamma_-)2R^2(\alpha+L)/((1+\gamma_+^2)\alpha L - R^2)$$

$$b = (\gamma_+/\gamma_-)((1+\gamma_+^2)\alpha L + R^2)/((1+\gamma_+^2)\alpha L - R^2)$$

$$\gamma' = \gamma_+((1+\gamma_+^2)\alpha L + R^2)/((1+\gamma_+^2)\alpha L - R^2)$$

$X_{B1}$, $Y_{B1}$, are the coordinates of the image B1' of B1, and as stated above,

$$B1' (L+R^2/[L(1+\gamma_+)^2], \quad L\gamma_+-R^2\gamma_+/[L(1+\gamma_+)^2])$$

T" : an image where T' is moved in the positive vertical-axis direction along the image curve y = γ-x. That is,

$$T'' = T'|_{\beta2 \to \beta2(1+\delta)}$$

In the original micro map, the general terms closer to the origin than point B2 protrude further outward than the tetrahedral region; these are terms with low importance for ascertaining the characteristics of documents, and may be ignored.

Fig. 44 shows an example of the w plane and w' plane obtained in original micro map transformation example 1 (Joukowski transformation). Here, R = $\alpha\sqrt{2}$, L = $\beta_1$, ∈ = $\beta_1$/5, $\gamma_-$ = 3, δ = 0.1, and κ = 0.63.

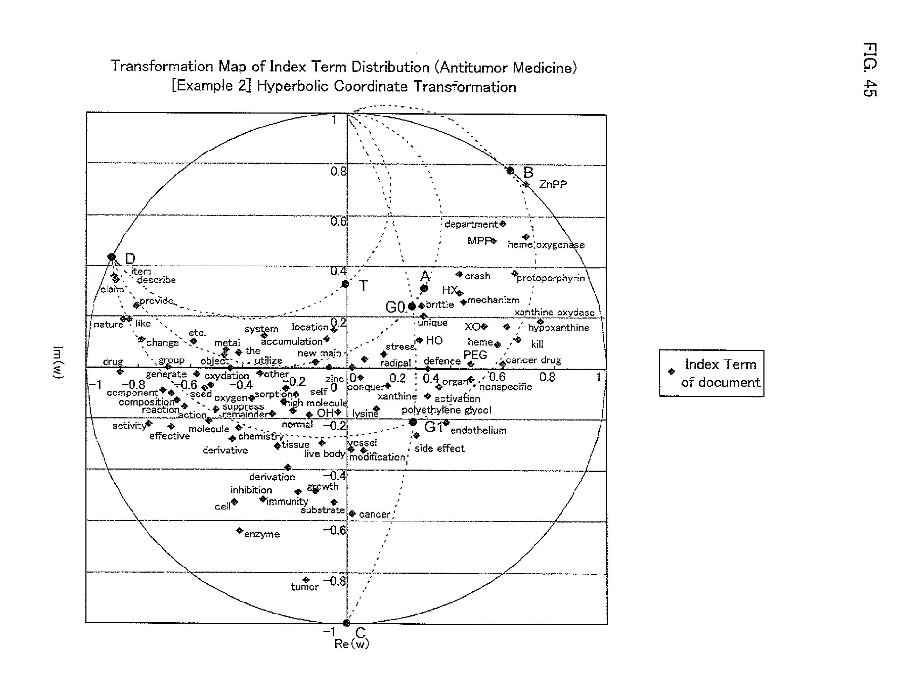

<8-2. Original micro map transformation example 2 (hyperbolic coordinate transformation): Fig. 45>

Similarly to 7-7 above, three vertices {$z_0$, $z_1$, $z_2$} are prepared, and after performing the power transformation

$$z \to \zeta: \quad \zeta = [Exp[-i\theta_2](z-z_0)]^{\pi/\delta}$$

the hyperbolic coordinate transformation

$$w = F(\zeta) = i(\zeta-iR)/(\zeta+iR)$$

is applied.

As the distance h to the distribution center, that is a value which can be α, if for example
distance from C to y = x: $\alpha/\sqrt{2}$, or
distance from C to y = γ+x: $\alpha\gamma+/(1+\gamma_+)$
is used, then the distribution appears over a broad range on the w plane.

Fig. 45 shows an example of the w plane obtained in original micro map transformation example 2 (hyperbolic coordinate transformation). Here, {$z_0$, $z_1$, $z_2$}= (C, D, B}, and h = $\alpha/\sqrt{2}$.

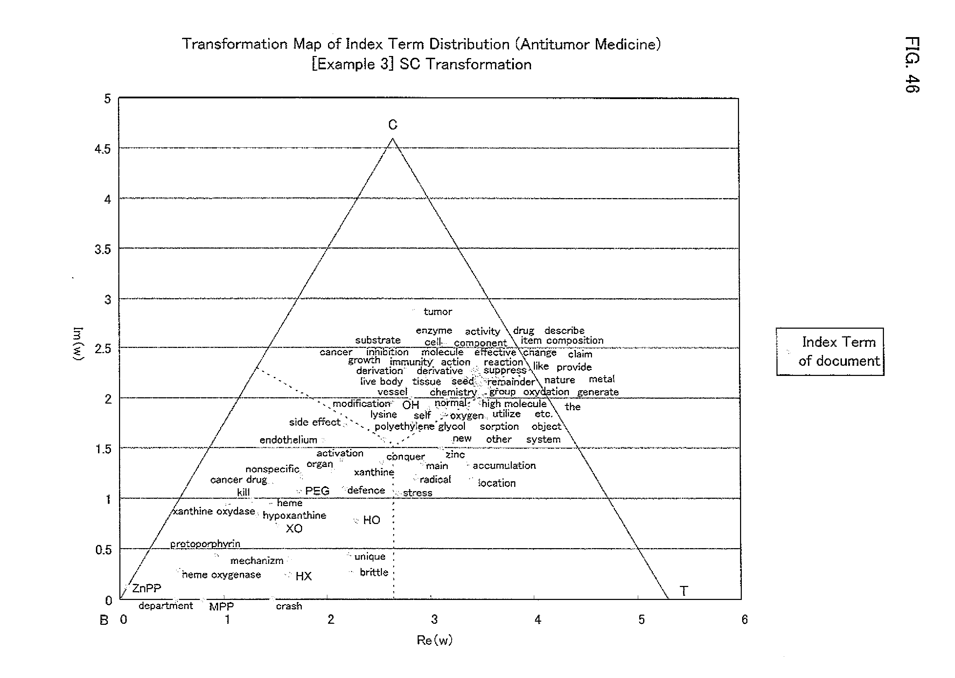

<8-3. Original micro map transformation example 3: SC transformation (Fig. 46)>

Similarly to the above 7-4, after performing the power transformation

$$z \to \zeta: \quad \zeta = [Exp\{-i\phi\}(z-z_0)]^{\nu}$$

the SC transformation is applied:

$$w = c_1 \int^\zeta [t(\zeta_2-t)(\zeta_1-t)]^{-2/3} dt + c_2$$

$$= B(1/3, 1/3; p(\zeta))$$

Here

$$p(\zeta) = \zeta(1-\xi)/(\zeta_2-\xi\zeta) \; , \; \xi = \zeta_2/\zeta_1$$

$$c_1 = \zeta_1[\xi(1-\xi)]^{1/3}$$

$$c_2 = 0$$

Fig. 46 shows an example of the w plane obtained by original micro map transformation example 3 (SC transformation). Here, $\{z_0, z_1, z_2\} = \{B, C, T\}$, $\phi = \phi_{max}$ (= $\theta_2 = \pi$), and $\nu = \nu_{max}$ (= $\pi/\delta = 4$).

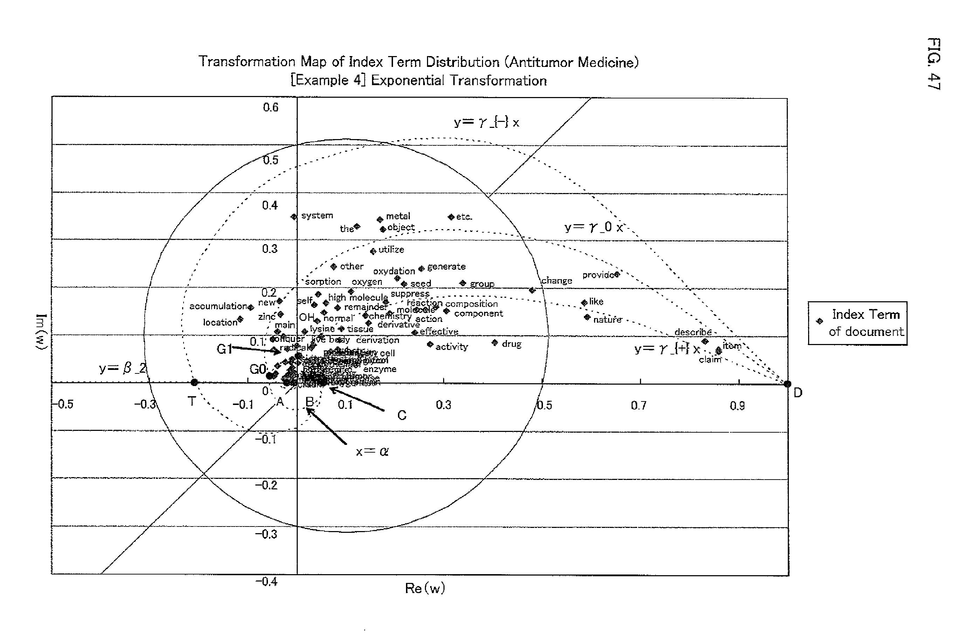

<8-4. Original micro map transformation example 4 (exponential transformation): Fig. 47>

Similarly to the above 7-10, an exponential transformation

$$w = F(z) = Exp[-\pi z^*/a]$$

is applied, and the result is projected onto a sphere generated by rotating a circle:

$$(X-R_0/5)^2 + (Y-R_0/5)^2 = (17/25)R_0^2$$

Fig. 47 shows an example of the w plane obtained by original micro map transformation example 4 (exponential transformation). Here, the same parameter values as in 7-10 above were used.
In the original micro map, general terms which are particularly close to the origin appear on the circle exterior in the w plane; these are terms with low importance for ascertaining the characteristics of documents, and may be ignored.

<9. Applications>

When performing transformation using the above-described conformal mappings, similarity of infinitesimal triangles is preserved, so that orthogonal curvilinear coordinates are transformed into orthogonal curvilinear coordinates. Hence contour lines or isothermal lines can be drawn along orthogonal curvilinear coordinates. If color-coding is performed according to such contour lines or isothermal lines, the display can be made even easier to understand.

**Claims**

1.   An index term extraction device, comprising:

input means for inputting a document-to-be-surveyed, documents-to-be-compared to be compared with said document-to-be-surveyed, and similar documents that are similar to said document-to-be-surveyed;
index term extraction means for extracting index terms from said document-to-be-surveyed;
first appearance frequency calculation means for calculating a function value of an appearance frequency of each of said extracted index terms in said documents-to-be-compared;
second appearance frequency calculation means for calculating a function value of an appearance frequency of each of said extracted index terms in said similar documents;
coordinate transformation means for transforming the position of each index term on a coordinate system taking the calculated function value of the appearance frequency in said documents-to-be-compared as a first axis of the coordinate system and taking the calculated function value of the appearance frequency in said similar documents as a second axis of the coordinate system by using a conformal mapping; and
output means for outputting each index term and positioning data thereof based on coordinate data regarding each index term after the transformation by the coordinate transformation means.

2. The index term extraction device according to claim 1, wherein said input means calculates, with respect to the document-to-be-surveyed and each document of the source-documents-for-selection from which the similar documents are selected, a vector having as its component a function value of an appearance frequency in each document of each index term contained in each document, or a function value of an appearance frequency in said source-documents-for-selection of each index term contained in each document; and selects from said source-documents-for-selection documents having a vector of a high degree of similarity to said vector calculated with respect to said document-to-be-surveyed, and makes the selected documents similar documents.

3. The index term extraction device according to claim 1 or 2, wherein the function value of the appearance frequency in said documents-to-be-compared or said similar documents is a logarithm of a value obtained by multiplying the total number of documents of said documents-to-be-compared or said similar documents to the reciprocal of said appearance frequency.

4. An index term extraction method, comprising:

an input step for inputting a document-to-be-surveyed, documents-to-be-compared to be compared with said document-to-be-surveyed, and similar documents that are similar to said document-to-be-surveyed;
an index term extraction step for extracting index terms from said document-to-be-surveyed;
a first appearance frequency calculation step for calculating a function value of an appearance frequency of each of said extracted index terms in said documents-to-be-compared;
a second appearance frequency calculation step for calculating a function value of an appearance frequency of each of said extracted index terms in said similar documents;
a coordinate transformation step for transforming the position of each index term on a coordinate system taking the calculated function value of the appearance frequency in said documents-to-be-compared as a first axis of the coordinate system and taking the calculated function value of the appearance frequency in said similar documents as a second axis of the coordinate system by using a conformal mapping; and
an output step for outputting each index term and positioning data thereof based on coordinate data regarding each index term after the transformation by the coordinate transformation step.

5. An index term extraction program for causing a computer to execute :

an input step for inputting a document-to-be-surveyed, documents-to-be-compared to be compared with said document-to-be-surveyed, and similar documents that are similar to said document-to-be-surveyed;
an index term extraction step for extracting index terms from said document-to-be-surveyed;
a first appearance frequency calculation step for calculating a function value of an appearance frequency of each of said extracted index terms in said documents-to-be-compared;
a second appearance frequency calculation step for calculating a function value of an appearance frequency of each of said extracted index terms in said similar documents;
a coordinate transformation step for transforming the position of each index term on a coordinate system taking the calculated function value of the appearance frequency in said documents-to-be-compared as a first axis of the coordinate system and taking the calculated function value of the appearance frequency in said similar documents as a second axis of the coordinate system by using a conformal mapping; and
an output step for outputting each index term and positioning data thereof based on coordinate data regarding each index term after the transformation by the coordinate transformation step.

6. A document characteristic analysis device, comprising:

input means for inputting a document-group-to-be-surveyed including a plurality of documents-to-be-surveyed, documents-to-be-compared to be compared with each document-to-be-surveyed, and related documents having a common attribute with said document-group-to-be-surveyed;
index term extraction means for extracting index terms in each document-to-be-surveyed;
third appearance frequency calculation means for calculating a function value of an appearance frequency of each of said extracted index terms in said documents-to-be-compared;
fourth appearance frequency calculation means for calculating a function value of an appearance frequency of each of said extracted index terms in said related documents;
central point calculation means for calculating a position of a central point of the index terms in each document-to-be-surveyed on a coordinate system taking the calculated function value of the appearance frequency in said documents-to-be-compared as a first axis of the coordinate system and taking the calculated function value of the appearance frequency in said related documents as a second axis of the coordinate system;

coordinate transformation means for transforming the position of said central point in each document-to-be-surveyed on the coordinate system by using a conformal mapping; and

output means for outputting data of the central point in each document-to-be-surveyed after the transformation by the coordinate transformation means.

7. The document characteristic analysis device according to claim 6, wherein the calculation of said central point in each document-to-be-surveyed is conducted by calculating the weighted average of the index term coordinates, which is an average value obtained by performing weighting to the coordinate value of each index term based on the function value of the appearance frequency in said documents-to-be-compared and the function value of the appearance frequency in said related documents, regarding each index term, with the ratio of term frequency value of each index term in relation to term frequency value total in said documents.

8. A document characteristic analysis method, comprising:

an input step for inputting a document-group-to-be-surveyed including a plurality of documents-to-be-surveyed, documents-to-be-compared to be compared with each document-to-be-surveyed, and related documents having a common attribute with said document-group-to-be-surveyed;

an index term extraction step for extracting index terms in each document-to-be-surveyed;

a third appearance frequency calculation step for calculating a function value of an appearance frequency of each of said extracted index terms in said documents-to-be-compared;

a fourth appearance frequency calculation step for calculating a function value of an appearance frequency of each of said extracted index terms in said related documents;

a central point calculation step for calculating a position of a central point of the index terms in each document-to-be-surveyed on a coordinate system taking the calculated function value of the appearance frequency in said documents-to-be-compared as a first axis of the coordinate system and taking the calculated function value of the appearance frequency in said related documents as a second axis of the coordinate system;

a coordinate transformation step for transforming the position of said central point in each document-to-be-surveyed on the coordinate system by using a conformal mapping; and

an output step for outputting data of the central point in each document-to-be-surveyed after the transformation by the coordinate transformation step.

9. A document characteristic analysis program for causing a computer to execute:

an input step for inputting a document-group-to-be-surveyed including a plurality of documents-to-be-surveyed, documents-to-be-compared to be compared with each document-to-be-surveyed, and related documents having a common attribute with said document-group-to-be-surveyed;

an index term extraction step for extracting index terms in each document-to-be-surveyed;

a third appearance frequency calculation step for calculating a function value of an appearance frequency of each of said extracted index terms in said documents-to-be-compared;

a fourth appearance frequency calculation step for calculating a function value of an appearance frequency of each of said extracted index terms in said related documents;

a central point calculation step for calculating a position of a central point of the index terms in each document-to-be-surveyed on a coordinate system taking the calculated function value of the appearance frequency in said documents-to-be-compared as a first axis of the coordinate system and taking the calculated function value of the appearance frequency in said related documents as a second axis of the coordinate system;

a coordinate transformation step for transforming the position of said central point in each document-to-be-surveyed on the coordinate system by using a conformal mapping; and

an output step for outputting data of the central point in each document-to-be-surveyed after the transformation by the coordinate transformation step.

FIG. 1

```
                    ┌─────────────────────┐─2
                    │    INPUT DEVICE     │
                    └─────────────────────┘
                              │
                              ▼
     ┌─────────────────────┐─1        ┌─────────────────────┐─3
     │  PROCESSING DEVICE  │ ───────▶ │  RECORDING DEVICE   │
     │                     │ ◀─────── │                     │
     └─────────────────────┘          └─────────────────────┘
                              │
                              ▼
     ┌─────────────────────┐─4
     │    OUTPUT DEVICE    │
     └─────────────────────┘
```

FIG. 2

2: INPUT DEVICE

3: RECORDING DEVICE

```
210                          230                          220
document-to-be-        extracting condition       documents-to-be-
surveyed d condition   and other information      compared P condition
input unit             input unit                 input unit
```

1: PROCESSING DEVICE

```
110
document-to-be-surveyed
d reading unit

120
index term (d)
extraction unit

130
documents-to-be-compared
P reading unit

140
index term (P)
extraction unit

121
TF(d) calculation unit

141
TF(P) calculation unit

142
IDF(P) calculation
unit

150
similarity calculation
unit

160
a similar documents
S selection unit

170
index term (S)
extraction unit

171
IDF(S) calculation
unit

180
characteristic index term
extraction unit

181
coordinate transformation unit
```

310
condition recording unit

320
processing result storage unit

330
document storage unit

4: OUTPUT DEVICE

```
410
map creating
condition reading unit

412
map data loading unit

440
map output unit
```

FIG. 3

```
                    ┌─────────────────────┐
                    │  START CONDITION    │
                    │  INPUT OPERATION    │
                    └─────────────────────┘
                               │
                               ▼        ┌─ S201
                    ┌─────────────────────┐
                    │   INITIALIZATION    │
                    └─────────────────────┘
                               │
                               ▼        ┌─ S202
                       ╱───────────────╲
        ┌─────────────〈 DETERMINE INPUT 〉─────────────┐
        │             ╲   CONDITIONS   ╱              │
        │              ╲───────┬───────╱              │
        ▼                      ▼                      ▼
   ┌─ S210                ┌─ S230                ┌─ S220
┌──────────────┐    ┌──────────────────┐    ┌──────────────────┐
│    INPUT     │    │ INPUT EXTRACTING │    │     INPUT        │
│ DOCUMENT-TO- │    │  CONDITION AND   │    │ DOCUMENTS-TO-    │
│ BE-SURVEYED d│    │     OTHER        │    │ BE-COMPARED P    │
│  CONDITION   │    │  INFORMATION     │    │   CONDITION      │
└──────────────┘    └──────────────────┘    └──────────────────┘
        │                    │                      │
        ▼     ┌─ S211         ▼     ┌─ S231           ▼     ┌─ S221
    ╱───────╲           ╱───────╲             ╱───────╲
   〈 CONFIRM 〉──NO     〈 CONFIRM 〉──NO       〈 CONFIRM 〉──NO
   〈CONDITIONS〉         〈CONDITIONS〉           〈CONDITIONS〉
    ╲───────╱           ╲───────╱             ╲───────╱
     │ YES               │ YES                 │ YES
     ▼                   ▼                     ▼        ┌─ S310
┌──────────────────────────────────────────────────────────────┐
│                     STORE CONDITIONS                           │
└──────────────────────────────────────────────────────────────┘
                               │
                               ▼
                    ┌─────────────────────┐
                    │        END          │
                    └─────────────────────┘
```

50

FIG. 4

FIG. 5

```
        START OUTPUT
         OPERATION
              │
              ▼        ┌─ S401
      ┌──────────────────┐
      │  INITIALIZATION  │
      └──────────────────┘
              │
              ▼                              ┌─ S402
┌─────────────────────────────────────────────────┐
│     START READING OF OUTPUT CONDITIONS          │
└─────────────────────────────────────────────────┘
              │
              ▼        ┌─ S410
      ┌──────────────────┐
      │ READ MAP CREATING│
      │    CONDITIONS    │
      └──────────────────┘
              │
              ▼        ┌─ S411
          ╱╲
        ╱      ╲
      ╱ REQUIRE  ╲      NO        ┌────────┐
      ╲  MAP?    ╱──────────────▶ │  STOP  │
        ╲      ╱                  └────────┘
          ╲╱
         YES│
            ▼        ┌─ S412
   ┌──────────────────┐
   │ LOAD DATA FOR MAP│
   └──────────────────┘
            │
            ▼        ┌─ S413
   ┌──────────────────┐
   │    CREATE MAP    │
   └──────────────────┘
            │
            ▼                                ┌─ S440
┌─────────────────────────────────────────────────┐
│                  MAP OUTPUT                      │
└─────────────────────────────────────────────────┘
            │
            ▼
        ┌────────┐
        │  END   │
        └────────┘
```

FIG. 6

FIG. 7

Original Micro Map (Antitumor Medicine)

Index Term of document

FIG. 8

2: INPUT DEVICE

3: RECORDING DEVICE

210 documents d of the company-to-be-surveyed condition input unit

230 extracting condition and other information input unit

220 documents-to-be-compared P condition input unit

310 condition recording unit

1: PROCESSING DEVICE

110 documents d of the company-to-be-surveyed reading unit

120 index term (d) extraction unit

130 documents-to-be-compared P reading unit

140 index term (P) extraction unit

142 IDF(P) calculation unit

320 processing result storage unit

155 same industry company search unit

160 related documents S selection unit

170 index term (S) extraction unit

171 IDF(S) calculation unit

173 central point calculation unit

180 document extraction unit

181 coordinate transformation unit

4: OUTPUT DEVICE

410 map creating condition reading unit

412 map data loading unit

440 map output unit

330 document storage unit

FIG. 9

START CENTRAL POINT
CALCULATING OPERATION

S101 — INITIALIZATION

S102 — DETERMINE READING

S110 — READ DOCUMENTS d
OF THE COMPANY-
TO-BE-SURVEYED

S120 — EXTRACT
INDEX TERM (d)

S130 — READ DOCUMENTS-
TO-BE-COMPARED P

S140 — EXTRACT
INDEX TERM (P)

S142 — CALCULATE IDF(P)

S155 — SEARCH THE SAME
INDUSTRY COMPANY

S160 — SELECT RELATED
DOCUMENTS S

S170 — EXTRACT
INDEX TERM (S)

S171 — CALCULATE IDF(S)

S173 — CALCULATE CENTRAL POINT

S180 — EXTRACT DOCUMENTS

S181 — COORDINATE TRANSFORMATION

END

FIG. 10

EP 1 881 422 A1

Original Macro Map

FIG. 11

$|z$

$|w$

$\longrightarrow$

$\theta$

r

ln r

FIG. 12

$|z$

$|w$

$\longrightarrow$

a $\phi$

$\rho$ a / $\pi$

$Y=X \tan(\pi \phi)$

$\exp[-\rho]$

FIG. 13

$|z$

w

$\longrightarrow$

1/2  1

B/2  B

FIG. 14

$|z$

w

$\longrightarrow$

FIG. 15

Transformation Map of Document Distribution
[Example 1] Logarithmic Transformation 1

□A (non similar)  PA (similar)  △B (non similar)  △B (similar)  ◇C (non similar)  ◇C (similar)

FIG. 16

Transformation Map of Document Distribution
[Reference Example of Example 1]

FIG. 17

Transformation Map of Document Distribution
[Example 2] Logarithmic Transformation 2

FIG. 18

[Example 3] Power Transformation

FIG. 19

FIG. 20

Original Map of Document Distribution
[Example 4-1] SC Transformation

FIG. 21

EP 1 881 422 A1

Transformation Map of Document Distribution
[Example 4-1] SC Transformation

Transformation Map of Document Distribution
[Example 4-1] SC Transformation

FIG. 22

EP 1 881 422 A1

65

FIG. 23

Transformation Map of Document Distribution
[Example 4-1] SC Transformation

Original Map of Document Distribution
[Example 4-2] SC Transformation

FIG. 24

EP 1 881 422 A1

67

FIG. 25

Transformation Map of Document Distribution
[Example 4-2] SC Transformation

FIG. 26

Transformation Map of Document Distribution
[Example 4-2] SC Transformation

Legend:
□ A (non similar)
▫ A (similar)
△ B (non similar)
▲ B (similar)
◇ C (non similar)
◆ C (similar)

FIG. 27

EP 1 881 422 A1

Transformation Map of Document Distribution
[Example 4-2] SC Transformation

FIG. 28

Transformation Map of Document Distribution
[Example A1] Power Correction SC Transformation

$\square$A (non similar)　$\square$A (similar)　$\triangle$B (non similar)　$\triangle$B (similar)　$\Diamond$C (non similar)　$\Diamond$C (similar)

$y = \gamma\_0\,x$

$D\_A'$

$D\_B'$

$D\_C'$

$x = \alpha$

$\alpha\_[-] = 0$

$y = \gamma\_[-]\,x$

$y = \gamma\_[+]\,x$

$\alpha\_[+]$

Re $\zeta$

Im $\zeta$

FIG. 29

Transformation Map of Document Distribution
[Example A1] Power Correction SC Transformation

□ A (non similar)
▫ A (similar)
△ B (non similar)
▲ B (similar)
◇ C (non similar)
◊ C (similar)

Transformation Map of Document Distribution
[Example A2] Logarithmic Correction SC Transformation

FIG. 30

EP 1 881 422 A1

FIG. 31

EP 1 881 422 A1

Transformation Map of Document Distribution
[Example A2] Logarithmic Correction SC Transformation

Transformation Map of Document Distribution
[Example A3] Logarithmic Correction SC Transformation

□A (non similar)  □A (similar)  △B (non similar)  △B (similar)  ◇C (non similar)  ◇C (similar)

FIG. 32

EP 1 881 422 A1

FIG. 33

EP 1 881 422 A1

Transformation Map of Document Distribution
[Example A3] Logarithmic Correction SC Transformation

Transformation Map of Document Distribution
[Example A4] Logarithmic Correction SC Transformation

FIG. 35

Transformation Map of Document Distribution
[Example A4] Logarithmic Correction SC Transformation

FIG. 36

EP 1 881 422 A1

Transformation Map of Document Distribution
[Example 5-1] Hyperbolic Coordinate Transformation

FIG. 37

EP 1 881 422 A1

Transformation Map of Document Distribution
[Example 5-2] Hyperbolic Coordinate Transformation

FIG. 38

Transformation Map of Document Distribution
[Example 6] Joukowski Transformation

FIG. 40

Transformation Map of Document Distribution
[Example 6] Joukowski Transformation

FIG. 41

Transformation Map of Document Distribution
[Example 6] Joukowski Transformation

FIG. 42

Transformation Map of Document Distribution
[Example 7] Exponential Transformation

FIG. 43

Transformation Map of Document Distribution
[Example 8] Hyperbolic Moment Transformation

Legend:
□ A (non similar)
▫ A (similar)
△ B (non similar)
▲ B (similar)
◇ C (non similar)
◈ C (similar)

D_A'    D_C'    G1

$y = \gamma\_\{+\} \, x$

$y = \gamma\_\{-\} \, x$

$y = \gamma\_0 \, x$

$|z - z\_A| = R$

$x = \alpha$

D_B'

Re(w)

Im(w)

FIG. 44

Transformation Map of Index Term Distribution (Antitumor Medicine)
[Example 1] Joukowski Transformation

FIG. 45

Transformation Map of Index Term Distribution (Antitumor Medicine)
[Example 2] Hyperbolic Coordinate Transformation

Index Term of document

Transformation Map of Index Term Distribution (Antitumor Medicine)
[Example 3] SC Transformation

Index Term
of document

FIG. 46

EP 1 881 422 A1

FIG. 47

EP 1 881 422 A1

90

Transformation Map of Index Term Distribution (Antitumor Medicine)
[Example 4] Exponential Transformation

Im(w)

Re(w)

$y = \gamma\_\{-\} x$

$y = \gamma\_0 x$

$y = \gamma\_\{+\} x$

$y = \beta\_2$

$x = \alpha$

0.6
0.5
0.4
0.3
0.2
0.1
0
−0.1
−0.2
−0.3
−0.4

−0.5  −0.3  −0.1  0.1  0.3  0.5  0.7  0.9

system   metal   etc.
the   object
utilize
other   oxydation   generate
sorption   oxygen   seed   group   change   provide
high molecule   suppress
self   new   remainder   reaction composition   like
accumulation   zinc   molecule   component
location   OH   normal   chemistry   action   nature
main   lysine   tissue   derivative   describe
conquer   body   derivation   effective   item
G1   radical   cell   activity   drug   claim
G0   enzyme
T   A   B   C   D

◆ Index Term
  of document

**INTERNATIONAL SEARCH REPORT**

| International application No. |
| --- |
| PCT/JP2006/308350 |

A.  CLASSIFICATION OF SUBJECT MATTER
*G06F17/30*(2006.01)

According to International Patent Classification (IPC) or to both national classification and IPC

B.  FIELDS SEARCHED

Minimum documentation searched (classification system followed by classification symbols)
*G06F17/30*(2006.01)

Documentation searched other than minimum documentation to the extent that such documents are included in the fields searched

| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| A | WO 2004/061714 A1  (Intellectual Property Bank Corp.), 22 July, 2004 (22.07.04), Full text; all drawings & EP 1582999 A1 | 1-9 |
| A | Akiko AIZAWA "Go to Bunsho no Kyoki ni Motozuku 'Tokubiryo' no Teigi to Tekiyo", Information Processing Society of Japan Kenkyu Hokoku, 22 March, 2000 (22.03.00), Vol.2000, No.29, pages 25 to 32, 2000-FI-57-4, ISSN 0919-6072 | 1-9 |

☐   Further documents are listed in the continuation of Box C.      ☐   See patent family annex.

| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 22 May, 2006 (22.05.06) | 06 June, 2006 (06.06.06) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1173415 A
- JP H11345239 A

- JP 2004015082 W